(19) Europäisches Patentamt / European Patent Office / Office européen des brevets

(11) **EP 4 783 577 A1**

(12) **EUROPEAN PATENT APPLICATION**
published in accordance with Art. 153(4) EPC

(43) Date of publication:
**29.07.2026 Bulletin 2026/31**

(21) Application number: **23952767.4**

(22) Date of filing: **23.09.2023**

(51) International Patent Classification (IPC):
***H04N 19/132*** *(2014.01)*

(52) Cooperative Patent Classification (CPC):
**H04N 19/132**

(86) International application number:
**PCT/CN2023/120909**

(87) International publication number:
**WO 2025/060115 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XU, Luhang
Dongguan, Guangdong 523860 (CN)**

(74) Representative: **Taor, Simon Edward William
Venner Shipley LLP
TIDE Bankside
8 Emerson Street
London SE1 9DU (GB)**

(54) **ENCODING METHOD AND APPARATUS, DECODING METHOD AND APPARATUS, ENCODER, DECODER, CODE STREAM, AND STORAGE MEDIUM**

(57)     An encoding method and apparatus, a decoding method and apparatus, an encoder, a decoder, a code stream, and a storage medium. The decoding method comprises: on the basis of a first interpolation filtering model used by a decoded block during decoding, generating a first candidate list; on the basis of the first candidate list, determining a second interpolation filtering model to be used by a current block; using the second interpolation filtering model to perform intra-frame prediction on the current block, so as to obtain a predicted block of the current block; and reconstructing a code stream on the basis of the predicted block, so as to obtain a reconstructed block of the current block.

| Generating a first candidate list based on first interpolation filter models used during decoding of decoded blocks | 2101 |
| Determining a second interpolation filter model to be used for a current block based on the first candidate list | 2102 |
| Performing intra prediction for the current block by using the second interpolation filter model, to obtain a prediction block for the current block | 2103 |
| Reconstructing a bitstream based on the prediction block, to obtain a reconstructed block for the current block | 2104 |

**FIG. 21**

**Description**

TECHNICAL FIELD

Embodiments of the present disclosure relate to the field of video technology, and particularly to, but are not limited to, an encoding method and apparatus, a decoding method and apparatus, an encoder, a decoder, a bitstream, and a storage medium.

BACKGROUND

As people's requirements for video display quality, high-resolution video such as high-resolution and ultra-high-resolution have emerged. However, high-resolution video typically has more information, thus requiring greater bandwidth. To reduce bandwidth requirements, video coding standards involving video compression have been introduced.
At present, the interpolation-based intra prediction technology has been proposed in video coding standards. Specifically, the filter coefficients of the interpolation filter model are obtained through the reconstructed sample values around the current block, which are used for intra prediction of the current block. However, the existing technical solutions still have some drawbacks, resulting in a lower encoding and decoding performance.

SUMMARY

The encoding method and apparatus, a decoding method and apparatus, an encoder, a decoder, a bitstream, and a storage medium according to the embodiments of the present disclosure are implemented as follows.
According to an aspect of an embodiment of the present disclosure, there is provided a decoding method, which is applied to a decoder and includes that: a first candidate list is generated based on first interpolation filter models used during the decoding of decoded blocks; a second interpolation filter model to be used for the current block is determined based on the first candidate list; intra prediction for the current block is performed by using the second interpolation filter model to obtain a prediction block for the current block; and the bitstream is reconstructed based on the prediction block to obtain a reconstructed block for the current block. In this way, for the current block, the decoder does not need to additionally calculate the filter coefficients of the interpolation filter model to be used for the current block, thereby saving computational and time overheads and improving decoding efficiency.
According to an aspect of an embodiment of the present disclosure, there is provided an encoding method, which is applied to an encoder and includes that: a first candidate list is generated based on first interpolation filter models used during the decoding of decoded blocks; a second interpolation filter model to be used for the current block is determined based on the first candidate list; intra prediction for the current block is performed by using the second interpolation filter model to obtain a prediction block for the current block; a residual block of the current block is determined based on the prediction block; and a bitstream is generated based on the residual block.
In this way, on the one hand, the diversity of candidate interpolation filter models (that is, the models in the first candidate list) for the current block can be increased, thereby improving the prediction accuracy for the current block and reducing codeword overhead. On the other hand, for the current block, since there is no need to additionally calculate the filter coefficients of interpolation filter models for multiple combinations and determine which shape of interpolation filter model to use, computational overhead and time overhead are saved, thereby improving the bit rate.
According to an aspect of an embodiment of the present disclosure, there is provided a decoding apparatus, which is applied to a decoder. The decoding apparatus includes a first generation module, a first determination module, a first prediction module and a reconstruction module. The first generation module is configured to generate a first candidate list based on first interpolation filter models used during decoding of decoded blocks. The first determination module is configured to determine a second interpolation filter model to be used for a current block based on the first candidate list. The first prediction module is configured to perform intra prediction for the current block by using the second interpolation filter model, to obtain a prediction block for the current block. The reconstruction module is configured to reconstruct a bitstream based on the prediction block, to obtain a reconstructed block for the current block
According to an aspect of an embodiment of the present disclosure, there is provided a decoder comprising a first memory and a first processor. The first memory is configured to store a computer program executable on the first processor. The first processor is configured to perform the decoding method according to the embodiments of the present disclosure when executing the computer program.
According to an aspect of an embodiment of the present disclosure, there is provided an encoding apparatus, which is applied to an encoder. The encoding apparatus includes a second generation module, a second determination module, a second prediction module, a third determination module; and a third generation module. The second generation module is configured to generate a first candidate list based on first interpolation filter models used during decoding of decoded blocks. The second determination module is configured to determine a second interpolation filter model to be used for a current block based on the first candidate list. The second prediction module is configured to perform intra prediction for the current block by using the second interpolation filter model, to obtain a prediction block for the current block. The third determination module is configured to determine a residual block of the current block based on the prediction block. The third generation module is configured to generate a bitstream based on the residual block.

According to an aspect of an embodiment of the present disclosure, there is provided an encoder comprising a second memory and a second processor. The second memory is configured to store a computer program executable on the second processor. The second processor is configured to perform the encoding method according to the embodiment of the present disclosure when executing the computer program.

According to an aspect of an embodiment of the present disclosure, a bitstream is provided, and the bitstream is generated by performing the encoding method according to the embodiment of the present disclosure on a current block.

According to an aspect of an embodiment of the present disclosure, there is provided an electronic device including: a processor configured to execute a computer program; and a computer-readable storage medium having stored thereon the computer program that, when executed by the processor, implements the encoding method according to the embodiment of the present disclosure, or implements the decoding method according to the embodiment of the present disclosure.

According to an aspect of an embodiment of the present disclosure, there is provided a computer-readable storage medium. The computer-readable storage medium stores a computer program that when executed, implements the encoding method according to the embodiment of the present disclosure or implements the decoding method according to the embodiment of the present disclosure is executed.

It should be understood that the above general description and the following detailed description are merely exemplary and explanatory, and are not intended to limit the present disclosure.

BRIEF DESCRIPTION OF THE DRAWINGS

The accompanying drawings herein are incorporated into and constitute a part of the specification. These accompanying drawings illustrate embodiments consistent with the present disclosure, and together with the specification, are used to explain technical solutions of the present disclosure. It is evident that the drawings in the following description represent only some embodiments of the present disclosure; and for those skilled in the art, other drawings may be derived from these drawings without making creative efforts.

The flowcharts illustrated in the drawings are merely illustrative and do not necessarily include all contents and operations/steps, nor must they be performed in the described order. For example, some operations/steps may also be divided, while other operations/steps may be combined or partially combined, so the actual order of execution may be changed according to the actual situation.

FIG. 1 is a schematic diagram of the basic process flow of an encoder.
FIG. 2 is a schematic diagram of the basic process flow a decoder.
FIG. 3 is a schematic diagram of a network structure of an encoding and decoding system according to an embodiment of the present disclosure.
FIG. 4 is a schematic diagram of the shapes of three interpolation filter models.
FIG. 5 is a schematic diagram of the combination of three interpolation filter models and reconstructed regions used to determine filter coefficients.
FIG. 6 is a schematic diagram of a prediction performed by the interpolation filter model along the diagonal direction.
FIG. 7 is a schematic diagram of an intra prediction mode.
FIG. 8 is a schematic diagram of a 3x3 window sliding over a current block.
FIG. 9 is a schematic diagram of accumulated amplitude values in each angular direction.
FIG. 10 is a schematic diagram of 15-tap linear terms in the interpolation filter model.
FIG. 11 is a first schematic diagram of the addition of 3-tap nonlinear terms to the 15-tap linear terms in the interpolation filter model.
FIG. 12 is a second schematic diagram of the addition of 3-tap nonlinear terms to the 15-tap linear terms in the interpolation filter model.
FIG. 13 is a schematic diagram of the addition of 5-tap nonlinear terms to the 15-tap linear terms in the interpolation filter model.
FIG. 14 is a schematic diagram of an elongated prediction block/current block.
FIG. 15 is a first schematic diagram of a position of a reconstructed region for obtaining filter coefficients of an interpolation filter model relative to a current block.
FIG. 16 is a second schematic diagram of a position of a reconstructed region for obtaining filter coefficients of an interpolation filter model relative to a current block.
FIG. 17 is a first schematic diagram of combinations of interpolation filter model shapes and the reconstructed regions for obtaining filter coefficients of the interpolation filter model.

FIG. 18 is a second schematic diagram of combinations of interpolation filter model shapes and the reconstructed regions for obtaining the filter coefficients of the interpolation filter model.

FIG. 19 is a third schematic diagram of combinations of interpolation filter model shapes and the reconstructed regions for obtaining the filter coefficients of the interpolation filter model.

FIG. 20 is a schematic flowchart of an implementation of an encoding method according to an embodiment of the present disclosure.

FIG. 21 is a schematic flowchart of an implementation of a decoding method according to an embodiment of the present disclosure.

FIG. 22 is a schematic diagram of a definition of a position of a current block within a current picture according to an embodiment of the present disclosure.

FIG. 23 is a schematic diagram of five predefined adjacent positions of a current block according to an embodiment of the present disclosure.

FIG. 24 is a schematic diagram of 59 non-adjacent positions in the first round for the current block according to the embodiment of the present disclosure.

FIG. 25 is a schematic diagram of 28 non-adjacent positions in a second round for a current block according to an embodiment of the present disclosure.

FIG. 26 is a schematic diagram of an initialized historical interpolation filter model list (i.e., a second candidate list) with a length of N4 according to an embodiment of the present disclosure.

FIG. 27 is a schematic diagram of the addition of an interpolation filter model into a historical interpolation filter model list in a decoding order according to an embodiment of the present disclosure.

FIG. 28 is a schematic diagram of the updating of a historical interpolation filter model list by using a first-in-first-out principle, according to an embodiment of the present disclosure.

FIG. 29 is a schematic diagram of positions for obtaining interpolation filter models in 10 reference pictures from 0 to 9 according to an embodiment of the present disclosure.

FIG. 30 is a schematic diagram of a template region used for reordering respective models according to an embodiment of the present disclosure.

FIG. 31 is a schematic diagram of generating prediction values on a template by using an interpolation filter model in a diagonal direction according to an embodiment of the present disclosure.

FIG. 32 is a structural schematic diagram of a decoding apparatus according to an embodiment of the present disclosure.

FIG. 33 is a structural schematic diagram of an encoding apparatus 33 according to an embodiment of the present disclosure.

FIG. 34 is a structural schematic diagram of a decoder according to an embodiment of the present disclosure.

FIG. 35 is a structural schematic diagram of an encoder according to an embodiment of the present disclosure.

DETAILED DESCRIPTION

In order to make the objectives, technical solutions, and advantages of the embodiments of the present disclosure more clear, the specific technical solutions of the present disclosure will be described in further detail below with reference to the accompanying drawings in the embodiments of the present disclosure. The following examples are used to illustrate the present disclosure, but are not intended to limit the scope of the present disclosure.

Unless otherwise defined, all technical and scientific terms used herein have the same meaning as commonly understood by those skilled in the art to which the present disclosure belongs. The terms used herein are for the purpose of describing embodiments of the present disclosure only and are not intended to limit the present disclosure.

In the following description, reference is made to "some embodiments", which describes a subset of all possible embodiments, but it is understood that "some embodiments" may be the same subset or different subsets of all possible embodiments, and may be combined with each other without conflict.

It should be pointed out that the terms "first\second\third" in the embodiments of the present disclosure are used to distinguish similar or different objects, and do not represent a specific order of the objects. It may be understood that "first \second\third" may be interchanged in a specific order or a priority order where permitted, so that the embodiments of the present disclosure described herein may be implemented in an order other than that illustrated or described herein.

In the following description, "pixel" may also be understood as "pixel unit", "pixel point", "sample", or the like. In short, it refers to the minimum unit representing picture information. However, a "sample" may refer to certain pixels/- sampled pixels in a pixel set.

It should be noted that in the following description, the "interpolation filter model" may also be described as a "filter model", an "interpolation filter", a "model", or the like.

It should be noted that in the following description, the "merge interpolation filter model candidate list" may also be described as "merge interpolation filter model list", "interpolation filter model merge list", "merge list", "candidate list", "merge candidate list", "merge interpolation filter list", "first candidate list", or the like.

It should be noted that in the following description, the "historical interpolation filter model list" may be described as a "historical model list", a "historical interpolation model list", a "historical list", a "second candidate list", or the like.

It should be noted that in the following description, the "merge interpolation filter mode identifier" may be described as "merge mode identifier", "second syntax identifier information", or the like.

It should be noted that in the following description, the "interpolation filter prediction mode" may be described as a "merge interpolation filter mode", a "merge mode", or the like.

The framework of the encoder and the decoder, and the service scenario described in the embodiments of the present disclosure are intended to provide a clearer explanation of the technical solutions of the embodiments of the present disclosure, and do not constitute a limitation on the technical solutions according to the embodiments of the present disclosure. Those skilled in the art will know that with the evolution of encoders and decoders and the emergence of new service scenarios, the technical solutions provided by the embodiments of the present disclosure are equally applicable to similar technical problems.

Before further describing the embodiments of the present disclosure in detail, the nomenclature and terms related to the embodiments of the present disclosure will be described first, and the nomenclature and terms related to the embodiments of the present disclosure are applicable to the following explanations:

Joint Video Exploration Team (JVET);
H.266/Versatile Video Coding (VVC);
VVC's reference software testing platform (VVC Test Model, VTM);
Enhanced Compression Mode (ECM);
Extrapolation Intra Prediction (EIP);
Multiple Transform Selection (MTS);
Discrete Cosine Transform (DCT);
Discrete Sine Transform (DST);
Non-Separable Primary Transform (NSPT);
Low Frequency Non-separable Secondary Transform (LFNST);
DC Mode (Direct Current, DC)
Planar mode (PLANAR);
Direct Mode (DM);
Intra Block Copy (IBC);
Wide Angle Intra Prediction (WAIP);
Sum of Squares for Error (SSE);
Mean Squared Error (MSE);
Sum of Absolute Difference (SAD).

Most video coding standards adopt block-based hybrid coding framework. Each picture or sub-picture or a frame in the video is partitioned into square Largest Coding Units (LCUs) or Coding Tree Units (CTUs) of the same size (such as $128 \times 128$ or $64 \times 64$, etc.). Each largest coding unit or coding tree unit may be partitioned into rectangular Coding Units (CUs) according to a rule. The coding unit may also be partitioned into prediction units (PUs) and/or Transform Units (TUs), etc. The hybrid coding framework includes modules such as prediction, transform, quantization, entropy coding, and in loop filter. The prediction module includes intra prediction and inter prediction. Inter prediction includes motion estimation and motion compensation. Due to the strong correlation between adjacent samples in a video frame, intra prediction method in video coding technology is used to eliminate spatial redundancy between adjacent samples. Due to the strong similarity between adjacent pictures in video, inter prediction method in video coding technology is used to eliminate the temporal redundancy between adjacent pictures, thereby improving the encoding and decoding efficiency.

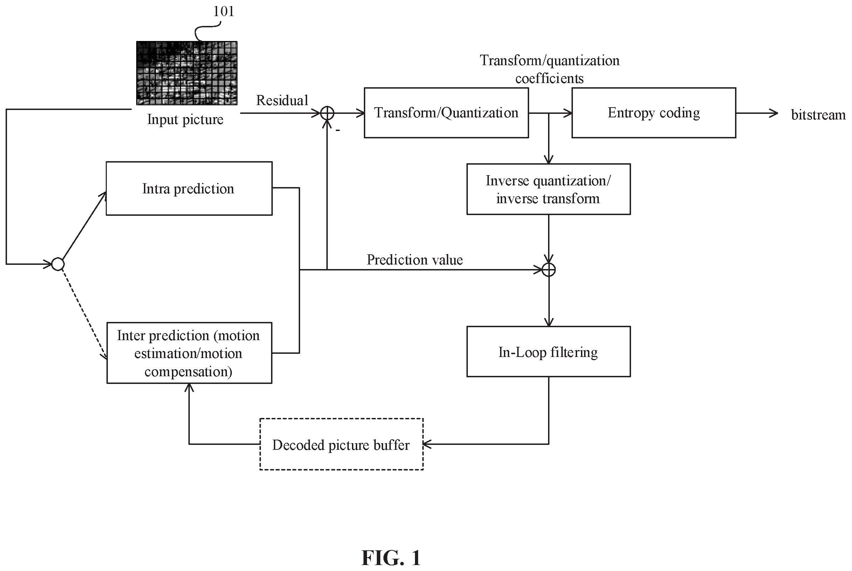

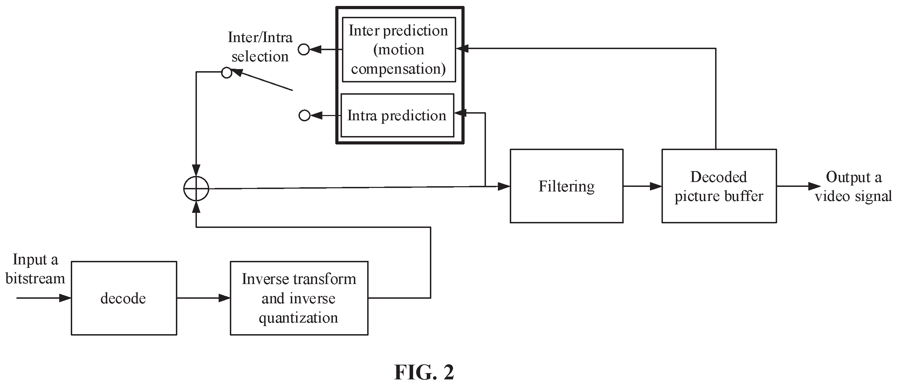

The basic process of the video codec is illustrated in FIG. 1. At the encoding end, as illustrated in FIG. 1, a picture 101 is partitioned into blocks, and intra prediction or inter prediction is used for the current block to generate a prediction block for the current block; a residual block is obtained by subtracting the prediction block from the original block of the current block; transform and quantization for the residual block is performed to obtain a quantization coefficient matrix; and entropy coding for the quantization coefficient matrix is performed and then the bitstream is output. At the decoding end (not illustrated in the figure), intra prediction or inter prediction is used for the current block to generate a prediction block for the current block; on the other hand, the bitstream is parsed to obtain a quantization coefficient matrix; inverse quantization and inverse transform for the quantization coefficient matrix is performed to obtain a residual block, and the prediction block and the residual block are added to obtain a reconstructed block. The reconstructed blocks form a reconstructed picture, which undergoes in-loop filtering based on the picture or blocks to obtain a decoded picture. The encoding end also needs to perform operations similar to operations on the decoding end to obtain the decoded picture. At the encoding end, the obtained decoded picture may be used as a reference picture for inter prediction of a subsequent picture. The block partition information, as well as mode information or parameter information such as prediction, transform, quantization, entropy coding and in loop filtering, which are determined at the coding end, need to be included in the output bitstream if necessary. At the decoding end, as illustrated in FIG. 2, the same block partition information, mode information or parameter information such as prediction, transform, quantization, entropy coding, and in-loop filtering as those at the encoder end, are determined by parsing and analyzing based on existing information, so as to ensure that the decoded picture obtained by the encoding end is the same as the decoded picture obtained by the decoding end. The decoded picture obtained by the encoding end is usually also referred to as a reconstructed picture. During prediction, the current block may be partitioned into prediction units; during transform, the current block may be partitioned into transform units, and the partitioning of the prediction units and the transform units may be different.

The above is the basic process of the video codec under the block-based hybrid coding framework. With the development of technology, some modules or steps of this framework or process may be optimized. The encoding and decoding methods according to the embodiment of the present disclosure are applicable to the basic process of the video codec under the block-based hybrid coding framework, but is not limited to this framework and process. Those skilled in the art will know that with the evolution of encoders and decoders and the emergence of new service scenarios, the methods according to the embodiments of the present disclosure are equally applicable to similar technical problems.

The current block may be a current coding unit (CU), a current prediction unit (PU), or the like.

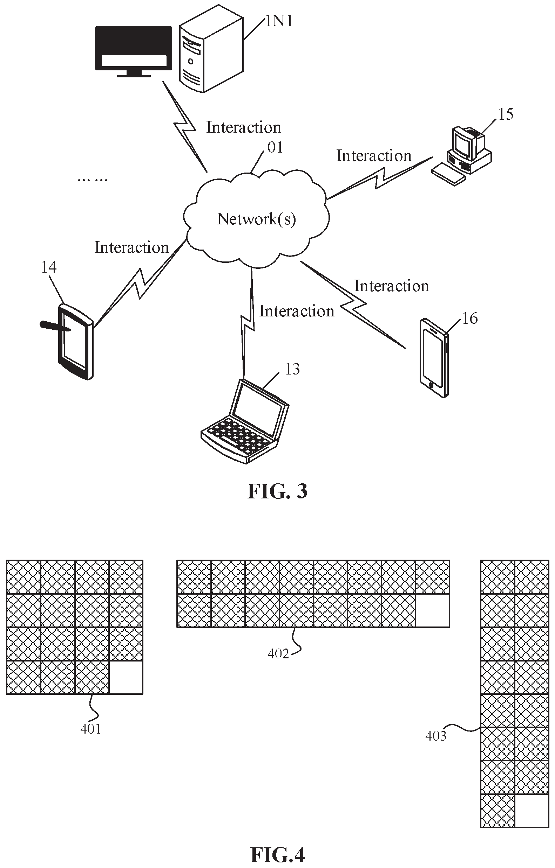

Further, an embodiment of the present disclosure further provides a network architecture of an encoding and decoding system including an encoder and a decoder. FIG. 3 is a schematic diagram of a network architecture of an encoding and decoding system according to an embodiment of the present disclosure. As illustrated in FIG. 3, the network architecture includes one or more electronic devices 13 to 1N and a communication network 01. Here, the electronic devices 13 to 1N may perform video interaction through the communication network 01. The electronic devices may be various types of devices with video encoding and decoding functions during implementation. For example, the electronic devices may include a smart phone, a tablet computer, a personal computer, a personal digital assistant, a navigator, a digital phone, a video phone, a television, a sensor device, a server, or the like, which is not specifically limited in the embodiments of the present disclosure. Here, the decoder or the encoder described in the embodiments of the present disclosure may be the above electronic devices.

It should be noted that the methods of the embodiments of the present disclosure is mainly applied to the intra prediction and/or inter prediction module illustrated in FIG. 1 and the intra prediction and/or inter prediction module illustrated in FIG. 2. The embodiments of the present disclosure may be applied to an encoder, a decoder, or even both the encoder and the decoder, which is not specifically limited in the embodiments of the present disclosure..

It should also be noted that, when applied to the intra prediction and/or inter prediction module on the encoding end, the "current block" specifically refers to a current coding block to be subjected to intra prediction and/or inter prediction. When applied to the intra prediction and/or inter prediction module on the decoding end, the "current block" specifically refers to a current coding block to be subjected to intra prediction and/or inter prediction.

In order to facilitate understanding of the solutions of the encoding and decoding methods according to the embodiments of the present disclosure, some related terms and related implementations will be described below with reference to Sections 1 and 2.

Section 1. Relevant explanations

1.1. Some features of interpolation filtering-based intra prediction technique

The interpolation filtering-based intra prediction technique refers to a technique in which the filter coefficients of an interpolation filter model are obtained through the reconstructed sample values around the current block, and the filter coefficients of the interpolation filter model are used for intra prediction of the current block. Interpolation filtering-based intra prediction technique based on interpolation filtering may include one or more of the following features:

1. The number of taps of the interpolation filter model should be greater than or equal to 2. The interpolation filter model may have various shapes, and syntax elements are used to control the selected shape of the interpolation filter model.
2. The reconstructed samples used to obtain the filter coefficients of the interpolation filter model should be within one or several regions around the current block, and the region used to obtain the filter coefficients of the interpolation filter model is selected by using syntax elements.

1.2. Specific examples of interpolation filtering-based intra prediction technique

### 1.2.1. Obtaining the filter coefficients of the interpolation filter model

In the implementation, three types of 15-tap interpolation filter models and three reconstructed regions are defined, as illustrated in FIG. 4, where the interpolation filter model 401 is $4 \times 4$ (filterHeight $\times$ filterWidth), the interpolation filter model 402 is $2 \times 8$, and the interpolation filter model 403 is $8 \times 2$. As illustrated in FIG. 4, in the interpolation filter model, ▨ represents the input positions of the interpolation filter model, and □ represents the output position of the interpolation filter model.

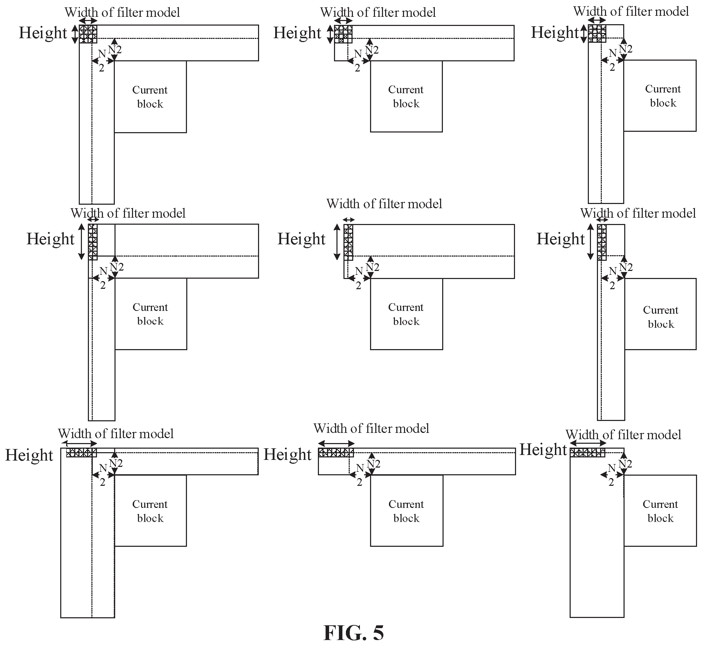

Based on the shapes of the interpolation filter models provided in FIG. 4, as illustrated in FIG. 5, it illustrates examples of the reconstructed region used to determine the filter coefficients of the interpolation filter model. As illustrated in FIG. 5, the reconstructed region includes an L-shaped reconstructed region (including the reconstructed samples in the above-left, left, bottom-left, above and/or above-right regions), an above reconstructed region (including the reconstructed samples in the above-left, above and/or above-right regions), and/or a left reconstructed region (including the reconstructed samples in the above-left, left and/or bottom-left regions). In the figure, N2 is a variable that in the specific implementation, is a predefined value related to the current block size.

The three interpolation filter models in FIG. 4 may slide in three defined reconstructed regions (L-shaped reconstructed region, the above reconstructed region and the left reconstructed region) to obtain 9 combinations in FIG. 5. A set of filter coefficients of the interpolation filter model may be obtained from each combination. The process of solving for each set of the filter coefficients of interpolation filter models is as follows: sliding the selected interpolation filter models over the selected region to construct a set of autocorrelation coefficient matrices and a set of cross-correlation coefficient vectors, and constructing a system of linear equations through the autocorrelation coefficient matrices and cross-correlation coefficient vectors, thereby further solving for the filter coefficients of the interpolation filter model.

### 1.2.2. Predicting the current block

In an embodiment, the prediction process starts from the above-left corner of the current block, and proceeds in a certain order towards the bottom-left corner, and the prediction formula is as follows:

$$\text{pred}_r = \sum (t_{r+p_n} \times c_n)$$

Herein, *pred,* is the prediction result at position *r* in the prediction block, $t_{r+pn}$ represents the n-th input of the interpolation filter model; when $t_{r+pn}$ is within the reconstructed region, the reconstructed values are used as the input of the interpolation filter model; and when $t_{r+pn}$ is within the prediction block, already predicted values are used as the input. $c_n$ is the n-th filter coefficient of the interpolation filter model, and n is greater than 0 and less than or equal to the total number of inputs of the interpolation filter model. In general, n for Cn should start from 0, for example from 0 to 14 (if the total number of inputs of the interpolation filter model is 15).

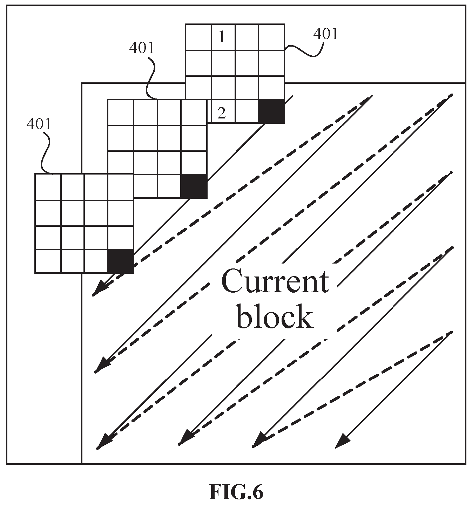

As illustrated in FIG. 6, the prediction along the diagonal direction is performed through the interpolation filter model 401, and from implementation perspective, the points to be predicted located on the same diagonal may be predicted in parallel. Here, ■ represents the output position of the interpolation filter model 401, and □ represents the input positions of the interpolation filter model 401.

### 1.2.3 Classification of prediction blocks and selection of transform kernels

Different angular prediction modes are suitable for using different transforms, including primary transform (MTS, NSPT) and secondary transform LFNST.

The MTS includes some transforms such as DCT transform and DST transform. NSPT and LFNST are a series of transform coefficients obtained through a universal training set based on the optimal transforms. The difference between NSPT and LFNST is that NSPT is directly used to transform residual coefficients, while LFNST further transforms the transform coefficients after DCT2 transform.

For traditional prediction modes (such as PLANAR, DC and angular modes), non-separable primary transform (NSPT) or non-separable secondary transform (LFNST), according to a mapping such as a look-up table, different traditional prediction modes may be mapped to different sets of transform kernels for transform.

In the reference software ECM, the traditional intra prediction mode includes:

- PLANAR mode: the intra prediction mode index is 0;

- DC mode: the intra prediction mode index is 1;

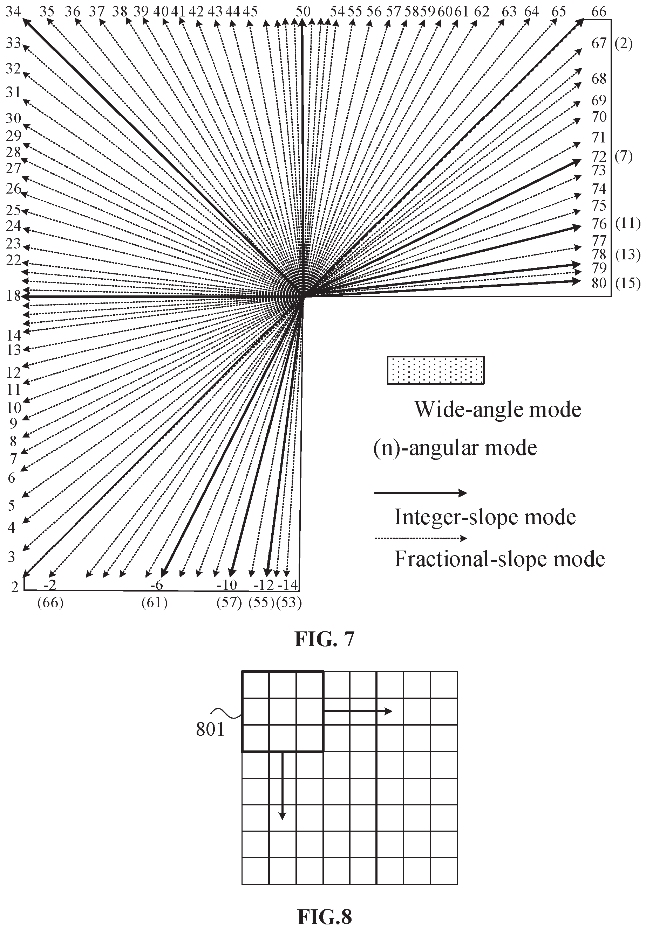

- Angular mode: intra prediction mode indices are 2 to 66, as illustrated in FIG. 7.

The arrows in FIG. 7 point to the directions of angular mode prediction available in VVC, with prediction mode indices ranging from 2 to 66 used during encoding and decoding. When the current block is a non-square block, some angular directions are replaced with wide-angle directions (as shown in Figure 7, ranging from -1 to -14 and 67 to 80).

In the reference software of ECM, NSPT and LFNST each categorize the traditional modes into 35 groups, and each group has 3 selectable transform kernels. The following table shows other correspondences between the traditional modes and the transform kernel groups:

| Traditional. intra mode | Planar mode | DC Mode | -14 to -1 67-80, 2 and 66 angular directions | 3 and 65 angular directions | 4 and 64 angular directions | 5 and 63 angular directions | 6 and 62 angular directions | 7 and 61 angular directions | 8 and 60 angular directions |
|---|---|---|---|---|---|---|---|---|---|
| Group | 0 | 1 | 2 | 3 | 4 | 5 | 6 | 7 | 8 |
| 9 and 59 angular directions | 10 and 58 angular directions | 11 and 57 angular direction | 12 and 56 angular directions | 13 and 55 angular directions | 14 and 54 angular directions | 15 and 53 angular directions | 16 and 52 angular directions | 17 and 51 angular directions | 18 and 50 angular directions |
| 9 | 10 | 11 | 12 | 13 | 14 | 15 | 16 | 17 | 18 |
| 19 and 49 angular directions | 20 and 48 angular directions | 21 and 47 angular directions | 22 and 46 angular directions | 23 and 45 angular directions | 24 and 44 angular directions | 25 and 43 angular directions | 26 and 42 angular directions | 27 and 41 angular directions | 28 and 40 angular directions |
| 19 | 20 | 21 | 22 | 23 | 24 | 25 | 26 | 27 | 28 |
| 29 and 39 angular directions | 30 and 38 angular directions | 31 and 37 angular directions | 32 and 36 angular directions | 33 and 35 angular directions | 34 angular direction | | | | |
| 29 | 30 | 31 | 32 | 33 | 34 | | | | |

The primary transform is also categorized into multiple groups based on the different traditional intra prediction modes, and the transform kernel for the corresponding group is selected based on the traditional modes.

In the implementation, a method of matching an interpolation-filtered prediction block to a traditional prediction mode is proposed, and then the interpolation-filtered prediction block is mapped to a preset MTS, NSPT, LFNST or some other primary transform (separable or non-separable) or secondary transform (separable or non-separable) through the matched traditional prediction mode. Specifically, the prediction block based on the interpolation filter technique is matched to the planar mode or the angular mode in the range of 2 to 66 through the prediction values on the prediction block.

In the first step, as illustrated in FIG. 8, the horizontal and vertical gradient values for each $3\times3$ window in the interpolation-filtered prediction block (i.e., the current block) are calculated by using a sliding $3\times3$ window 801; $G_x$ *and* $G_y$ are obtained by the dot product of the horizontal gradient operator $M_x$ and vertical gradient operator $M_y$ of $3\times3$ with the prediction values within the window location, respectively. Exemplarily, the horizontal gradient operator $M_x$ and the vertical gradient operator $M_y$ are illustrated in the following formula.

$$M_x = \begin{bmatrix} -1 & 0 & 1 \\ -2 & 0 & 2 \\ -1 & 0 & 1 \end{bmatrix} \text{ and } M_y = \begin{bmatrix} -1 & -2 & -1 \\ 0 & 0 & 0 \\ 1 & 2 & 1 \end{bmatrix}$$

Assuming that the interpolation-filtered prediction block is a block with a width and a height of (w, h), by sliding the $3\times3$ window, $G_x$ *and* $G_y$ for (w-2) * (h-2) positions at the center of the interpolation-filtered prediction block may be calculated.

In the second step, according to $G_x$ *and* $G_y$ at each position, the corresponding traditional angular direction O at each position is calculated according to the following formula, and the amplitude value G of the gradient corresponding to the angle at each position is calculated:

$$G = |G_x| + |G_y| \text{ and } O = \text{atan}\left(\frac{G_y}{G_x}\right)$$

In some embodiments, the calculation process of atan may be simplified through looking-up table or some variants.

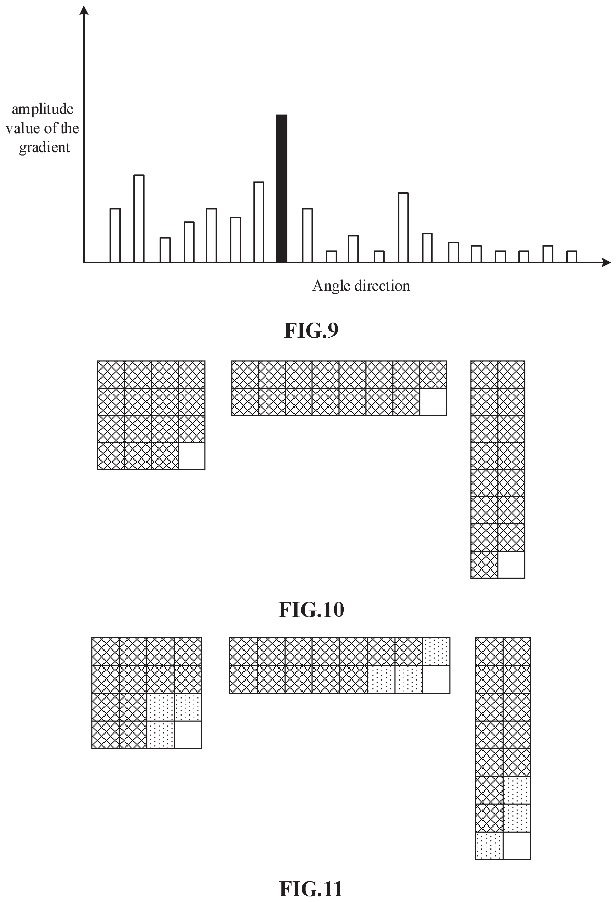

In the third step, the amplitude values G of the gradients at each position are accumulated respectively on the derived traditional angular categories to obtain a histogram of the gradient amplitude values; and finally the traditional angle with the largest accumulated amplitude value is selected as the angle corresponding to the current block. In particular, when the amplitude values derived from all the traditional angles are zero, the current block will be matched to the traditional planar prediction mode category. Exemplarily, a histogram of amplitude values as illustrated in FIG. 9 illustrates accumulated amplitude values in each angular direction.

1.3 Some related improvements to interpolation filtering-based intra prediction technique

1.3.1. Using maximum and/or minimum values to limit the range

After obtaining the filter coefficients of the interpolation filter model, when performing interpolation filtering on the current block, a set of adaptive maximum and minimum values may be used to limit the output range of the interpolation filter model.

For example, a set of maximum and minimum values is searched in the already reconstructed region around the current block. When performing the prediction on the each position of the current block by using the interpolation filter model, output range of the output value for each position is limited by the maximum and minimum values. Compared with the prediction formula provided in Section 1.2, as shown in the following formula, additional operations to limit the maximum and minimum values are required.

$$pred_r = clip\left(min, max, \sum\left(t_{r+p_n} \times c_n\right)\right)$$

Herein, min and max are the minimum value and maximum value, respectively.

1.3.2. Sample mean removal

When obtaining the coefficients of the interpolation filter model, the mean may be subtracted from the input samples and output samples of the interpolation filter model, so that the solved filter coefficients of the interpolation filter model may be more conducive to improving the fitting effect of the interpolation filter model. This means that when the interpolation filter model is used to predict the current block, correspondingly, the input needs to subtract the mean and then be fed to the interpolation filter model, and the output needs to add the mean to obtain the prediction value. Compared with the prediction formula provided in Section 1.2.2, as shown in the following formula, additional operations of mean removal and adding the mean back to the output are required.

$$pred_r = m + \sum ((t_{r+p_n} - m) \times c_n)$$

Herein, m is the mean, which may be a certain reconstructed value in the already reconstructed region around the current block, or the mean of a part of the reconstructed values.

1.3.3. Extension of Chroma Intra Prediction Mode

The prediction mode of Direct Mode/Derived Mode (DM) is a widely used and efficient intra chroma prediction mode. When the DM mode is selected for the chroma block, the chroma block obtains the mode selected for the luma block at the corresponding position for intra prediction.

The interpolation filter technique described in Section 1.2 is only applied to the prediction of luma intra blocks. A direct approach is to extend this mode to chroma, but this will lead to the need to derive interpolation filtering parameters for chroma, resulting in high computational complexity. In the existing practice, there is no interpolation filter prediction mode for chroma, and when the DM mode is selected for the chroma intra block, the DM mode is set to the PLANAR prediction mode.

As described in Section 1.2, for the luma block using the interpolation filter mode, a traditional prediction mode may be derived by constructing a gradient histogram. This traditional mode may be used when the DM mode is selected for the chroma mode and the interpolation filter mode is selected for the luma block at the corresponding position.

1.3.4. Selection of primary transform kernel for prediction block in interpolation filter mode

After completing the prediction for the current block, the encoder obtains the residual from the original sample value, and the transform and quantization are performed for the residual. At the decoder end, the inverse quantization and inverse transform are performed for the coefficients parsed from the bitstream, to obtain the reconstructed residual value, and the reconstructed residual value is added to the prediction value to obtain the reconstructed value.

In Section 1.2, a method of deriving a gradient histogram from the interpolation filter prediction result, matching it to a traditional prediction mode, and further selecting a non-separable transform kernel is introduced. In other primary transform besides non-separable transforms, the selection of transform kernel is the same as that for PLANAR mode. The characteristics of interpolation filter mode are different from characteristics of PLANAR mode, so the selection of primary transform kernel should be further optimized.

In the ECM reference software, the primary transform is categorized into horizontal direction and vertical direction, and the allowable transform modes in each direction include the following 7 types: {'DCT2', 'DCT8', 'DST7', 'DCT5', 'DST4', 'DST1', 'IDTR'}. Among them, DCT2, DCT8, and DCT5 are subclasses of Discrete cosine transform (DCT); DST7, DST4, and DST1 are subclasses of Discrete sine transform (DST); and IDTR is Identity transform, indicating no transform is applied.

In the ECM, the most commonly used primary transform mode is DCT2 in both horizontal and vertical directions, (denoted as DCT2-DCT2), which is used as a primary transform before the non-separable secondary transform LFNST, and also used as a transform when the Multiple transform selection (MTS) technique is disabled. When the MTS mode is selected, the transform process will be a combination of the primary transforms in the horizontal direction and the vertical direction, rather than a non-separable transform. In the ECM, based on the characteristics of parsed non-zero coefficients in the current block, the block may have up to 6 non-DCT2-DCT2 transform kernels to select from.

The scheme proposes that for the prediction block of the interpolation filter mode, the MTS primary transform kernel for its residual should be related to whether the interpolation filter mode is selected for the current block, and more specifically, it may be related to the sub-mode of the selected interpolation filter mode or the size and shape of the current block.

This scheme presents two primary transform kernel candidates that may be used under the current MTS design in the ECM

1. The MTS optional primary transform kernel is related to whether the interpolation filter prediction mode is selected for the current block. If the interpolation filter prediction mode is used for the current block, the 6 MTS transform kernels are shown in the following table (the transform kernel is: horizontal transform-vertical transform):

| MTS Index | 0 | 1 | 2 | 3 | 4 | 5 |
|---|---|---|---|---|---|---|
| Transform kernel | DST7-DST7 | DST7-DST4 | DST4-DST7 | DST4-DST4 | DST1-DST7 | DST7-DST1 |

When the MTS is selected and the prediction mode of the current block is the interpolation prediction mode, the corresponding transform kernel is selected from six transform kernels based on the parsed MTS transform index for inverse transform.

2. The MTS optional primary transform kernel is related to whether the interpolation filter mode is selected for the current block and the size and shape of the current block (the shape size of the block is: height $\times$ width), as illustrated in the following table:

| MTS Index | 0 | 1 | 2 | 3 | 4 | 5 |
|---|---|---|---|---|---|---|
| 4 × 4 block | IDTR-IDTR | DST4-DST4 | IDTR-DST4 | DST4-IDTR | DST4-DCT8 | DCT8-DST4 |
| 4 × 8 block | IDTR-IDTR | DST4-DST4 | DST1-DST4 | DST7-DST4 | DCT8-DST4 | DST4-DCT5 |
| 4 × 16 block | DST7-DST4 | DST4-DST4 | DST1-DST4 | IDTR-IDTR | DCT5-DST4 | DST7-DCT5 |
| 4 × 32 block | DST4-DST4 | DST7-DST4 | DST4-DCT5 | DCT2-DCT5 | DST7-DCT5 | DCT2-IDTR |
| 8 × 4 block | IDTR-IDTR | DST4-DST4 | DST4-DST1 | DST4-DST7 | DST4-DCT8 | DCT5-DST4 |
| 8 × 8 block | DST7-DST7 | DST4-DST4 | DST7-DCT2 | DCT2-DST7 | DST7-DST1 | DST1-DST7 |
| 8 × 16 block | DST7-DST7 | DST1-DST7 | DST7-DST4 | DST1-DST4 | DCT5-DST7 | DST4-DST7 |
| 8 × 32 block | DST7-DST7 | DST4-DST7 | DCT2-DST7 | DST1-DST7 | DST7-DST4 | DCT5-DST7 |
| 16 × 4 block | DST4-DST7 | DST4-DST4 | DST4-DST1 | IDTR-IDTR | DST4-DCT5 | DCT5-DST7 |
| 16 × 8 block | DST7-DST7 | DST7-DST1 | DST4-DST7 | DST4-DST1 | DST7-DCT5 | DST7-DST4 |
| 16 × 16 block | DST7-DST7 | DST7-DST1 | DST1-DST7 | DCT5-DST7 | DST7-DCT5 | DST7-DST4 |
| 16 × 32 block | DST7-DST7 | DST4-DST7 | DCT2-DST7 | DST1-DST7 | DST7-DCT5 | DCT5-DST7 |
| 32 × 4 block | DST4-DST4 | DST4-DST7 | DCT5-DST4 | DCT5-DCT2 | DCT5-DST7 | IDTR-DCT2 |
| 32 × 8 block | DST7-DST7 | DST7-DST4 | DST7-DCT2 | DST7-DST1 | DST4-DST7 | DST7-DCT5 |
| 32 × 16 block | DST7-DST7 | DST7-DST4 | DST7-DCT2 | DST7-DST1 | DCT5-DST7 | DST7-DCT5 |
| 32 × 32 block | DST7-DST7 | DST4-DST7 | DST7-DST4 | DCT5-DST7 | DST7-DCT5 | DCT2-DST7 |

When the MTS is selected and the prediction mode of the current block is the interpolation prediction mode, the corresponding transform kernel is selected to perform inverse transform based on the parsed MTS transform index and the shape and size of the block. In this example, an interpolation filter prediction mode may be applied to luma blocks of 4 × 4 to 32 × 32.

The method for obtaining the candidate MTS transform kernel may be as follows:

1. the picture set or video set is encoded by using an encoder that incorporates an interpolation filter prediction mode; and

2. the residuals of the blocks for which the interpolation filter mode is selected is screened one by one for other possible transform kernels in the horizontal-vertical direction based on classification (e.g., shape and size of the block, interpolation filter mode). The criteria for selecting the transform kernel may be the size of the SAD, the size of the SSE, or other metrics such as transform coding gain.

The transform coding gain is defined as the ratio of the arithmetic mean of the variances of the transform coefficients to the geometric mean of the variances of the transform coefficients.

1.3.5. Nonlinear and Bias Terms in Interpolation Filtering

In the interpolation filtering described in Section 1.2, the interpolation filter prediction does not include nonlinear terms or bias terms. In order to improve the coding performance gain brought by the nonlinear terms or bias terms, nonlinear terms or bias terms may also be added to the interpolation filtering.

Consistent with Section 1.2, this implementation process uses 15 linear terms corresponding to the three cases illustrated in FIG. 10, which are the 15-tap linear terms of the interpolation filter model ( ▨ ), where □ is the current position to be predicted. On this basis, 3-tap nonlinear terms may be added, and the reconstructed sample positions used for the nonlinear term is illustrated in FIG. 11. On the basis of the 15-tap linear term (that is, ▨ ) of the interpolation filter model, an example of adding the 3-tap nonlinear term (that is, ▨ ) is provided, where □ is the current position to be predicted.

On this basis, 3-tap nonlinear terms may be added, and the reconstructed sample positions used for the nonlinear terms are illustrated in FIG. 11.

The interpolation inputs for the 15 linear terms are $t_i$, the value of $i$ is from 0 to 14, corresponding to 14 light gray positions around the current position to be predicted, and $t_i$ represents the reconstructed value or prediction value on the light gray position (depending on whether the input required for the current position to be predicted is located in the block to be predicted or in the reference pixel region).

The interpolation inputs for the 3 nonlinear terms are: $p_i = (t_i \times t_i + midVal) >> bitDepth$, i is the 3 dark gray positions, $t_i$ represents the value of the linear term, midVal and bitDepth are equal to 512 and 10, respectively, in the case of 10 bits.

After adding nonlinear terms, the prediction formula for the current predicted position is as follows:

$$Pred = \sum_{i0=0}^{a} (t_{i0} \times c_{i0}) + \sum_{i1=0}^{b} (p_{i1} \times c_{i1})$$

Here, $p_i$ represents the nonlinear input, and the calculation method is as described above, a and b denote the number of linear inputs and nonlinear inputs, respectively; c is still the filter coefficient, $c_{10}$ is the filter coefficient for the linear input, and $c_{i1}$ is the filter coefficient for the nonlinear input.

When obtaining filter coefficients of interpolation filter model, the corresponding nonlinear term values should also be incorporated when constructing autocorrelation coefficient matrices and cross-correlation coefficient vector. When there is a bias term, the bias term value should also be further incorporated.

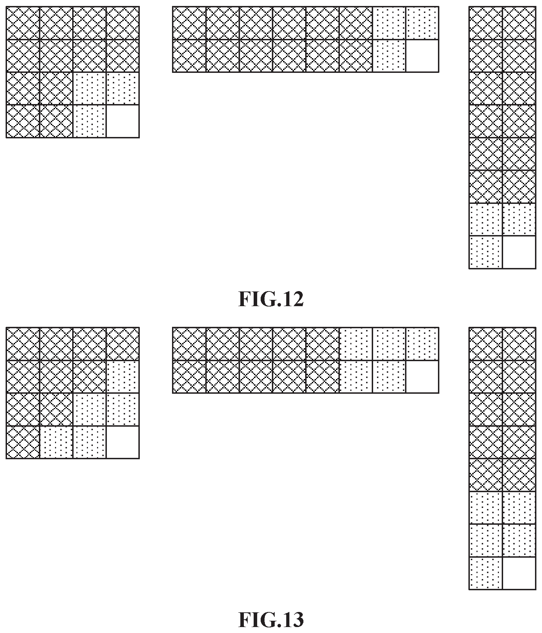

In addition to the above-described example in which 3 nonlinear terms are added to the 15-tap interpolation filter model, another example as illustrated in FIG. 12 may be used as the nonlinear term, and an example in which 3-tap nonlinear terms (dark gray portions) are added to the 15-tap linear terms (light gray portions) of interpolation filter model, where the white position is the current position to be predicted. Compared with FIG. 11, the calculation in FIG. 12 is simpler because different interpolation filter model shapes use the same nonlinear term.

In addition to using three non-linear terms, more non-linear terms may also be used. For example, FIG. 13 is an example of using 5 non-linear terms, and an example of adding 5-tap non-linear terms (dark gray portion) to the 15-tap linear terms (light gray portion) of the interpolation filter model, where the white position is the current position to be predicted.

As described in the above examples, the number of nonlinear terms should be a positive integer, and different designs may be made according to the performance and complexity requirements.

In some embodiments, where the linear term is mean-removed, the non-linear term may also be mean-removed.

The bias term is implemented by adding a 1-tap filter coefficient. When calculating the prediction value, this filter coefficient is multiplied by a constant (which may be related to the bit depth of the samples). For example, for a 10-bit video sequence, this constant may be 512 (i.e. $2^{10-1}$).

$$Pred = \sum_{i=0}^{a} (t_i \times c_i) + 512 \times c_{a+1}$$

1.3.6. Limiting the enablement of the mode based on the shape of the block

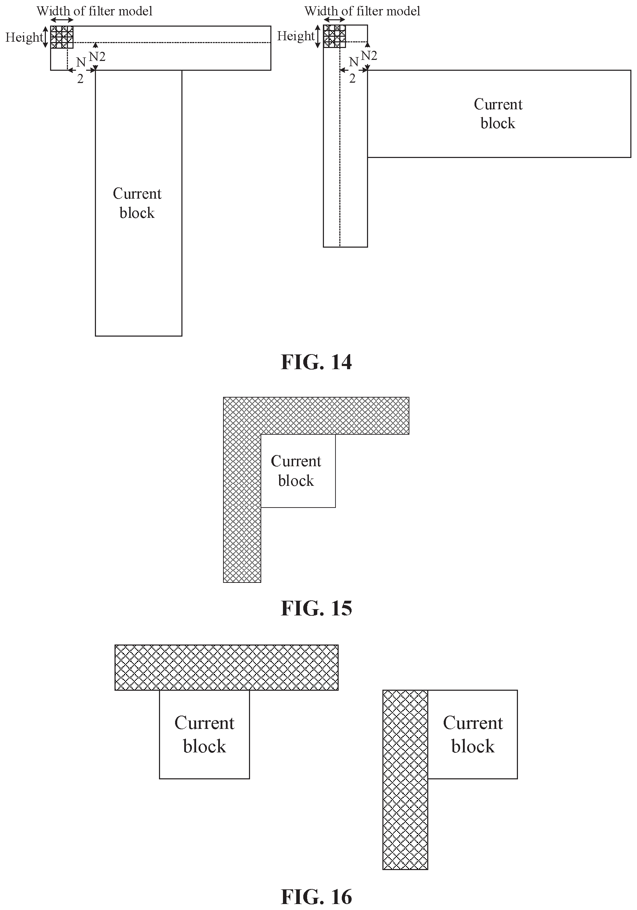

For a block to be predicted (i.e., the current block) having a width of 16 and a height of 4, if the filter coefficients of the interpolation filter model are obtained by using the left reconstructed region, there will be many samples to be predicted, while there will be few samples in the region used for obtaining the filter coefficients of the interpolation filter model. The schematic diagram is illustrated in FIG. 14.

This scheme proposes that for the ratio of the width to height of the block to be predicted: when width x a < height, the use of the above reconstructed region for deriving the coefficients of the interpolation filter model is disabled; and when height x a < width, the use of the left reconstructed region for deriving the coefficients of the interpolation filter model is disabled. For example a = 2.

When encoding and decoding interpolation filter modes, since certain interpolation filter sub-modes are limited based on the aspect ratio, the number of interpolation filter sub-modes allowed to be used under different aspect ratios is different. Therefore, when parsing the interpolation filter identifier, the selection of its context model should be related to the block shape and aspect ratio factors.

2. Specific implementation

2.1. Definition of Interpolation filter model Combinations

The shape of the interpolation filter model in one scheme is the same as the shape described in Section 1, including three 15-tap filter model shapes. For the convenience of subsequent description and reference, the three filter model shapes are called EIP_FILTER_S, EIP_FILTER_H, and EIP_FILTER_V from left to right.

The reconstructed region for obtaining the filter coefficients of the interpolation filter model, with respect to the position of the current block, is illustrated in FIG. 15 and FIG. 16, including three reconstructed regions. For convenience of subsequent description and reference, the three reconstructed regions are called from left to right: EIP_AL_A_L (a reconstructed region constructed from reconstructed samples in AL region (Above-Left), A region (Above) and L region (Left)); EIP_AL_A (a reconstructed region constructed from reconstructed samples in AL region (Above-Left), A region (Above)); and EIP_AL_L (a reconstructed region constructed from reconstructed samples in AL region (Above-Left), and L region (Left)).

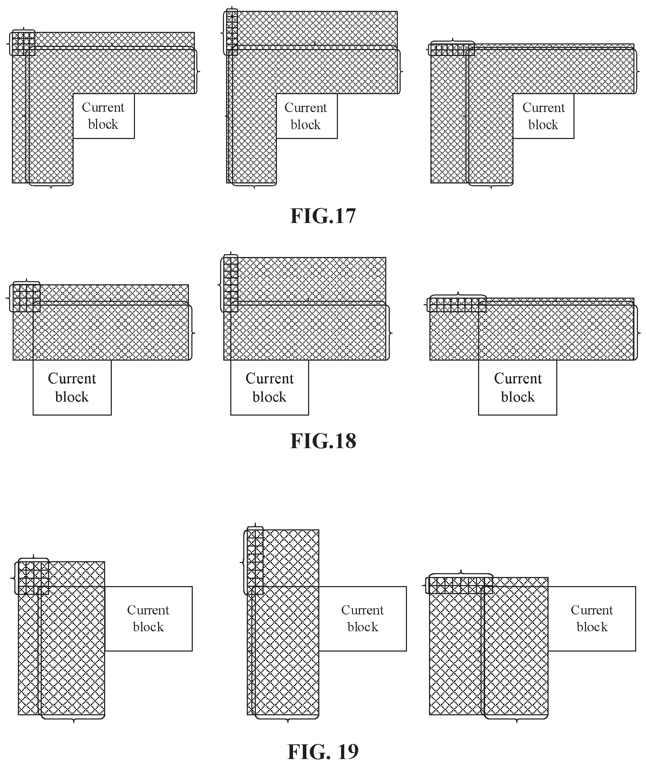

Based on the defined shape of the interpolation filter model and the reconstruction region for obtaining the filter coefficient of the interpolation filter model, the present scheme may have a total of 3x3 = 9 combinations of the interpolation filter model shapes and the reconstruction regions for obtaining the filter coefficient of the interpolation filter model, such as the combinations {EIP_AL_A_L, EIP_FILTERS}, {EIP_AL_A_L, EIP_FILTER_V} and {EIP_AL_A_L, EIP_FILTER_H} as illustrated in FIG. 17; the combinations {EIP_AL_A, EIP_FILTERS}, {EIP_AL_A, EIP_FILTER_V} and {EIP_AL_A, EIP_FILTER_H} as illustrated in FIG. 18; the combinations {EIP_AL_L, EIP _FILTERS}, {EIP_AL_L, EIP_FILTER_V} and {EIP_AL_L, EIP_FILTER_H} as illustrated in FIG. 19.

2.2. Representation of syntax element encoding and decoding, and interpolation filter model combinations in related schemes

In the related scheme, for blocks of 4x16, 16x4, 4x32, 32x4, two EIP combinations are allowed, as shown in the following table:

| Shape of block to be predicted (WxH) | Combination Index 0 | Combination Index 1 |
|---|---|---|
| 4x16 | (EIP_AL_A_L, EIP_FILTER_S) | (EIP_AL_A_L, EIP_FILTER_V) |
| 16x4 | (EIP_AL_A_L, EIP_FILTER_S) | (EIP_AL_A_L, EIP_FILTER_H) |
| 4x32 | (EIP_AL_A_L, EIP_FILTER_S) | (EIP_AL_A_L, EIP_FILTER_V) |
| 32x4 | (EIP_AL_A_L, EIP_FILTER_S) | (EIP_AL_A_L, EIP_FILTER_H) |

Therefore, in this scheme, for other 4xN3, N3x4 and 8x32, 32x8 blocks, three EIP combinations are allowed, as shown in Table 5 below:

Table 5

| Shape of block to be predicted (WxH) | Combination Index 0 | Combination Index 1 | Combination Index 2 |
|---|---|---|---|
| 4x4 | (EIP_AL_A_L, EIP_FILTER_S) | (EIP_AL_A_L, EIP_FILTER_V) | (EIP_AL_A_L, EIP_FILTER_H) |
| 4x8 | (EIP_AL_A_L, EIP_FILTER_S) | (EIP_AL_A_L, EIP_FILTER_V) | (EIP_AL_A_L, EIP_FILTER_H) |
| 8x4 | (EIP_AL_A_L, EIP_FILTER_S) | (EIP_AL_A_L, EIP_FILTER_H) | (EIP_AL_A_L, EIP_FILTER_V) |
| 8x32 | (EIP_AL_A_L, EIP_FILTER_S) | (EIP_AL_A_L, EIP_FILTER_V) | (EIP_AL_A_L, EIP_FILTER_H) |
| 32x8 | (EIP_AL_A_L, EIP_FILTER_S) | (EIP_AL_A_L, EIP_FILTER_H) | (EIP_AL_A_L, EIP_FILTER_V) |

For 8xN3 and N3x8 blocks, five EIP combinations are allowed, as shown in the following table:

| Block shape to be predicted (WxH) | Combination Index 0 | Combination Index 1 | Combination Index 2 | Combination Index 3 | Combination Index 4 |
|---|---|---|---|---|---|
| 8x8 | (EIP_AL_A_L, EIP_FILTER_S) | (EIP_AL_A_L , EIP_FILTER_V) | (EIP_AL_A_L , EIP_FILTER_H) | (EIP_AL_L, EIP_FILTER_S) | (EIP_AL_A, EIP_FILTER_S) |
| 8x16 | (EIP_AL_A_L, EIP_FILTER_S) | (EIP_AL_A_L , EIP_FILTER_V) | (EIP_AL_A_L , EIP_FILTER_H) | (EIP_AL_L, EIP_FILTER_S) | (EIP_AL_L, EIP_FILTER_V) |
| 8x32 | (EIP_AL_A_L, EIP_FILTER_S) | (EIP_AL_A_L , EIP_FILTER_V) | (EIP_AL_A_L , EIP_FILTER_H) | (EIP_AL_L, EIP_FILTER_V | (EIP_AL_L, EIP_FILTER_S) |
| 16x8 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_S) | (EIP_AL_A, EIP_FILTER_H) |
| 32x8 | (EIP_AL_A_L, EIP_FILTER_S) | (EIP_AL_A_L , EIP_FILTER_H) | (EIP_AL_A_L , EIP_FILTER_V) | (EIP_AL_A, EIP_FILTER_H) | (EIP_AL_A, EIP_FILTER_S) |

For blocks of other shapes, nine EIP combinations are allowed, as shown in the table below:

| Shape of block to be predicted (WxH) | Combination Index 0 | Combination Index 1 | Combination Index 2 | Combination Index 3 | Combination Index 4 | Combination Index 5 | Combination Index 6 | Combination Index 7 | Combination Index 8 |
|---|---|---|---|---|---|---|---|---|---|
| 16x16,32x32,16x32 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_A, EIP_FILTER_S) | (EIP_AL_A, EIP_FILTER_H) | (EIP_AL_L, EIP_FILTER_V) | (EIP_AL_L, EIP_FILTER_H) | (EIP_AL_A, EIP_FILTER_V) |

(continued)

| Shape of block to be predicted (WxH) | Combination Index 0 | Combination Index 1 | Combination Index 2 | Combination Index 3 | Combination Index 4 | Combination Index 5 | Combination Index 6 | Combination Index 7 | Combination Index 8 |
|---|---|---|---|---|---|---|---|---|---|
| 32x16 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_S) | (EIP_AL_L, EIP_FILTER_S) | (EIP_AL_L, EIP_FILTER_V) | (EIP_AL_A, EIP_FILTER_H) | (EIP_AL_A, EIP_FILTER_V) | (EIP_AL_L, EIP_FILTER_H) |

The decoding end parses the bitstream. When parsing the syntax element of the intra coding mode for the luma coding unit, the decoding end parses whether the interpolation filter prediction mode is used; and if the interpolation filter mode is used, the number of interpolation filter modes allowed for the current block is further obtained based on the size and shape of the current block. As described in Section 3 below, when the current block is 4x16, 16x4, 4x32, or 32x4, 2 interpolation filter modes are allowed; when the current block has other shapes of 4xN3, N3x4, 8x32, or 32x8, 3 interpolation filter modes are allowed; when the current block has other shapes of 8xN3 or N3x8, 5 interpolation filter modes are allowed; when the current block is 16x16, 16x32, 32x16, or 32x32, 9 interpolation filter modes are allowed. (EIP_AL_A_L,EIP_FILTER_S) is always used as the first among all interpolation filter modes. A binary code (first_mode) is used to indicate whether this mode is selected. If it is not this mode, a fixed-length code is used to indicate whether it is one of the other modes, as shown in the Coding unit syntax table below:

| coding_unit(x0,y0,cbWidth,cbHeight,cqtDepth,treeType,modeType) { | Descriptor |
|---|---|
| ...... // Encoding and decoding mode-related syntax elements before the interpolation filter model | |
| if (spsEipAllowed) // When a high-layer syntax element, such as an SPS identifier, allows the use of an interpolation filter mode, encoding and decoding the interpolation filter identifier | |
|     cu_eip_flag[x0][y0] | ae(v) |
|   if (cu_eip_flag) { | |
|     first_mode[x0][y0] | ae(v) |
|    if (!first_mode [x0][y0] && numOtherModes > 1) | |
|      other_mode [x0][y0] | ae(v) |
|   } | |
|   else ... // Encoding and decoding subsequent modes if not interpolation filter mode | |
| } | |

The variable numOtherModes is derived based on the shape and size of the block, indicating the total number of potential combinations excluding the first combination. For example, for a 4x32 block, there is only one other available combination besides the first combination, and in this case, numOtherModes is set to 1. At this time, as illustrated in table 8, the encoding or decoding of other_mode should be skipped. For another example, for an 8x16 block, there are four other available combinations besides the first combination; in this case, numOtherModes is set to 4; and at this time, two binary codes should be encoded or parsed to represent other_mode.

other_mode is represented by using fixed-length codes of different lengths based on the shape and size of the current block, as described above. When the current block is 4x16, 16x4, 4x32 or 32x4, since there are only two combination modes in total, decoding other_mode to determine the specific other_mode is not required when it is not the first mode.

When the current block is other 4xN3 or N3x4 or 8x32, 32x8, since there are three combination modes in total, there are two other modes, and thus, one fixed-length binary code for other_mode is decoded to determine which other_mode it is.

When the current block is other 8xN3 or N3x8, since there are a total of 5 combination modes, there are a total of 4 other modes, and thus, two fixed-length binary code for other_mode is decoded to determine which other_mode it is.

When the current block is 16x16, 16x32, 32x16, or 32xN3, since there are a total of 9 combination modes, there are a total of 8 other modes, and thus, three fixed-length binary code for other_mode is decoded to determine which other_mode it is.

In this scheme, the above-mentioned binary codes, including cu_eip_flag and first_mode, are encoded and decoded by using context model, while bypass coding is used for other_mode.

In conjunction with the description in Section 3 below, when cu_eip_flag is true and each interpolation filter combination mode is represented by using first_mode and/or other_mode, the value of the identifier and the binary symbol representation are shown in the following table.

In the related scheme, for blocks of 4x16, 16x4, 4x32 and 32x4, 2 EIP combinations are allowed, as shown in the following table:

|  | Combination Index 0 | Combination Index 1 |
| --- | --- | --- |
| first_mode binary identifier value | Binary identifier: 1 | Binary identifier: 0 |

For other 4xN3, N3x4 and 8x32, 32x8 blocks, 3 EIP combinations are allowed, as shown in the following table:

|  | combination index 0 | combination index 1 | combination index 2 |
| --- | --- | --- | --- |
| first_mode binary identifier value | binary identifier: 1 | binary identifier: 0 | binary identifier: 0 |
| other_mode binary identifier value | no other_mode identifier | binary identifier: 0 | binary identifier: 1 |

For other 8xN3 and N3x8 blocks, 5 EIP combinations are allowed, as shown in the following table:

| Shape of block to be predicted (WxH) | combination index 0 | combination index 1 | combination index 2 | combination index 3 | combination index 4 |
| --- | --- | --- | --- | --- | --- |
| first_mode Binary identifier value | Binary identifier: 1 | Binary identifier: 0 | Binary identifier: 0 | Binary identifier: 0 | Binary identifier: 0 |
| other_mode binary identifier value | No other_mode identifier | Binary identifier: 00 | Binary identifier: 01 | Binary identifier: 10 | Binary identifier: 11 |

For blocks of other shapes, 9 EIP combinations are allowed, as shown in the table below:

| shape of block to be predicted (WxH) | combination index 0 | combination index 1 | combination index 2 | combination index 3 | combination index 4 | combination index 5 | combination index 6 | combination index 7 | combination index 8 |
| --- | --- | --- | --- | --- | --- | --- | --- | --- | --- |
| first_mo de binary identifier value | binary identifi er: 1 | binary identif ier: 0 | binary identi fier: 0 | binary identi fier: 0 | binary identi fier: 0 | binary identi fier: 0 | binary identi fier: 0 | binary identi fier: 0 | binary identifie r: 0 |
| other_m ode binary identifier value | no other_ mode identifi er | binary identif ier: 000 | binary identi fier: 001 | binary identi fier: 010 | binary identi fier: 011 | binary identi fier: 100 | binary identi fier: 101 | binary identi fier: 110 | binary identifie r: 111 |

Through the index corresponding to the parsed codeword, the correspondence between the index and the combination may be found in the above table, and thus, the combination of the reconstructed region and the filter model shape may be determined.

2.3. Prediction in related schemes

The decoder determines the position of the current block and the parsed prediction mode; if it is the interpolation filter prediction mode, the decoder obtains the used interpolation filter combination based on the corresponding identifier, derives/calculates the filter coefficient of the interpolation filter model by using the reconstructed region and the shape of the interpolation filter model under the combination, and uses the acquired interpolation filter model to perform prediction within the current block in the diagonal direction from above-left to bottom-right, and the prediction values needs to be limited to the corresponding bit precision. For example, under 10-bit precision, the calculation method for predicting the value at position r is shown in the following formula:

$$pred_r = clip(0, 1023, \sum (t_{r+p_n} \times c_n))$$

$t_{r+pn}$: The input value for the interpolation filter at the current position r, with its position differing from r by $p_n$. $p_n$ represents the position difference between the n-th input of the 15-tap interpolation filter model and the current output position. When the position $r + p_n$ is located in a reconstructed position outside the current block (as illustrated in FIG. 6), $t_{r+pn}$ uses the reconstructed value as an input at the position $r + p_n$ of the interpolation filter model, and when the $r + p_n$ position is located at a position within the prediction block (as illustrated in FIG. 6), $t_{r+pn}$ uses the prediction value as an input of the interpolation filter model at the $r + p_n$ position. As illustrated in FIG. 6, position 1 and position 2 of the interpolation filter model 401 are two input positions for the current prediction point ■, the point at position 1 is located in the reconstructed region, so the reconstruction value is used as the input; and the point at position 2 is located within the current block, so the prediction value is used as the input.

As described in Section 1.3.3, for a chroma current block, when the DM mode is selected for prediction for the chroma current block, and the mode of the luma block at the corresponding position of the current block is the interpolation filter mode, a gradient histogram is derived based on the luma prediction values at the corresponding positions, and a traditional intra prediction mode (angle) is determined based on the analysis of the gradient histogram, and then, the chroma is predicted by using this mode.

## 2.4. Transform in related schemes

As described in Section 1.2.3, a gradient histogram is derived based on the luma prediction values, a traditional intra prediction mode (angle) is determined based on the analysis of the gradient histogram, a secondary transform kernel group is selected by using this angle; and in this secondary transform kernel group, a corresponding transform kernel is identified based on the decoded secondary transform index for inverse transform.

In the reference software, a primary transform is also provided with a corresponding primary transform kernel group for the traditional intra prediction modes based on the angle characteristic. In this method, a gradient histogram is derived based on the luma prediction values, a traditional intra prediction mode (angle) is determined based on the analysis of the gradient histogram to select the primary transform group, and then the corresponding transform kernel is identified based on the decoded primary transform index for inverse transform.

## 2.5. Some variants of related schemes

Variant 1: for 4x32 and 32x4 blocks, 2 EIP combinations are allowed, as shown in the following table:

| Shape of block to be predicted (WxH) | Combination Index 0 | Combination Index 1 |
|---|---|---|
| 4x32 | (EIP_AL_A_L, EIP_FILTER_S) | (EIP_AL_A_L, EIP_FILTER_V) |
| 32x4 | (EIP_AL_A_L, EIP_FILTER_S) | (EIP_AL_A_L, EIP_FILTER_H) |

Therefore, in this scheme, for other 4xN3 and N3x4 blocks, 3 EIP combinations are allowed, as shown in the following table:

| Block shape to be predicted (WxH) | Combination Index 0 | Combination Index 1 | Combination Index 2 |
|---|---|---|---|
| 4x4 | (EIP_AL_A_L, EIP_FILTER_S) | (EIP_AL_A_L, EIP_FILTER_V) | (EIP_AL_A_L, EIP_FILTER_H) |
| 4x8 | (EIP_AL_A_L, EIP_FILTER_S) | (EIP_AL_A_L, EIP_FILTER_V) | (EIP_AL_A_L, EIP_FILTER_H) |

(continued)

| Block shape to be predicted (WxH) | Combination Index 0 | Combination Index 1 | Combination Index 2 |
|---|---|---|---|
| 4x16 | (EIP_AL_A_L, EIP_FILTER_S) | (EIP_AL_A_L, EIP_FILTER_V) | (EIP_AL_A_L, EIP_FILTER_H) |
| 8x4 | (EIP_AL_A_L, EIP_FILTER_S) | (EIP_AL_A_L, EIP_FILTER_H) | (EIP_AL_A_L, EIP_FILTER_V) |
| 16x4 | (EIP_AL_A_L, EIP_FILTER_S) | (EIP_AL_A_L, EIP_FILTER_H) | (EIP_AL_A_L, EIP_FILTER_V) |

For 8xN3 and N3x8 blocks, 5 EIP combinations are allowed, as shown in the following table:

| Block shape to be predicted (WxH) | Combination Index 0 | Combination Index 1 | Combination Index 2 | Combination Index 3 | Combination Index 4 |
|---|---|---|---|---|---|
| 8x8 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_A, EIP_FILTER_S) |
| 8x16 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_L, EIP_FILTER_V) |
| 8x32 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_V) | (EIP_AL_L, EIP_FILTER_S) |
| 16x8 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_S) | (EIP_AL_A, EIP_FILTER_H) |
| 32x8 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_H) | (EIP_AL_A, EIP_FILTER_S) |

For blocks of other shapes, 9 EIP combinations are allowed, as shown in the table below:

| shape of block to be predicte d (WxH) | Combi nation Index 0 | Combi nation Index 1 | Combi nation Index 2 | Combi nation Index 3 | Combi nation Index 4 | Combi nation Index 5 | Combi nation Index 6 | Combi nation Index 7 | Combi nation Index 8 |
|---|---|---|---|---|---|---|---|---|---|
| 16x16,32x32,16x32 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_A, EIP_FILTER_S) | (EIP_AL_A, EIP_FILTER_H) | (EIP_AL_L, EIP_FILTER_V) | (EIP_AL_L, EIP_FILTER_H) | (EIP_AL_A, EIP_FILTER_V) |
| 32x16 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_S) | (EIP_AL_L, EIP_FILTER_S) | (EIP_AL_L, EIP_FILTER_V) | (EIP_AL_A, EIP_FILTER_H) | (EIP_AL_A, EIP_FILTER_V) | (EIP_AL_L, EIP_FILTER_H) |

Variant 2: in the original interpolation filtering scheme, the interpolation filtering technique is allowed to be used for blocks with a size of 4 × 4 to 32 × 32. This may be further limited such that the interpolation filtering technique is applied to blocks of size 4 × 4, or 4 × N3, or blocks where width is greater than twice the height and the height is greater than twice the width.

2.6. Problem description of related schemes

The encoding and decoding performance of the interpolation filtering-based intra prediction technique, as described in the related scheme, on the latest ECM reference software is shown in the following table. It can be seen that the cost-performance of the related scheme (that is, the coding performance gain and the encoding/decoding time complexity introduced) is still not ideal, especially as a tool with high hardware complexity, the encoding and decoding performance it brings is particularly important.

| | All Intra Main 10 | | | | | |
| | Over anchor | | | | | |
| | Y | U | V | EncT | DecT | Vm Peak |
| Class A1 | -0.14% | -0.02% | -0.13% | 102.8% | 101.7% | 100.1% |
| Class A2 | -0.12% | -0.16% | -0.10% | 102.4% | 100.8% | 100.2% |
| Class B | -0.13% | -0.11% | -0.09% | 102.9% | 101.0% | 100.2% |
| Class C | -0.16% | -0.08% | -0.07% | 102.1% | 100.8% | 100.3% |
| Class E | -0.23% | -0.25% | -0.20% | 102.8% | 100.3% | 100.3% |
| **Overall** | -0.15% | -0.12% | -0.11% | I 102.6% | 100.9% | 100.2% |
| Class D | -0.03% | 0.07% | -0.10% | 101.8% | 100.3% | 100.3% |
| Class F | -0.10% | -0.02% | 0.12% | 101.5% | 100.1% | 100.3% |

The software complexity of the interpolation filtering technique mainly comes from the fact that the encoder needs to calculate/derive the filter coefficients of the interpolation filter model under multiple interpolation filter model shapes based on multiple reconstructed regions, while the decoder needs to derive the filter for the interpolation filter model under one combination, and the derivation process has high computational complexity.

Based on the above analysis, an embodiment of the present disclosure provides the following an encoding method and a decoding method.

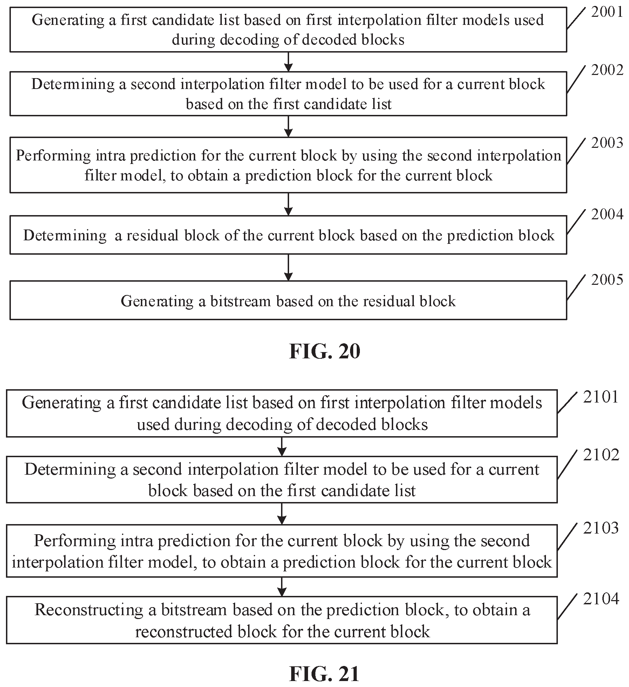

First, an embodiment of the present disclosure provides an encoding method, and the method may be applied to the encoder illustrated in FIG. 1. FIG. 20 is a schematic flowchart of an implementation of the encoding method according to the embodiment of the present disclosure. As illustrated in FIG. 20, the method includes the following operations 2001 to 2005.

In operation 2001: a first candidate list is generated based on first interpolation filter models used during the decoding of decoded blocks.

In operation 2002: a second interpolation filter model to be used for the current block is determined based on the first candidate list.

In operation 2003: intra prediction for the current block is performed by using the second interpolation filter model to obtain a prediction block for the current block.

In operation 2004: a residual block for the current block is determined based on the prediction block.

In operation 2005: a bitstream is generated based on the residual block.

In the embodiment of the present disclosure, intra prediction for the current block is performed through the obtained first interpolation filter models used during the decoding of the decoded blocks. In this way, on the one hand, the diversity of candidate interpolation filter models (that is, the models in the first candidate list) for the current block can be increased, thereby improving the prediction accuracy for the current block and reducing codeword overhead. On the other hand, for the current block, since there is no need to additionally calculate the filter coefficients of interpolation filter models for multiple combinations as described in Section 1.2.1 and determine which shape of interpolation filter model to use, computational overhead and time overhead are saved, thereby improving the bit rate.

Hereinafter, further optional implementations for each of the above operations, related terms, and the like will be described.

In operation 2001: a first candidate list is generated based on first interpolation filter models used during decoding of decoded blocks.

It should be understood that the generated first candidate list records one or more first interpolation filter models, that is, records model information of the one or more first interpolation filter models. Herein, the model information includes filter coefficients and shape parameters of the interpolation filter model.

In some embodiments, the first interpolation filter models include at least one of:

first-type models, which include interpolation filter models used during decoding of the decoded adjacent blocks of the current block;

second-type models, which include interpolation filter models used during decoding of the decoded non-adjacent blocks of the current block;

third-type models, which include historical interpolation filter models buffered in a second candidate list in decoding order; herein, the historical interpolation filter models refer to models used during the decoding of blocks that have been decoded prior to the current block; and

fourth-type models, which include interpolation filter models used during the decoding of decoded blocks on a reference picture of the current block.

It should be understood that the generated first candidate list may record one or more of the first-type models to fourth-type models.

In other embodiments, the operation of generating a first candidate list based on first interpolation filter models used during the decoding of decoded blocks includes that: at least one third interpolation filter model is determined based on reconstructed values of a reference region of the current block; the first candidate list is generated based on the at least one third interpolation filter model and the first interpolation filter models used during the decoding of the decoded blocks.

In one possible implementation, the filter coefficients of the one or more third interpolation filter models may be derived based on one or more combinations as described in Section 1.2.1 above.

In an embodiment of the present disclosure, in order to improve the accuracy of the intra prediction for the current block, in some embodiments, for generating/constructing the first candidate list, when the picture where the current block is located is an intra picture, the encoder/decoder may sequentially fill the first candidate list in the order of the first-type models, the second-type models, and the third-type models.

In an embodiment of the present disclosure, in order to improve the accuracy of the intra prediction for the current block, in another embodiment, when the picture where the current block is located is an inter picture, the first candidate list is sequentially filled in the order of the first-type models, the first subclass of models in the fourth-type models, the second-type models, the second subclass of models in the fourth-type models, and the third-type models.

The first subclass of models includes interpolation filter models used during the decoding of the decoded blocks at first predefined positions to the right, bottom, and/or bottom-right of the corresponding position of the current block on the reference picture.

The second subclass of models includes interpolation filter modes used during the decoding of the decoded blocks at second predefined positions of the current block on the reference picture, the second predefined positions are positions obtained by offsetting the first predefined positions with an available motion vector of the current block.

It should be understood that the fourth-type models is temporal interpolation filter models. For example, for the description of the first subclass of models, refer to the description of temporal interpolation filter models in Section 3.2 below. For the description of the second subclass of models, refer to the description of offset temporal interpolation filter models in Section 3.2 below, which will not be repeated here.

For the first-type models, in one possible implementation, one or more adjacent blocks of the current block may be checked one by one in a certain order to determine whether there are interpolation filter models that may be added to the first candidate list. Specifically, the encoder/decoder may check one or more adjacent blocks of the current block one by one in a certain order to determine whether one or more adjacent blocks are blocks that have completed reconstruction (i.e., decoded); If yes, it continues to check whether the reconstructed/decoded block uses an interpolation filter mode for intra prediction; if yes, and if the interpolation filter model for intra prediction is not duplicated/identical to the current models in the first candidate list, this interpolation filter model is added/filled into the first candidate list.

Exemplarily, the encoder/decoder may check the blocks at 5 predefined adjacent positions provided in Section 3.2 below one by one in the order of 0 to 4 to determine whether their interpolation filter models may be added to the first candidate list.

For the second-type models, likewise, in one possible implementation, the encoder/decoder may check one or more non-adjacent blocks of the current block one by one in a certain order to determine whether there are interpolation filter models that may be added to the first candidate list. Specifically, the encoder/decoder may check one or more non-adjacent blocks of the current block one by one in a certain order to determine whether the one or more non-adjacent blocks are blocks that have completed reconstruction (i.e., decoded); If yes, it continues to check whether the reconstructed/decoded block uses an interpolation filter mode for intra prediction; if yes, and if the interpolation filter model for intra prediction is not duplicated/identical to the current models in the first candidate list, this interpolation filter model is added/filled into the first candidate list.

Exemplarily, the encoder/decoder may check the blocks at 59 predefined non-adjacent positions and 28 predefined non-adjacent positions provided in Section 3.2 below one by one in the ascending order of the reference numerals illustrated in the corresponding figures to determine whether there are interpolation filter models that may be added to the first candidate list.

It should be understood that for a first candidate list with a given length, for example, if the maximum length/maximum number of models of the first candidate list is equal to the second number, after checking the first-type models and the second-type models, there may be a situation where the first candidate list is still remain unfilled, and at this time, the third-type models may be used to fill the first candidate list.

In some embodiments, the second number is equal to a second predefined number, e.g., the second number is equal to 12.

In some embodiments, during the process of filling the first candidate list with models, if the current number of models in the first candidate list is equal to the second number, the filling of the first candidate list is terminated.

In some embodiments, after terminating the model filling of the first candidate list, for example, after traversing the first-type models to the fourth-type models, or after traversing the first-type models to the third-type models, if the number of models in the first candidate list is less than the second number, predefined interpolation filter models are used to fill the first candidate list until the number of models in the first candidate list reaches the second number.

Of course, in other embodiments, after terminating the model filling of the first candidate list, if the number of models in the first candidate list is less than the second number, the encoder/decoder may also choose not to continue filling the first candidate list with predefined interpolation filter models.

In some embodiments, the interpolation filter models in the first candidate list are different from each other. Before filling the first candidate list with the interpolation filter models, the encoder/decoder may first perform a duplicate checking operation, and fill the interpolation filter model to be filled in the first candidate list into the list only when the model information of the interpolation filter model to be filled in the first candidate list is different from the model information of the models in the list.

Alternatively, in other embodiments, the interpolation filter models in the first candidate list that do not belong to the second candidate list are different from each other. In a scheme in which the maximum number of models of the fourth candidate list mentioned below is equal to the current number of models of the second candidate list, the interpolation filter models, belonging to the second candidate list, in the first candidate list are allowed to be identical, that is, no duplicate checking is performed on the interpolation filter models belonging to the second candidate list.

In some embodiments, the encoder/decoder may also limit the maximum number of respective types of models in the first candidate list. The number of the first-type models in the first candidate list is less than or equal to a first threshold; and/or

the number of the second-type models in the first candidate list is less than or equal to a second threshold; and/or
the number of the third-type models in the first candidate list is less than or equal to a third threshold; and/or
the number of the fourth-type models in the first candidate list is less than or equal to a fourth threshold.

The first threshold, the second threshold, the third threshold, and the fourth threshold may be predefined as the same value or may be predefined as different values. Exemplarily, in some embodiments, the first threshold > the second threshold > the third threshold > the fourth threshold.

In some embodiments, the first to fourth thresholds may be values greater than 0.

In operation 2002: a second interpolation filter model to be used for the current block is determined based on the first candidate list.

In some embodiments, the encoder may determine the second interpolation filter model as following: the interpolation filter models in the first candidate list are reordered in ascending order of the prediction errors of these interpolation filter models on the template region of the current block, to obtain a third candidate list; the second interpolation filter model to be used for the current block is determined based on the third candidate list.

In some embodiments, the method further includes that: an encoder determines a first index of the second interpolation filter model in the third candidate list; and signals the first index into a bitstream.

It should be understood that the interpolation filter models in the first candidate list are reordered in ascending order of prediction errors by using the reordering manner, so that when the model in the list is selected as the second interpolation filter model for the current block, fewer codewords can be used to represent the first index of this model in the third candidate list.

In a possible implementation, the operation of determining a second interpolation filter model to be used for the current block based on the third candidate list includes that: a second interpolation filter model to be used for the current block is selected based on prediction errors of the interpolation filter models in the third candidate list. For example, an interpolation filter model with the minimum prediction error in the third candidate list is used as the second interpolation filter model.

In an embodiment of the present disclosure, the encoder/decoder may directly use the third candidate list to determine the second interpolation filter model to be used for the current block; or may first truncate the third candidate list, and then further select the second interpolation filter model therefrom.

Specifically, in other embodiments, the method further includes that: the encoder truncates the first first number of interpolation filter models in the third candidate list to obtain a fourth candidate list (that is, the first number of interpolation filter models with the minimum prediction errors in the third candidate list is used as a final candidate list); determines a second index of the second interpolation filter model in the fourth candidate list; and signals the second index into a bitstream; herein, the first number is greater than the second number.

For the third-type models, in some embodiments, the encoder/decoder may use a second candidate list to record the models used during the decoding of blocks that have been decoded prior to the current block. Specifically, in one possible implementation, the encoder/decoder may buffer the historical interpolation filter models in the second candidate list by using the first-in-first-out principle based on the encoding/decoding/reconstruction order of each block. That is, the second candidate list buffers the historical interpolation filter model by using a first-in-first-out principle.

In some embodiments, the encoder/decoder may clear (i.e. initialize) the second candidate list when starting encoding/decoding for each slice, each tile, each picture, or each coding tree unit (CTU).

For a more detailed description of the second candidate list, refer to the description of the historical interpolation filter models in Section 3.2 below.

In an embodiment of the present disclosure, the fourth candidate list may be a fixed-length list or a variable-length list. That is, the first number may be a fixed value equal to the first predefined number (e.g., the first number is equal to 6) or a variable value. When the first number is a variable value, the encoder/decoder may determine the maximum identifier symbol required for the truncated unary code corresponding to this number, i.e. the identifier symbol required for the index of the last model in the fourth candidate list.

For example, if the first number is equal to 2, the truncated unary code encoding the index of each model in the fourth candidate list is shown in the following table:

| Truncated unary code | Index of the model in the fourth candidate list |
|---|---|
| 0 | 0 |
| 1 | 1 |

For another example, if the first number is equal to 3, the truncated unary code encoding the index of each model in the fourth candidate list is shown in the following table:

| Truncated unary code | Index of the final merged list |
|---|---|
| 0 | 0 |
| 10 | 1 |
| 11 | 2 |

Explanations and examples regarding the fourth candidate list being of variable length may be described in detail in the description of scheme 4 in Section 4.4 below.

For a scheme where the first number is a variable value, in one possible implementation, the first number is equal to the current number of models of the second candidate list.

In some embodiments, the historical interpolation filter models in the second candidate list do not include the interpolation filter models, in the first candidate list, that are used for blocks decoded prior to the current block. That is, the second candidate list buffers interpolation filter models that have not been used for intra prediction via merge list/merge mode.

When reordering the interpolation filter models in the first candidate list, the encoder/decoder may determine the prediction errors based on the template region of the current block. That is, in some embodiments, based on the interpolation filter models in the first candidate list, intra prediction for the template region of the current block is performed to obtain first prediction values of the template region; and prediction errors for corresponding interpolation filter models are determined based on the first prediction values of the template region and the reconstructed values of the template region.

For example, in some embodiments, the encoder/decoder may determine such as SAD (sum of absolute difference), SSE (Sum of Squares due to Error), SATD (sum of absolute transformed difference) or MSE (mean-square error) between first prediction values of the template region and reconstructed values of the template region, so as to obtain the prediction error for the corresponding interpolation filter model. That is, the prediction error is represented by SAD, SSE, SATD, or MSE, and the smaller the SAD, SSE, SATD, or MSE, the smaller the prediction error.

When using an interpolation filter model to determine the first prediction values of samples in the template region, the input values at the input positions of the interpolation filter model may all be the reconstructed values of the corresponding samples. Alternatively, if the first input position of an interpolation filter model in the first candidate list is outside the template region, the input value at the first input position is equal to the reconstructed value at the sample position corresponding to the first input position. If the second input position of an interpolation filter model in the first candidate list is located in the template region, the input value at the second input position is equal to the second prediction value or reconstructed value at the sample position corresponding to the second input position; here, the second prediction value is the prediction value obtained during the decoding of the sample corresponding to the second input position.

For explanations regarding determining the first prediction value, refer to Section 3.2 below.

Whether the encoder/decoder needs to reorder the first candidate list may be controlled by using syntax elements. In some embodiments, the encoder may signal first syntax identifier information into the bitstream; where, when the first syntax identifier information is equal to a first value, it indicates that the interpolation filter models in the first candidate list are to be reordered; when the first syntax identifier information is equal to a second value, it indicates that the interpolation filter models in the first candidate list are not to be reordered. For example, the first value is equal to 1, and the second value is equal to 0.

In embodiments in which the encoder does not reorder the first candidate list, the encoder may determine a third index of the second interpolation filter model in the first candidate list; and signal the third index into a bitstream.

The encoder/decoder may also use the syntax element to control whether to use the encoding/decoding method described in the embodiments of the disclosure for encoding/decoding the current block. In one possible implementation, the encoder signals the second syntax identifier information into the bitstream. When the second syntax identifier information is equal to a third value, it indicates that the encoding/decoding method described in the embodiment of the present disclosure is used to determine the reconstructed block for the current block, that is, the interpolation filter model-based merge mode is used to perform intra prediction for the current block, and it may also be understood that the encoding of the current block is implemented based on the first candidate list. When the second syntax identifier information is equal to the fourth value, it indicates that, the interpolation filter model-based merge mode is not used to perform intra prediction for the current block. For example, the third value is equal to 1 and the fourth value is equal to 0.

In the embodiment of the present disclosure, a certain condition may be set for whether to encode the second syntax identifier information, or the second syntax identifier information may be encoded by default.

Specifically, in some embodiments, the encoder signals the second syntax identifier information into a bitstream when at least one of the following conditions is satisfied:

a first condition including that the number of first-type models is greater than or equal to a fifth threshold;
a second condition including that the number of second-type models is greater than or equal to a sixth threshold;
a third condition including that the number of third-type models is greater than or equal to a seventh threshold; and
a fourth condition including that the number of fourth-type models is greater than or equal to an eighth threshold.

In an embodiment of the present disclosure, the fifth threshold, the sixth threshold, the seventh threshold, and the eighth threshold are all values greater than 0.

When predefined interpolation filter models are not used to fill the first candidate list, the number of interpolation filter models in the finally obtained fourth candidate list may be equal to 1. In this case, the encoder may not encode the first syntax identifier information, and both the encoder and decoder may use this interpolation filter model in the fourth candidate list as the second interpolation filter model to be used for the current block.

In other embodiments, when the number of interpolation filter models in the fourth candidate list is greater than 1, or when the number of interpolation filter models in the fourth candidate list is greater than 1 and the second syntax identifier information is equal to the third value, the second index is signalled into the bitstream.

Of course, in some embodiments, the encoder/decoder may also determine whether the number of interpolation filter models in the first candidate list is equal to 1. When the number of interpolation filter models in the first candidate list is equal to 1, the second interpolation filter model is equal to the interpolation filter model in the first candidate list. When the number of interpolation filter models in the first candidate list is greater than 1, or when the number of interpolation filter models in the first candidate list is greater than 1 and the second syntax identifier information is equal to the third value, the encoder signals the first index, the second index, or the third index into the bitstream.

An embodiment of the present disclosure provides a decoding method, and the method may be applied to the decoder illustrated in FIG. 2. FIG. 21 is a schematic flowchart of an implementation of the decoding method according to the embodiment of the present disclosure. As illustrated in FIG. 21, the method includes the following operations 2101 to 2105.

In operation 2101: a first candidate list is generated based on first interpolation filter models used during the decoding of decoded blocks.

In operation 2102: a second interpolation filter model to be used for the current block is determined based on the first candidate list.

In operation 2103: intra prediction for the current block is performed by using the second interpolation filter model to obtain a prediction block for the current block.

In operation 2104: the bitstream is reconstructed based on the prediction block to obtain a reconstructed block for the current block.

It should be understood that in the embodiment of the present disclosure, the decoder performs intra prediction for the current block by using the first interpolation filter models used during the decoding of decoded blocks. In this way, for the current block, there is no need to additionally calculate the filter coefficients of the interpolation filter model to be used for the current block, thereby saving computational and time overheads and improving decoding efficiency.

In some embodiments, the first interpolation filter models include at least one of:

first-type models, which include interpolation filter models used during decoding of the decoded adjacent blocks of the current block;
second-type models, which include interpolation filter models used during decoding of the decoded non-adjacent blocks of the current block;
third-type models, which include historical interpolation filter models buffered in a second candidate list in decoding order; herein, the historical interpolation filter models refer to models used during the decoding of blocks that have been decoded prior to the current block; and
fourth-type models, which include interpolation filter models used during the decoding of decoded blocks on a reference picture of the current block.

In some embodiments, the decoding method further includes that: at least one third interpolation filter model is determined based on reconstructed values of a reference region of the current block; the first candidate list is generated based on the at least one third interpolation filter model and the first interpolation filter models used during the decoding of the decoded blocks.

In some embodiments, when the picture where the current block is located is an intra-picture, the first candidate list is sequentially filled in the order of first-type models, the second-type models, and the third-type models.

In some embodiments, when the picture where the current block is located is an inter picture, the first candidate list is sequentially filled in the order of the first-type models, the first subclass of models in the fourth-type models, the second-type models, the second subclass of models in the fourth-type models, and the third-type models. The first subclass of models includes interpolation filter models used during the decoding of the decoded blocks at first predefined positions to the right, bottom, and/or bottom-right of the corresponding position of the current block on the reference picture. The second subclass of models includes interpolation filter modes used during the decoding of the decoded blocks at second predefined positions of the current block on the reference picture, the second predefined positions are positions obtained by offsetting the first predefined positions with an available motion vector of the current block.

In some embodiments, the operation of determining a second interpolation filter model to be used for the current block based on the first candidate list includes that: the interpolation filter models in the first candidate list are reordered in ascending order of the prediction errors of these interpolation filter models in the first candidate list on the template region of the current block, to obtain a third candidate list; the second interpolation filter model to be used for the current block is determined based on the third candidate list.

In some embodiments, the operation of determining a second interpolation filter model to be used for the current block based on the third candidate list includes that: the bitstream is parsed to obtain a first index of the second interpolation filter model in the third candidate list; and the second interpolation filter model is obtained from the third candidate list based on the first index.

In some embodiments, the operation of determining a second interpolation filter model to be used for the current block based on the third candidate list includes that: the front first number of interpolation filter models in the third candidate list is truncated to obtain a fourth candidate list; the bitstream is parsed to obtain a second index of the second interpolation filter model in the fourth candidate list; the second interpolation filter model is obtained from the fourth candidate list based on the second index.

In some embodiments, the decoding method further includes that: the historical interpolation filter models are buffered in the second candidate list based on a reconstruction order of the blocks by using the first-in-first-out principle.

In some embodiments, the first number is equal to a current number of models in the second candidate list.

In some embodiments, the historical interpolation filter models in the second candidate list do not include the interpolation filter models, in the first candidate list, that are used for blocks decoded prior to the current block.

In some embodiments, the first number is equal to a first predefined number.

In some embodiments, the number of models in the first candidate list is equal to a second number, and the second number is greater than the first number.

In some embodiments, the second number is equal to a second predefined number.

In some embodiments, if the current number of models in the first candidate list is equal to the second number, the filling of the first candidate list is terminated.

In some embodiments, after terminating the model filling of the first candidate list, if the number of models in the first candidate list is less than the second number, predefined interpolation filter models are used to fill the first candidate list until the number of models in the first candidate list reaches the second number.

In some embodiments, after terminating the model filling of the first candidate list, if the number of models in the first candidate list is less than the second number, predefined interpolation filter models are not used to continue filling the first candidate list.

In some embodiments, the interpolation filter models in the first candidate list are different from each other.

In some embodiments, the interpolation filter models in the first candidate list that do not belong to the second candidate list are different from each other.

In some embodiments, the number of the first-type models in the first candidate list is less than or equal to a first threshold.

In some embodiments, the number of the second-type models in the first candidate list is less than or equal to a second threshold.

In some embodiments, the number of the third-type models in the first candidate list is less than or equal to a third threshold.

In some embodiments, the number of the fourth-type models in the first candidate list is less than or equal to a fourth threshold.

In some embodiments, the decoding method further includes that: based on the interpolation filter models in the first candidate list, intra prediction for the template region of the current block is performed to obtain first prediction values of the template region; and prediction errors for corresponding interpolation filter models are determined based on the first prediction values of the template region and the reconstructed values of the template region.

In some embodiments, if the first input position of an interpolation filter model in the first candidate list is outside the template region, the input value at the first input position is equal to the reconstructed value at the sample position corresponding to the first input position.

In some embodiments, if the second input position of an interpolation filter model in the first candidate list is located in the template region, the input value at the second input position is equal to the second prediction value or reconstructed value at the sample position corresponding to the second input position; here, the second prediction value is the prediction value obtained during the decoding of the sample corresponding to the second input position.

In some embodiments, the decoding method further includes that: the bitstream is parsed to obtain first syntax identifier information; the reordering for interpolation filter models in the first candidate list is performed when the first syntax identifier information is equal to the first value.

In some embodiments, when the first syntax identifier information is equal to a second value, the reordering for the interpolation filter models in the first candidate list is not performed.

In some embodiments, the operation of determining the second interpolation filter model to be used for the current block based on the first candidate list includes that: the bitstream is parsed to obtain a third index of the second interpolation filter model in the first candidate list; and the second interpolation filter model is obtained from the first candidate list based on the third index.

In some embodiments, the decoding method further includes that: the bitstream is parsed to obtain second syntax identifier information; when the second syntax identifier information is equal to a third value, a reconstructed block for the current block is determined by using the decoding method.

In some embodiments, the bitstream is parsed to obtain the second syntax identifier information when at least one of the following conditions is satisfied:

a first condition including that the number of first-type models is greater than or equal to a fifth threshold;
a second condition including that the number of second-type models is greater than or equal to a sixth threshold;
a third condition including that the number of third-type models is greater than or equal to a seventh threshold; and
a fourth condition including that the number of fourth-type models is greater than or equal to an eighth threshold.

In some embodiments, when the number of interpolation filter models in the fourth candidate list is equal to 1, the second interpolation filter model is equal to the interpolation filter model in the fourth candidate list.

In some embodiments, when the number of interpolation filter models in the fourth candidate list is greater than 1, or when the number of interpolation filter models in the fourth candidate list is greater than 1 and the second syntax identifier information is equal to the third value, the bitstream is parsed to obtain a second index.

In some embodiments, when the number of interpolation filter models in the first candidate list is equal to 1, the second interpolation filter model is equal to the interpolation filter model in the first candidate list.

In some embodiments, when the number of interpolation filter models in the first candidate list is greater than 1, or when the number of interpolation filter models in the first candidate list is greater than 1 and the second syntax identifier information is equal to the third value, the bitstream is parsed to obtain a first index, a second index, or a third index.

In some embodiments, the operation of reconstructing the bitstream based on the prediction block to obtain the reconstructed block for the current block includes that: the bitstream is parsed to obtain a residual block of the current block; a reconstructed block for the current block is reconstructed based on the prediction block and the residual block.

It should be noted that the above description of the embodiments of the decoding method is similar to the description of the embodiments of the encoding method described above, and has similar beneficial effects as the embodiments of the encoding method. For technical details not disclosed in the embodiments of the decoding method of the present disclosure, please refer to the description of the embodiments of the encoding method of the present disclosure for understanding.

Hereinafter, an exemplary application of the embodiments of the present disclosure in an actual application scenario will be described.

3. Introduction to the encoding method and decoding method according to the embodiment of the present disclosure

3.1. Overview of the encoding method and decoding method according to the embodiment of the present disclosure

In related schemes, the software complexity of the interpolation filtering technique mainly comes from the fact that: for the current block, the encoder needs to derive the filter coefficients of the interpolation filter models under multiple reconstructed regions and multiple interpolation filter model shapes, while the decoder needs to derive the interpolation filter coefficients under one combination. The derivation process has high computational complexity.

In the embodiments of the present disclosure, it is proposed to construct a merge interpolation filter model candidate list (merge EIP list), that is, the first candidate list mentioned above, and this merge list includes one or more of the following interpolation filter models:

1. Model information of an interpolation filter model used for coding block, e.g., in some embodiments, the model information includes information representing a shape of the interpolation filter model and information representing filter coefficients of the interpolation filter model.
2. Information of the traditional intra prediction mode derived from the gradient histogram of the decoded block via interpolation.

In the embodiment of the present disclosure, the obtained interpolation filter model of the decoded block (the interpolation filter model derived during prediction of the decoded block) is used for prediction on the current block, so that the mode diversity of the interpolation filter models is increased, and at the same time, no additional calculation is required to derive relevant information (such as filter coefficients and/or shape of the interpolation filter model) of the interpolation filter model.

Further, for this merge list, the interpolation filter models in the merge list may be reordered in an ascending order of the errors based on the errors between the prediction values and the reconstructed values on the template by using a template matching technique, so that when the interpolation filter model in the merge list is selected, fewer codewords can be used to represent the index of this mode in the merge list.

3.2. Constructing the merge interpolation filter model candidate list

The merge interpolation filter model candidate list may include the following interpolation filter models from a), b), c) and d):

a) adjacent interpolation filter models (also known as first-type models), which refer to the interpolation filter models used for blocks located in reference row(s) and column(s) adjacent to the current block;
b) non-adjacent interpolation filter models (i.e. second-type models), which refers to the interpolation filter models used for blocks located in reference row(s) and column(s) that are not adjacent to the current block;
c) historical interpolation filter models (i.e., the third-type models), which refers to the interpolation filter models used for stored blocks that have been decoded prior to the current block in the decoding order, which are stored in a buffer;
d) temporal interpolation filter models (i.e. fourth-type models), which refers to the interpolation filter models used for blocks on the reference picture.

In some embodiments, the merged list includes a merged list of interpolation filter models, which is jointly constructed by one or more interpolation filter models from a), b), c), and d), and one or more models calculated based on reconstructed regions around the current block (as described in Section 1).

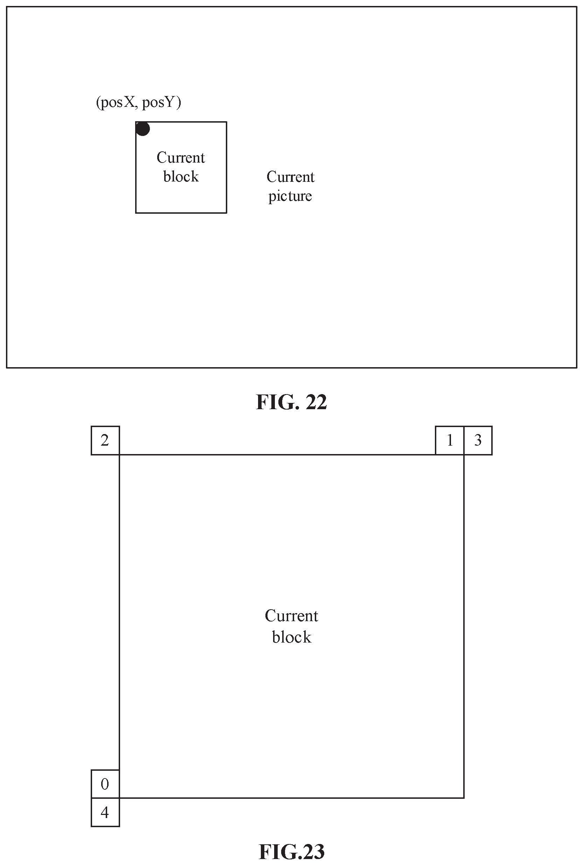

Exemplarily, FIG. 22 is a schematic diagram defining the position of the current block in the current picture to be used in a to d, the above-left position of the current block has coordinates (posX, posY) in the current picture, the width of the current block is Width, and the height is Height, then the bottom-right corner of the current block has coordinates (posX+Width-1, posY+Height-1), and the central position of the current block has coordinates (posX+Width/2, posY+Height/2).

a) Adjacent interpolation filter models

For the current block, predefined positions adjacent to the current block are checked sequentially in a certain order to determine whether the blocks at such positions are reconstructed blocks and whether each of these reconstructed block uses an interpolation filter mode for prediction. If yes, and if the interpolation filter model used for prediction is not duplicate with the models in the constructed merge interpolation filter model candidate list, this interpolation filter model used for prediction is added to the merge list.

FIG. 23 is an example where there are five adjacent positions labeled 0 to 4 around a current block. Here, the position of the above-left corner of the current block is defined as coordinates (posX, posY), the width of the current block is Width, and the height of the current block is Height, and then the relative coordinates of the five predefined positions with respect to the above-left corner position are as follows: position 0 at coordinates (-1, Height-1), position 1 at coordinates (Width-1,-1), position 2 at coordinates (-1,-1), position 3 at coordinates (Width, -1), and position 4 at coordinates (-1, Height). Depending on the partitioning tree to which the current block belongs, these five positions may partially originate from the same reconstructed block. The predefined positions are checked in a certain order, and the acquired interpolation filter models are added to the merge list without duplication; for example, in this case, the predefined order is the order of position labels, i.e., 0 to 4.

In some embodiments, the predefined adjacent positions may be other positions on rows and columns adjacent to the current block, the number of predefined adjacent positions may not be five, and the predefined order may also be different.

b) Non-adjacent interpolation filter models

For the current block, predefined positions non-adjacent to the current block are checked sequentially in a certain order to determine whether the blocks at such positions are reconstructed blocks and whether each of these reconstructed block uses an interpolation filter mode for prediction. If yes, and if the interpolation filter model used for prediction is not duplicate with the models in the constructed merge interpolation filter model list, this interpolation filter model used for prediction is added to the merge interpolation filter model candidate list.

In some embodiments, the checking of predefined non-adjacent positions are performed in two rounds, the first round includes 59 positions and the second round includes 28 positions. Here, when describing the relative position with respect to the above-left corner (posX, posY) of the current block, W represents the width (Width) of the current block, and H represents the height (Height) of the current block. For example, 2H represents twice the height, H/2 represents half the height, and 3/2 H represents a half times the height.

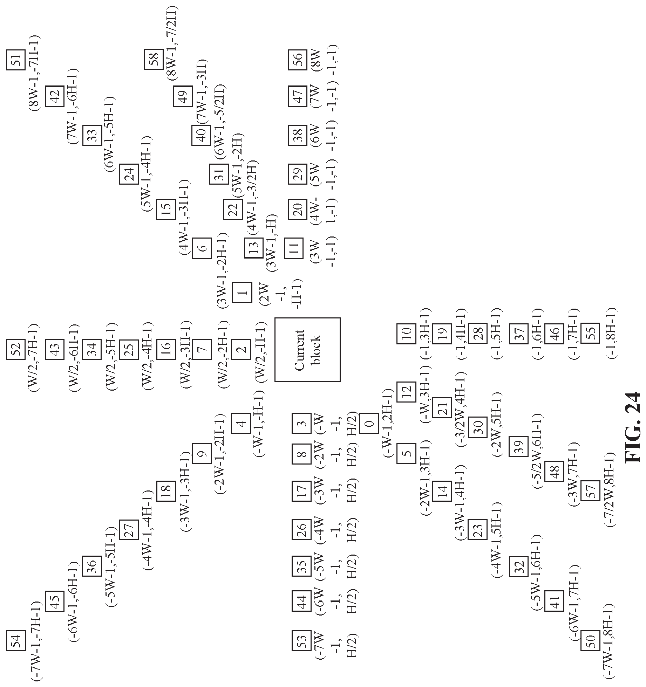

Exemplarily, in one possible implementation, as illustrated in FIG. 24, which shows 59 non-adjacent positions in the first round, the checking order follows the ascending order of labels in the FIG. 24, where the relative positions of the coordinates of each position with respect to above-left corner coordinates (posX, posY) of the current block are identified below each label position illustrated in FIG. 24.

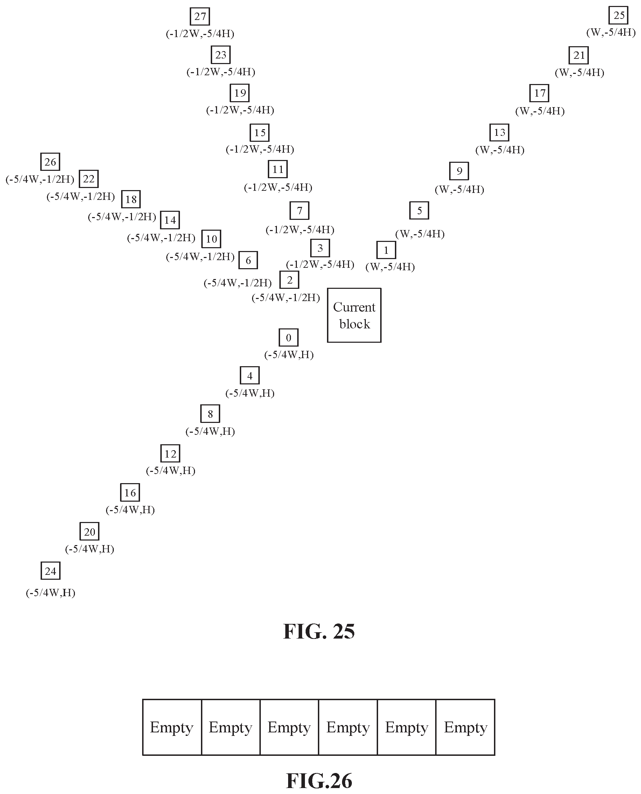

Exemplarily, in one possible implementation, as illustrated in FIG. 25, which shows 28 non-adjacent positions in the second round, the checking order follows the ascending order of labels in the FIG. 25, where the relative positions of the coordinates of each position with respect to above-left corner coordinates (posX, posY) of the current block are identified below each label position illustrated in FIG. 25.

In some embodiments, the predefined non-adjacent positions may be other positions on rows and/or columns that are not adjacent to the current block, the number of predefined adjacent positions is different from the number in the above two rounds, and the predefined order may also be different. Specifically, it may be some positions near the positions defined in FIG. 24 and FIG. 25 of the this scheme.

c) Historical interpolation filter models

In a) and b), although most positions within a wide region around the current block have been checked to determine whether the interpolation filter mode is selected, whether non-duplicate interpolation filter models exist, and whether such models should be added to the merge list, there are still many cases where the merge list with a given length cannot be fully filled. In the embodiments of the present disclosure, it is proposed to further add historical interpolation filter models to the merged list.

First, based on the order in which each block is reconstructed, a list (such as the initialized historical interpolation filter model list with length N4 illustrated in FIG. 26, that is, the second candidate list) by using first-in-first-out principle is used to record whether there is a non-duplicate interpolation filter model for each block. When decoding each slice, the historical interpolation filter model list is initialized and cleared.

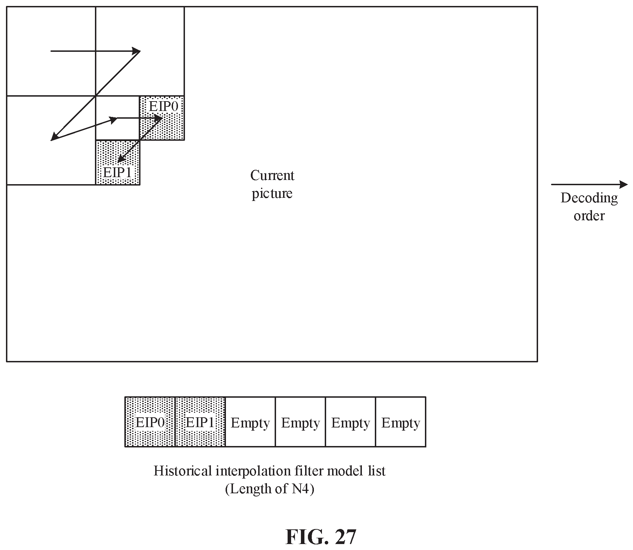

Subsequently, interpolation filter model(s) is/are then added in the order in which each block is decoded, for example, as illustrated in FIG. 27.

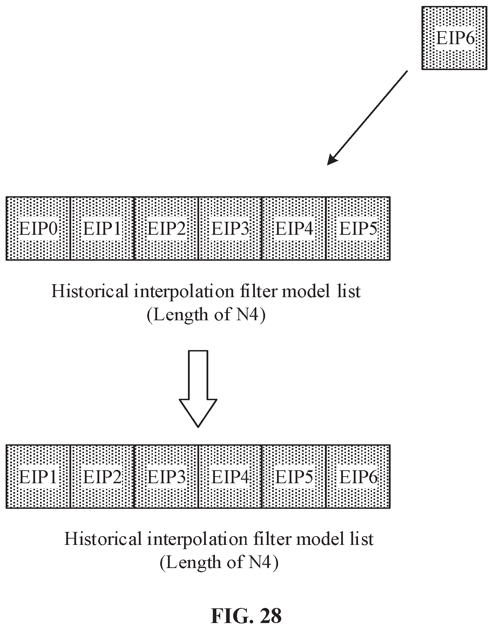

Before adding a newly decoded interpolation filter model to the historical interpolation filter model list, a duplicate checking operation is performed to ensure that the newly decoded interpolation filter model does not duplicate any existing models in the list. Non-duplicate models are then added to the historical interpolation filter model list. When the historical interpolation filter model list is full, a newly decoded non-duplicate interpolation filter model is placed at the last position of the historical interpolation filter model list, while the interpolation model at the first position of the historical interpolation filter model list is removed, and all other models are shifted forward by one position in their existing order. FIG. 28 illustrates the updating of the historical interpolation filter model list by using a first-in-first-out principle.

The models in the historical interpolation filter model list are used to continue to fill the merge list without duplication when the merge list has not reached the merge list length after models for adjacent and non-adjacent positions are filled in the merge list.

The historical interpolation filter model list may not only be initialized (emptied) per tile as described in this scheme, but also initialized at the beginning of each slice, each picture, or each coding tree unit (CTU).

d) Temporal interpolation filter models (i.e., the first subclass model in the fourth-type models, available only when the current picture is an inter-coded picture)

The temporal interpolation filter models are acquired from the reference picture of the current picture when the current picture is an inter-coded picture. Since the reconstructed portion of the reference picture is greater than the current picture, in addition to the reconstructed portion located on the above, left, above-left, bottom-left, and/or above-right sides of the corresponding position of the current block in the reference picture, the reconstructed blocks and their interpolation filter models may also be obtained from of the right, bottom, and/or bottom-right positions.

In some embodiments, the interpolation filter models are obtained by checking several positions in the reference picture. The corresponding position in the reference picture is found through the coordinates of the current block in the current picture.

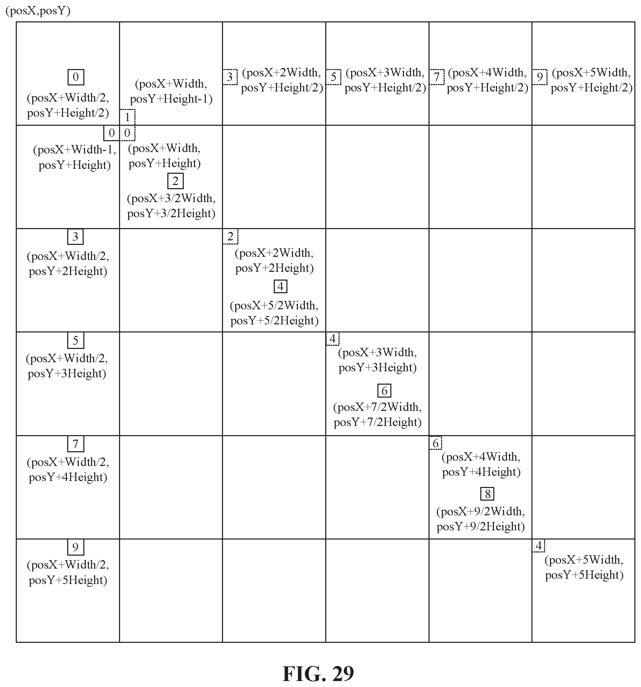

Exemplarily, in one possible implementation, the positions in the reference picture checked for obtaining the interpolation filter model are as illustrated in FIG. 29, which illustrates 10 positions numbered 0 to 9 (in reference picture) for obtaining the interpolation filter models. Herein, the checking order is 0-> 1->...-> 9, the position ⬚ is preferentially checked, and the position □ is used instead of the ⬚ position when the ⬚ position is unavailable. Unavailable refers to positions being in a picture, slice, or outside a specified region, and does not mean that the interpolation filter mode is not used at the position.

Each position is checked in the given order to determine whether an interpolation filter model exists; if the model exists and is not a duplicate of the existing models in the merge list, this model is added to the merge list.

In some embodiments, temporal positions may also include other positions in the reference picture, such as those near the positions listed in FIG. 29.

Offset temporal interpolation filter models (that is, the second subclass model in the fourth-type models)

In addition to the aforementioned temporal positions, temporal position offsets may be guided by motion vectors to obtain offset temporal positions, and interpolation filter models are then obtained from the offset temporal positions. For example, an available motion vector may be obtained from adjacent blocks around the current block in a certain order, where the adjacent blocks are the blocks at the five adjacent positions defined in a). The blocks at the selected positions are checked sequentially in the order specified in a) to determine whether an available motion vector exists. If so, this vector is used to derive offset positions 0' to 9' from the positions 0 to 9 in FIG. 29 via motion vector translation. The positions 0' to 9' in reference picture pointed to by the motion vector (e.g., in bidirectional prediction, the motion vector may be derived from one of the two reference pictures) is then checked in order to determine whether an interpolation filter model exists at positions 0' to 9'. If such a model exists and is not a duplicate of the existing models in the merge list, this model is added to the merge list.

In some embodiments, offset temporal positions may also include other positions in the reference picture, but the determination of these positions is related to the motion vector. For example, some positions near those listed in FIG. 29.

Order of constructing the merge list

In the embodiment of the present disclosure, the merge list should include one or more of the interpolation filter models obtained from a), b), c), and d). In some embodiments, when constructing a merge list based on a), b), c), and d), a specific order should be followed for filling. For example, a possible filling order is as follows:

1. adjacent interpolation filter models ;
2. temporal interpolation filter models (available only when the current picture is an inter-coded picture);
3. the first round of non-adjacent interpolation filter models;
4. the second round of non-adjacent interpolation filter models;
5. offset temporal interpolation filter models (available only when the current picture is an inter-coded picture);
6. Historical interpolation filter models.

In addition to the filling order described, other orders may be used to fill the merge list.

In some embodiments, the merge list may be a defined length, and when the length is exceeded, no further interpolation filter model is added to the merge list.

Further, in some embodiments, each type of models within the merge list may have a fixed length, for example, the number of adjacent interpolation filter models is not greater than N5, and the number of temporal interpolation filter models is not greater than M1, and so on.

The merged list may include only a), b), c), and d) listed above, or may also include one or more interpolation filter models calculated from the reconstructed sample values around the current block as described in Section 1.

In some embodiments, whether to merge the interpolation filter mode is limited by some high-level syntax elements, such as sequence-level, frame-level, slice-level syntax elements; these syntax elements control whether the merge interpolation filter mode is allowed for the current range. These syntax elements may be independent or may have dependencies on the high-level syntax elements of the interpolation filter mode itself.

3.2. Reordering of the merge interpolation filter model candidate list

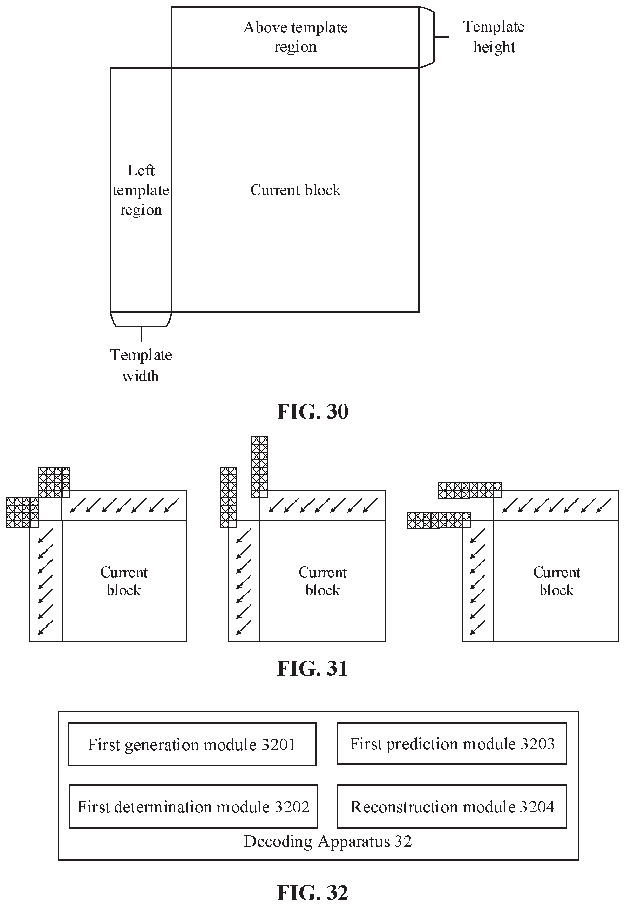

In the embodiment of the present disclosure, two methods for reordering the interpolation filter models in the merge interpolation filter model candidate list are proposed. FIG. 30 is a schematic diagram of a template region used for reordering respective models, and the template region is multiple rows (template height) above the current block and multiple columns (template width) on the left side of the current block. Herein, the template height/width may be changed based on the shape of the current block, for example, a larger template height/width is used for a large block, and the template height and template width may also be different.

The models in the merge interpolation filter model candidate list are used sequentially, and prediction on the above template region and the left template region is performed. The prediction may be performed in a predefined direction, such as diagonal direction, horizontal direction, vertical direction, etc. For example, as illustrated in FIG. 31, the prediction values are generated on the template by using an interpolation filter model in the diagonal direction.

There are two calculation methods for generating prediction values on template by using interpolation filter models.

1. The prediction method may be the same as that used for the current block, when predicting non-above-left positions in the left and above templates, the input of some interpolation filter models uses prediction values on the template. The advantage of this method is that it can better determine the actual prediction values of the model on the template region. However, the disadvantage is that, similar to the prediction for the current block, since some prediction values need to be used as the input of the interpolation filter model, there are inter-sample dependencies. For example, if prediction is performed in a diagonal order, the prediction for sample values on the current diagonal of the template requires the prediction values of the previous diagonal, i.e., there is a diagonal dependency.
2. Since the template region has been reconstructed, all the reconstructed sample values can be used as the inputs of the interpolation filter models. Although this is different from the prediction method for the current block and may result in lower template matching accuracy, it offers better parallelization because all positions on the template can be calculated simultaneously.

The difference between the prediction values, on the template region, of each interpolation filter model in the merge interpolation filter model candidate list and the reconstructed values is taken as a cost; the interpolation filter models in the merge list are sorted in ascending order of costs, and the sorted merge list is used as the final merge list. The index of the interpolation filter model for predicting the current block within this merge list is encoded into the bitstream and parsed from the bitstream; this index is used to obtain the interpolation filter model for current block prediction from the reordered merge list when the merge interpolation filter mode is selected.

The reordering technique may involve reordering the order of interpolation filter models in the merge interpolation filter model candidate list based on template costs, or may involve selecting a subset of the merge list based on template costs (sorted in ascending ordering) to form the final merged list.

In some embodiments, the sorting process may also be performed only on the above template or the left template.

In some embodiments, whether the reordering technique is used is limited by some high-level syntax elements, such as sequence-level, frame-level, slice-level syntax elements; these syntax elements (the first syntax identifier information) control whether the reordering for merge interpolation filter modes is allowed in the current range. These syntax elements may be independent, or may be dependent on one or more of the high-level syntax elements of the interpolation filter mode, the merging interpolation filter mode, and the template matching techniques.

4. Implementation process

In this scheme, based on the method described in Section 2 as an example, the merging of interpolation filter modes and reordering technique for the merged interpolation filter modes are incorporated. Alternatively, it may also be based on interpolation filter modes different from those described in Section 2 to perform merging of interpolation filter modes and reordering of merge interpolation filter modes.

When encoding and decoding the merge interpolation filter mode identifier, the following implementations may be adopted.

1. The merge interpolation filter mode identifier (i.e., the second syntax identifier information) may be encoded and decoded for each block where the interpolation filter prediction is allowed, to indicate whether the merge interpolation filter mode is selected.

In some embodiments, in order to avoid waste on encoding and decoding this identifier for blocks where a candidate list of available merge interpolation filter models cannot be constructed, some default model may be used in such situation. For example, when there are no available interpolation filter models in the merge list or when the merge list is not fully filled, the default models may be used to fill or fully fill the list.

2. The merge interpolation filter mode identifier may also be encoded and decoded based on certain conditions to indicate whether the merge interpolation filter mode is selected. This is because in some cases, a candidate list of available merge interpolation filter models cannot be constructed for the current block since no interpolation filter models are available from a), b), c), and d); and thus encoding and decoding the merge interpolation filter mode identifier in such cases would result in codeword waste. The satisfaction of the certain conditions is intended to ensure that the merge list constructed for the current block includes an available model or multiple available models.

In some embodiments, certain conditions may be at least one of the conditions 1-5 described below:

Condition 1, when at least N6 blocks (N6 > 1) at adjacent positions use interpolation filter modes, this is referred to as the first condition;

Condition 2, when at least M2 blocks (M2 > 0) at non-adjacent positions use interpolation filter modes, this is referred to as the second condition;

Condition 3, when the number of historical interpolation filter models is at least M3 (M3 > 0), this is referred to as the third condition;

Condition 4, when the number of temporal interpolation filter models is at least M4 (M4 > 0), this is referred to as the fourth condition; and

Condition 5, combinations of the above conditions 1 to 4.

When encoding and decoding the merge interpolation filter mode identifier based on certain conditions, the default models may also be used to fill the merge list.

Exemplarily, in some embodiments, certain conditions may be at least one of the following:

Condition 1. whether the blocks in the five adjacent positions (as shown by positions 0-4 in FIG. 23) around the current block use interpolation filter prediction modes is checked. If so, encode and decode the merge interpolation filter mode identifier. In some embodiments, these positions may be a different set of positions, and the order may also be different;

Condition 2. when no block using the interpolation filter prediction mode are found in condition 1, non-adjacent positions as specified in b) are further checked, and when any such block is found, the merge interpolation filter mode identifier is encoded and decoded; and

Condition 3. when no block using the interpolation filter prediction mode are found in conditions 1 and 2, historical interpolation filter models as specified in c) are further checked, and when any such model is found, the merge interpolation filter mode identifier is encoded and decoded.

When merge interpolation filter mode identifier is encoded or decoded as true, the index of the merge interpolation filter model is further encoded or decoded.

4.1. Scheme 1

Based on the intra prediction and/or inter prediction schemes described in Sections 1-2, a merge interpolation filter mode is incorporated, and a merge list with a maximum length of 12 is constructed. The list includes models from a), b), c) and d), which are added in the order described in Section 3.1, where the historical interpolation filter model list has a length of 6.

The merge list is enabled when blocks in at least one or more positions among the five adjacent positions around the current block use the interpolation filter modes, and the list may include 1 to 12 interpolation filter models. In some embodiments, the encoder/decoder applies a reordering technique: when the number of models is greater than 1, the reordering is performed and the maximum length of the final merge list is limited to 6, which means that the final merge list may include 1 to 6 models. In some embodiments, the index of the selected model is encoded and decoded by using a truncated unary code capable of representing up to 6 symbols, as shown in the table below:

| Truncated unary codeword | Final merge list index |
|---|---|
| 0 | 0 |
| 10 | 1 |
| 110 | 2 |
| 1110 | 3 |
| 11110 | 4 |
| 11111 | 5 |

4.1.1 Parsing syntax elements

In some embodiments, the parsing of syntax elements related to the interpolation filter prediction mode at the coding unit level is shown in the following table:

Coding unit syntax

| coding_unit(x0,y0,cbWidth,cbHeight,cqtDepth,treeType,modeType) { | Descriptor |
|---|---|
| ...... // Encoding and decoding mode-related syntax elements before the interpolation filter model | |
| if (spsEipAllowed) // When a high-layer syntax element, such as an SPS identifier, allows the use of an interpolation filter mode, encoding and decoding the interpolation filter identifier | |
|   cu_eip_flag[x0][y0] | ae(v) |
|   if (cu_eip_flag) { | |
|     if (hasMergeFlag) // When the condition described above is satisfied, for example, block(s) in at least one position among the five adjacent positions uses an interpolation filter mode | |
|     eip_merge_flag[x0][y0] // Encoding and parsing the merge mode identifier | ae(v) |
|   if (eip_merge_flag) | |
|     eip_merge_idx[x0][y0] // Encoding and parsing the merge mode index | |
|   else | |
|     eip_modes() // Encoding and parsing interpolation filter model combinations in non-merge mode | |
|   } | |
|   else ... // If not an interpolation filter mode, encoding and decoding subsequent modes | |
| } | |

(continued)

| eip_modes() { | Descriptor |
|---|---|
| first_mode[x0][y0] // encoding an identifier indicating whether it is the first combination, i.e. (EIP_AL_A_L, EIP_FILTER_S) | ae(v) |
| if (!first_mode[x0][y0] && numOtherModes > 1) // If not the first combination and more than one other combinations may be use | |
| other_mode[x0][y0] // Encoding selected other combinations | ae(v) |
| } | |

The cu_eip_flag is the enable identifier of the coding unit-level interpolation filtering technique; if it is 1, it indicates that the interpolation filtering technique is used for the current luma block; if it is 0, it indicates that the interpolation filtering technique is not used. If the syntax element does not exist in the bitstream, it defaults to 0.

The eip_merge_flag is the enable identifier of the coding unit-level merge interpolation filtering technique; if it is 1, it indicates that the merge interpolation filtering technique is used for the current luma block; if it is 0, it indicates that the merge interpolation filtering technique is not used. If the syntax element does not exist in the bitstream, it defaults to 0.

The eip_merge_idx represents the index of the merge interpolation filter model in candidate list when using the merge interpolation filtering technique. This index is used to obtain the selected interpolation filter model from the list. In this scheme, the maximum length of the reordered merge interpolation filter model candidate list is 6.

The first_mode indicates whether the first interpolation filter combination is selected in a non-merge mode, that is, (EIP_AL_A_L, EIP_FILTER_S); if it is 1, it indicates that the first interpolation filter combination is selected; if it is 0, it indicates that the first interpolation filter combination is not selected. If the syntax element does not exist in the bitstream, it defaults to 0.

The other_mode indicates which other combination is selected when the first interpolation filter combination is not selected. When only one other combination is available for the current block, the syntax element does not need to be encoded. If the syntax element does not exist in the bitstream, it defaults to 0.

4.1.2 Reconstructing the current block

The specific mode for prediction is determined based on the parsed syntax elements. If the interpolation filter prediction mode is selected for the current block, whether the interpolation filter prediction mode is a merge interpolation filter mode is determined.

If it is not a merge interpolation filter mode, the process of obtaining the interpolation filter model and the process of prediction are the same as those described in Section 2.3.

If it is a merge interpolation filter mode, first, a merge list with a maximum length of 12 is constructed based on the method described in Section 3.2. When less than 12 models are filled, no default models are required to further fill the list. In the process of adding models to the merge list, a duplicate checking operation is required, to ensure that the interpolation filter models added in the merge list are not duplicated. Whether to perform reordering is determined based on whether the number of models in the merging list is greater than 1.

1. If the reordering is not required, the current list is directly used as the final merge list.
2. If the reordering is required, prediction values on the template are generated by using interpolation method with all reconstructed values (as described in Section 3.2), and SAD between these prediction values and reconstructed values on template is taken as a cost. The interpolation filter models are sorted in ascending order of SAD costs; the first 6 interpolation filter models with the smallest SAD costs are selected, and used as the final merge list in ascending order of SAD. In some cases, the number of models may be less than 6; in such cases, reordering is still performed in some embodiments, and all models are used as the final merge list in the sorted order.

The interpolation filter model in the final merge list is obtained based on the decoded eip_merge_idx for prediction, and the correspondence between the binary identifier of eip_merge_idx and the corresponding index in the final merge list is as follows:

| Binary identifier | Final merge list index |
|---|---|
| 0 | Index 0 |

(continued)

| Binary identifier | Final merge list index |
|---|---|
| 10 | Index 1 |
| 110 | Index 2 |
| 1110 | Index 3 |
| 11110 | Index 4 |
| 11111 | Index 5 |

After obtaining the interpolation filter model, the remaining prediction and transform-related operations remain identical to those described in Sections 2.3 and 2.4.

In some embodiments, some of the conditions (hasMergeFlag) described in Section 4.1.1 may also be replaced with the following conditions described at the beginning of Section 4:

Condition 1, when at least N6 blocks (N6 > 1) at adjacent positions use interpolation filter modes;
Condition 2, when at least M2 blocks (M2 > 0) at non-adjacent positions use interpolation filter modes;
Condition 3, when the number of historical interpolation filter models is at least M3 (M3 > 0);
Condition 4, when the number of temporal interpolation filter models is at least M4 (M4 > 0); and
Condition 5, combinations of the above conditions 1 to 4.

Specifically, first of all, five adjacent positions are checked sequentially. If the block(s) on the position(s) uses the interpolation filter mode, hasMergeFlag is true, otherwise, the blocks on the non-adjacent positions as specified in b) are further checked. If a block on the non-adjacent position uses the interpolation filter mode, the hasMergeFlag is returned as true; otherwise, the hasMergeFlag is false.

Alternatively, first of all, five adjacent positions are checked sequentially. If the block(s) on the position(s) uses the interpolation filter mode, hasMergeFlag is true; otherwise, the blocks on the non-adjacent positions as specified in b) are further checked. If a block on the non-adjacent position uses the interpolation filter mode, hasMergeFlag is true; otherwise, otherwise, whether the historical interpolation filter models specified in c) exists are further checked. If such models exist, the hasMergeFlag is true; otherwise, the hasMergeFlag is false.

In some embodiments, when the merge interpolation filter model candidate list constructed in Section 4.1.2 has fewer than 12 models, the list is first filled with the default models, followed by reordering and reduction to 6 models.

4.2. Scheme 2

Based on the intra prediction and/or inter prediction schemes described in Sections 1-2, a merge interpolation filter mode is incorporated, and a merge list with a maximum length of 12 is constructed. The list includes models from a), b), c) and d), which are added in the order described in Section 3.1, where the historical interpolation filter model list has a length of 6.

The merge list is enabled when blocks in at least one or more positions among the five adjacent positions around the current block use the interpolation filter modes, and the list may include 1 to 12 interpolation filter models. In some embodiments, the reordering technique is applied: when the number of models is greater than 1, the reordering is performed, and a final interpolation filter model is determined for merging interpolation filter modes.

4.2.1 Parsing syntax elements

In some embodiments, the parsing of syntax elements related to the interpolation filter prediction mode at the coding unit level is shown in the following table:

Coding unit syntax

| coding_unit(x0,y0,cbWidth, cbHeight,cqtDepth,treeType,modeType) { | Descriptor |
|---|---|
| ...... // Encoding and decoding mode-related syntax elements before the interpolation filter model | |

(continued)

| | |
|---|---|
| if (spsEipAllowed) // When a high-layer syntax element, such as an SPS identifier, allows the use of an interpolation filter mode, encoding and decoding the interpolation filter identifier | |
|     cu_eip_flag[x0][y0] | ae(v) |
|   if (cu_eip_flag) { | |
|       if (hasMergeFlag) // When the condition described above is satisfied, for example, block(s) in at least one position among the five adjacent positions uses an interpolation filter mode | |
|         eip_merge_flag[x0][y0] // Encoding and parsing the merge mode identifier | ae(v) |
|     if (!eip_merge_flag) | |
|       eip_modes() // Encoding and parsing interpolation filter model combinations in non-merge mode | |
|   } | |
|     else ... // If not an interpolation filter mode, encoding and decoding subsequent modes | |
| } | |
| | |
| eip_modes() { | Descriptor |
|     first_mode[x0][y0] // encoding an identifier indicating whether it is the first combination, i.e. (EIP_AL_A_L, EIP_FILTER_S) | ae(v) |
|     if (!first_mode[x0][y0] && numOtherModes > 1) // If not the first combination and more than one other combinations may be use | |
|       other_mode[x0][y0] // Encoding selected other combinations | ae(v) |
|         } | |

The cu_eip_flag is the enable identifier of the coding unit-level interpolation filtering technique; if it is 1, it indicates that the interpolation filtering technique is used for the current luma block; if it is 0, it indicates that the interpolation filtering technique is not used. If the syntax element does not exist in the bitstream, it defaults to 0.

The eip_merge_flag is the enable identifier of the coding unit-level merge interpolation filtering technique; if it is 1, it indicates that the merge interpolation filtering technique is used for the current luma block; if it is 0, it indicates that the merge interpolation filtering technique is not used. If the syntax element does not exist in the bitstream, it defaults to 0. Since there is only one interpolation filter model in the final merge list in this scheme, there is no need to encode and decode the list index as in the previous scheme.

The first_mode indicates whether the first interpolation filter combination is selected in a non-merge mode, that is, (EIP_AL_A_L, EIP_FILTER_S); if it is 1, it indicates that the first interpolation filter combination is selected; if it is 0, it indicates that the first interpolation filter combination is not selected. If the syntax element does not exist in the bitstream, it defaults to 0.

The other_mode indicates which other combination is selected when the first interpolation filter combination is not selected. When only one other combination is available for the current block, the syntax element does not need to be encoded. If the syntax element does not exist in the bitstream, it defaults to 0.

4.2.2 Reconstructing the current block

The specific mode for prediction is determined based on the parsed syntax elements. If the interpolation filter prediction mode is selected for the current block, whether the interpolation filter prediction mode is a merge interpolation filter mode is determined.

If it is not a merge interpolation filter mode, the process of obtaining the interpolation filter model and the process of prediction are the same as those described in Section 2.3.

If it is a merge interpolation filter mode, first, a merge list with a maximum length of 12 is constructed based on the method described in Section 3.2. When less than 12 models are filled, no default models are required to further fill the list. In the process of adding models to the list, a duplicate checking operation is required, to ensure that the interpolation filter models added in the merge list are not duplicated. Whether to perform reordering is determined based on whether the number of models in the merging list is greater than 1.

1. If the reordering is not required, the current list is directly used as the final merge list.

2. If the reordering is required, prediction values on the template are generated by using interpolation method with all reconstructed values (as described in Section 3.2), and SAD between these prediction values and reconstructed values on template is taken as a cost. The interpolation filter models are sorted in ascending order of SAD costs; the interpolation filter models with the smallest SAD costs are used as the final interpolation filter models for the merge mode.

After obtaining the interpolation filter model, the remaining prediction and transform-related operations remain identical to those described in Sections 2.3 and 2.4.

In some embodiments, some conditions (hasMergeFlag) in Section 4.2.1 may also be replaced with those described at the beginning of Section 4:

Condition 1, when at least N6 blocks (N6 > 1) at adjacent positions use interpolation filter modes;
Condition 2, when at least M2 blocks (M2 > 0) at non-adjacent positions use interpolation filter modes;
Condition 3, when the number of historical interpolation filter models is at least M3 (M3 > 0);
Condition 4, when the number of temporal interpolation filter models is at least M4 (M4 > 0); and
Condition 5, combinations of the above conditions 1 to 4.

Specifically, first of all, five adjacent positions are checked sequentially. If the block(s) on the position(s) uses the interpolation filter mode, hasMergeFlag is true, otherwise, the blocks on the non-adjacent positions as specified in b) are further checked. If a block on the non-adjacent position uses the interpolation filter mode, the hasMergeFlag is returned as true; otherwise, the hasMergeFlag is false.

Alternatively, first of all, five adjacent positions are checked sequentially. If the block(s) on the position(s) uses the interpolation filter mode, hasMergeFlag is true; otherwise, the blocks on the non-adjacent positions as specified in b) are further checked. If a block on the non-adjacent position uses the interpolation filter mode, the hasMergeFlag is true; otherwise, otherwise, whether the historical interpolation filter models specified in c) exists are further checked. If such models exist, the hasMergeFlag is true; otherwise, hasMergeFlag is false.

In some embodiments, when the merge interpolation filter model candidate list constructed in Section 4.2.2 has fewer than 12 models, the list is first filled with the default models, followed by reordering and reduction to 1 model.

In some embodiments, the constructed merge list is not required to be reduced to 6 or fewer models after reordering; instead, its size is maintained at N7 or fewer models, where N7 is a value within the range from 1 to the maximum length of the merge list.

4.3. Scheme 3

Scheme 3 does not rely on specific conditions when encoding and decoding the merge interpolation filter mode identifier.

Based on the intra prediction and/or inter prediction schemes described in Sections 1-2, a merge interpolation filter mode is incorporated, and a merge list with a maximum length of 12 is constructed. The list includes models from a), b), c) and d), which are added in the order described in Section 3.1, where the historical interpolation filter model list has a length of 6.

The list may include 1 to 12 interpolation filter models. In some embodiments, the encoder/decoder applies the reordering technique: when the number of models is greater than 1, the reordering is performed, and at most 6 interpolation filter model is determined for constructing the final merge list.

When there are no models (0 models) in the final merge list, the encoding end encodes the merge mode identifier as false.

4.3. 1 Parsing syntax elements

In some embodiments, the parsing of syntax elements related to the interpolation filter prediction mode at the coding unit level is shown in the following table:

Coding unit syntax

| coding_unit(x0,y0,cbWidth,cbHeight,cqtDepth,treeType,modeType) { | Descriptor |
| --- | --- |

(continued)

| | Descriptor |
|---|---|
| ...... // Encoding and decoding mode-related syntax elements before the interpolation filter model | |
| if (spsEipAllowed) // When a high-layer syntax element, such as an SPS identifier, allows the use of an interpolation filter mode, encoding and decoding the interpolation filter identifier | |
|    cu_eip_flag[x0][y0] | ae(v) |
| if (cu_eip_flag) { | |
|    if (hasMergeFlag) // When the condition described above is satisfied, for example, block(s) in at least one position among the five adjacent positions uses an interpolation filter mode | |
|      eip_merge_flag[x0][y0] // Encoding and parsing the merge mode identifier | ae(v) |
|    if (eip_merge_flag) | |
|      eip_merge_idx[x0][y0] // Encoding and parsing the merge mode index | |
|    else | |
|    eip_modes() // Encoding and parsing interpolation filter model combinations in non-merge mode | |
| } | |
| else ... // If not an interpolation filter mode, encoding and decoding subsequent modes | |
| } | |
| | |
| eip_modes() { | Descriptor |
|    first_mode[x0][y0] // encoding an identifier indicating whether it is the first combination, i.e. (EIP_AL_A_L, EIP_FILTER_S) | ae(v) |
|    if (!first_mode[x0][y0] && numOtherModes > 1) // If not the first combination and more than one other combinations may be use | |
|      other_mode[x0][y0] // Encoding selected other combinations | ae(v) |
|    } | |

The cu_eip_flag is the enable identifier of the coding unit-level interpolation filtering technique; if it is 1, it indicates that the interpolation filtering technique is used for the current luma block; if it is 0, it indicates that the interpolation filtering technique is not used. If the syntax element does not exist in the bitstream, it defaults to 0.

The eip_merge_flag is the enable identifier of the coding unit-level merge interpolation filtering technique; if it is 1, it indicates that the merge interpolation filtering technique is used for the current luma block; if it is 0, it indicates that the merge interpolation filtering technique is not used. If the syntax element does not exist in the bitstream, it defaults to 0.

The eip_merge_idx represents the index of the merge interpolation filter model in candidate list when using the merge interpolation filtering technique. This index is used to obtain the selected interpolation filter model from the list. In some embodiments, the maximum length of the reordered merge interpolation filter model candidate list is 6.

The first_mode indicates whether the first interpolation filter combination is selected in a non-merge mode, that is, (EIP_AL_A_L, EIP_FILTER_S); if it is 1, it indicates that the first interpolation filter combination is selected; if it is 0, it indicates that the first interpolation filter combination is not selected. If the syntax element does not exist in the bitstream, it defaults to 0.

The other_mode indicates which other combination is selected when the first interpolation filter combination is not selected. When only one other combination is available for the current block, the syntax element does not need to be encoded. If the syntax element does not exist in the bitstream, it defaults to 0.

4.3.2 Reconstructing the current block

The specific mode for prediction is determined based on the parsed syntax elements. If the interpolation filter prediction mode is selected for the current block, whether it is a merge interpolation filter mode is determined.

If it is not a merge interpolation filter mode, the process of obtaining the interpolation filter model and the process of prediction are the same as those described in Section 2.3.

If it is a merge interpolation filter mode, first, a merge list with a maximum length of 12 is constructed based on the method described in Section 3.2. When less than 12 models are filled, no default models are required to further fill the merge list. In the process of adding models to the merge list, a duplicate checking operation is required, to ensure that the interpolation filter models added in the merge list are not duplicated. Whether to perform reordering is determined based on whether the number of models in the merging list is greater than 1.

1. If the reordering is not required, the current list is directly used as the final merge list.
2. If the reordering is required, prediction values on the template are generated by using interpolation method with all reconstructed values (as described in Section 3.2), and SAD between these prediction values and reconstructed values on template is taken as a cost. The interpolation filter models are sorted in ascending order of SAD costs; the first 6 interpolation filter models with the smallest SAD costs are selected, and used as the final merge list in ascending order of SAD. In some cases, the number of models may be less than 6; in such cases, reordering is still performed in some embodiments, and all models are used as the final merge list in the sorted order.

When constructing the merge interpolation filter model candidate list, the encoder skips blocks that would construct an empty merge interpolation filter model candidate list, and encodes eip_merge_flag as false when making a decision, and thus, the decoder will never encounter a scenario where eip_merge_flag is decoded as true but an empty merge interpolation filter model candidate list is generated.

After obtaining the interpolation filter model, the remaining prediction and transform-related operations remain identical to those described in Sections 2.3 and 2.4.

In some embodiments, when the merge interpolation filter model candidate list constructed in Section 4.3.2 has fewer than 12 models, the list is first filled with the default models, followed by reordering and reduction to 1 mode.

In some embodiments, the constructed merge list is not required to be reduced to 6 or fewer models after reordering; instead, its size is maintained at N7 or fewer models, where N7 is a value within the range from 1 to the maximum length of the merge list, for example, only one model is selected as described in Section 4.1.

4.4. Scheme 4

In schemes 1 to 3, it is described that a merge interpolation filter model candidate list with a maximum length of 12 is first constructed, followed by sorting the models using template matching technique and selecting the 6 models with the smallest costs as the final merge interpolation filter model candidates. In this case, without using default models for filling, Schemes 1 to 3 cannot guarantee that both the merge interpolation filter model candidate list and the final merge list include 6 interpolation filter models. Since the Schemes 1 to 3 use truncated unary codes to encode and decode the final list index, when the final merge list includes fewer 6 models, the truncated unary codes must always support encoding and decoding indices for a list with 6 models, resulting in codeword waste. In the example of Scheme 4, the encoder/decoder uses a variable length for the final candidate list to ensure that the merge list always contains a sufficient number of interpolation filter models, thereby eliminating codeword waste.

In this scheme, the merge interpolation filter model candidate list is still constructed by using four types of interpolation filter models specified in a), b), c) and d). The historical interpolation filter model list specified in c) has a maximum length of 6, and is filled into the merge interpolation filter model candidate list last in order.

When recording the historical interpolation filter models, only the interpolation filter models that use the interpolation filter mode and do not use the merge mode are included. At the same time, no duplicate checking is performed for the models in the historical interpolation filter model list. In this way, each time the decoder decodes an identifier indicating that the interpolation filter mode is used and the merge interpolation filter mode is not used when parsing the bitstream, the decoder updates the counter for the number of models in the historical interpolation filter model list, which indicates an increase in the number of available models.

When constructing a merge list, since the merge list may include models in the historical interpolation filter model list, the number of models in the merge list should always be greater than or equal to the number of models in the historical interpolation filter model list. When the final merge list is obtained based on the reordering, it may be known that there should be at least a number of models (greater than or equal to the number of models in the historical interpolation filter model list) that need to be reordered, so in one possible implementation, the length of the final merge list is set equal to the number of models in the historical interpolation filter model list.

At the same time, when decoding the syntax elements of each block, the decoder may also determine whether to decode the merge interpolation filter mode identifier by checking whether there are models in the historical interpolation filtering model list or the number of existing models, and determine the range of the number of models in the final merge list when the merge interpolation filter mode is selected; and when the range is determined, the decoder may further decode the index.

4.4.1 Parsing syntax elements

In some embodiments, the parsing of syntax elements related to the interpolation filter prediction mode at the coding unit level is shown in the following table.

Coding unit syntax

| coding_unit(x0,y0,cbWidth,cbHeight,cqtDepth,treeType,modeType) { | Descriptor |
|---|---|
| ...... // Encoding and decoding mode-related syntax elements before the interpolation filter model | |
| if (spsEipAllowed) // When a high-layer syntax element, such as an SPS identifier, allows the use of an interpolation filter mode, encoding and decoding the interpolation filter identifier | |
| cu_eip_flag[x0][y0] | ae(v) |
| if (cu_eip_flag) { | |
| numMergeModes = getNumHistModel(cu) // Obtaining the number of models in the historical interpolation filter model list which stores at most 6 models, and using the number of historical interpolation filter models as the length of the models in the final merge list | |
| if (numMergeModes > 0) | |
| eip_merge_flag[x0][y0] // Encoding and parsing the merge mode identifier | ae(v) |
| if(eip_merge_flag && numMergeModes > 1) // When the length of the models in the final merge list is greater than 1 | |
| eip_merge_idx[x0][y0] // Decoding the index of the merged list | |
| if (!eip_merge_flag) | |
| eip_modes() // Encoding and parsing interpolation filter model combinations in non-merge mode | |
| updateNumHistModel(cu) // Decoding that an interpolation filter mode in non-merge mode is selected, and updating the number of models in the historical interpolation filter model list | |
| } | |
| else ... // If not an interpolation filter mode, encoding and decoding subsequent modes | |
| } | |
| eip_modes() { | Descriptor |
| first_mode[x0][y0] // encoding an identifier indicating whether it is the first combination, i.e. (EIP_AL_A_L, EIP_FILTER_S) | ae(v) |
| if (!first_mode[x0][y0] && numOtherModes > 1) // If not the first combination and more than one other combinations may be use | |
| other_mode[x0][y0] // Encoding selected other combinations | ae(v) |
| } | |

The cu_eip_flag is the enable identifier of the coding unit-level interpolation filtering technique; if it is 1, it indicates that the interpolation filtering technique is used for the current luma block; if it is 0, it indicates that the interpolation filtering technique is not used. If the syntax element does not exist in the bitstream, it defaults to 0.

The eip_merge_flag is the enable identifier of the coding unit-level merge interpolation filtering technique; if it is 1, it indicates that the merge interpolation filtering technique is used for the current luma block; if it is 0, it indicates that the merge interpolation filtering technique is not used. If the syntax element does not exist in the bitstream, it defaults to 0. Since there is only one interpolation filter model in the final merge interpolation filter model candidate list in this scheme, there is no need to encode and decode the list index as in the previous scheme.

The first_mode indicates whether the first interpolation filter combination is selected in a non-merge mode, that is, (EIP_AL_A_L, EIP_FILTER_S); if it is 1, it indicates that the first interpolation filter combination is selected; if it is 0, it indicates that the first interpolation filter combination is not selected. If the syntax element does not exist in the bitstream, it defaults to 0.

The other_mode indicates which other combination is selected when the first interpolation filter combination is not selected. When only one other combination is available for the current block, the syntax element does not need to be encoded. If the syntax element does not exist in the bitstream, it defaults to 0.

In the above syntax element table, compared with the previous schemes, getNumHistModel (cu) and updateNumHistModel (cu) are mainly added. The former obtains a length of the final merge list at this time based on the model count value in the historical interpolation filter model list, while the latter updates the model count in the historical interpolation filter model list based on the decoded non-merge interpolation filter mode.

In the reference software, GDR mode may be conditionally enabled. When GDR is enabled, an intra-picture is partitioned into multiple parts, which are then packaged separately across several consecutive pictures, avoiding the issue where the bandwidth consumed by I-picture transmission is higher than that of B-pictures and P-pictures.

To support the enabling of GDR mode, two counters are required to count the number of available models of the historical interpolation filter model list: one is used for counting only when the current CU is located in a clean region (GDR refreshed region), and the other is used for full counting.

An example of counting the number of models in the historical interpolation filter model list is shown in the table below:

| updateNumHistModel(cu) { |
| --- |
| if(isGDRClean(cu)){ |
| availHistEip1++ |
| } |
| availHistEip0++ |
| } |

When GDR mode is enabled, the count value is obtained from availHistEip1, and when GDR mode is disabled,the count value is obtained from availHistEip0.

An example of obtaining the number of models in the historical interpolation filter model list is shown in the table below:

| getNumHistModel(cu) { |
| --- |
| if(isGDRClean(cu)){ |
| return min(availHistEip1, 6) // Since the maximum capacity of the historical interpolation filter model list is 6, the returned count value should not exceed 6 |
| } |
| else { |
| return min(availHistEip0, 6) // Since the maximum capacity of the historical interpolation filter model list is 6, the returned count value should not exceed 6 |
| } |
| } |

Since the historical interpolation filter model list may undergo initialization (clearing) operations per picture, per slice, per tile or per CTU, for example, the count value here should also be cleared correspondingly.

When encoding and decoding eip_merge_flag, the maximum number of symbols to be identified for the truncated unary code may be determined first based on the length of the final merge list (that is, the model count value in the historical interpolation filter model list). For example, in some embodiments, the maximum count value of the historical interpolation filter model list is 6, and the count value of 0, 1, 2, 3, 4, 5, or 6 may be obtained based on decoding order of the current block.

The count value 0 indicates that there are no models in the historical interpolation filter model list at this time, so the merge interpolation filter prediction mode identifier is neither encoded nor decoded at this time, and it is assumed not to be used by default.

The count value 1 indicates that there is 1 model in the historical interpolation filter model list at this time, which means that the final merge list has a length of 1 and has 1 model, thus, eip_merge_flag needs to be decoded at this time.

When the decoded value is true, the merge interpolation filter mode is selected; otherwise, the merge interpolation filter mode is not used.

The count value 2 indicates that there are 2 models in the historical interpolation filter model list at this time, which means that the final merge list has a length of 2 and has 2 models, thus, eip_merge_flag needs to be decoded at this time. When the decoded value is true, the merge interpolation filter mode is selected; otherwise, the merge interpolation filter mode is not used; and eip_merge_idx needs to be further parsed by using the truncated unary code to determine which model in the final merge list is selected for the prediction of the current block. The relationships between the truncated unary codes of parsed eip_merge_idx and the indices are shown in the following table:

| Truncated unary code | Index of the final merge list |
|---|---|
| 0 | 0 |
| 1 | 1 |

The count value 3 indicates that there are 3 models in the historical interpolation filter model list at this time, which means that the final merge list has a length of 3 and has 3 models, thus, eip_merge_flag needs to be decoded at this time. When the decoded value is true, the merge interpolation filter mode is selected; otherwise, the merge interpolation filter mode is not used; and eip_merge_idx needs to be further parsed by using the truncated unary code to determine which model in the final merge list is selected for the prediction of the current block. The relationships between the truncated unary codes of parsed eip_merge_idx and the indices are shown in the following table:

| Truncated unary code | Index of the final merged list |
|---|---|
| 0 | 0 |
| 10 | 1 |
| 11 | 2 |

The count value 4 indicates that there are 4 models in the historical interpolation filter model list at this time, which means that the final merge list has a length of 4 and has 4 models, thus, eip_merge_flag needs to be decoded at this time. When the decoded value is true, the merge interpolation filter mode is selected; otherwise, the merge interpolation filter mode is not used; and eip_merge_idx needs to be further parsed by using the truncated unary code to determine which model in the final merge list is selected for the prediction of the current block. The relationships between the truncated unary codes of parsed eip_merge_idx and the indices are shown in the following table:

| Truncated unary code | Index of the final merged list |
|---|---|
| 0 | 0 |
| 10 | 1 |
| 110 | 2 |
| 111 | 3 |

The count value 5 indicates that there are 5 models in the historical interpolation filter model list at this time, which means that the final merge list has a length of 5 and has 5 models, thus, eip_merge_flag needs to be decoded at this time. When the decoded value is true, the merge interpolation filter mode is selected; otherwise, the merge mode is not used; and eip_merge_idx needs to be further parsed by using the truncated unary code to determine which model in the final merge list is selected for the prediction of the current block. The relationships between the truncated unary codes of parsed eip_merge_idx and the indices are shown in the following table:

| Truncated unary code | Index of the final merged list |
|---|---|
| 0 | 0 |
| 10 | 1 |
| 110 | 2 |

(continued)

| Truncated unary code | Index of the final merged list |
|---|---|
| 1110 | 3 |
| 1111 | 4 |

The count value 6 indicates that there are 6 models in the historical interpolation filter model list at this time, which means that the final merge list has a length of 6 and has 6 models, thus, eip_merge_flag needs to be decoded at this time. When the decoded value is true, the merge interpolation filter mode is selected; otherwise, the merge interpolation filter mode is not used; and eip_merge_idx needs to be further parsed by using the truncated unary code to determine which model in the final merge list is selected for the prediction of the current block. The relationships between the truncated unary codes of parsed eip_merge_idx and the indices are shown in the following table:

| Truncated unary code | Index of the final merged list |
|---|---|
| 0 | 0 |
| 10 | 1 |
| 110 | 2 |
| 1110 | 3 |
| 11110 | 4 |
| 11111 | 5 |

In some embodiments, other truncated codes may also be used, such as encoding and decoding eip_merge_idx by using a truncated binary code.

4.4.2 Reconstructin the current block

The specific mode for prediction is determined based on the parsed syntax elements. If the interpolation filter prediction mode is selected for the current block, whether the interpolation filter prediction mode is a merge interpolation filter mode is determined.

If it is not a merge interpolation filter mode, the process of obtaining the interpolation filter model and the process of prediction are the same as those described in Section 2.3.

If it is a merge interpolation filter mode, first, a merge list with a maximum length of 12 is constructed based on the method described in Section 3.2. When less than 12 models are filled, except the models from the historical interpolation filter model list, a duplicate checking operation for the models added in the merge list is required, to ensure that the interpolation filter models added in the merge list are not duplicated. Subsequently, whether to perform reordering is determined based on whether the number of models in the merging list is greater than 1.

1. If the reordering is not required, the current list is directly used as the final merge list.
2. If the reordering is required, prediction values on the template are generated by using interpolation method with all reconstructed values (as described in Section 3.2), and SAD between these prediction values and reconstructed values on template is taken as a cost. The interpolation filter models are sorted in ascending order of SAD costs, and the N7 (where N7 is equal to the number of models in the historical interpolation filter model list) interpolation filter model candidates with the smallest SAD costs are selected as the final interpolation filter models for the merge interpolation filter mode.

The models in the final merge list are selected based on the parsed eip_merge_idx, and the prediction and reconstruction for the current block is performed based on the method introduced above.

5. Test results

The test results of the scheme described in Section 4.1 are as follows:

| | All Intra Main 10 | | | | | |
| --- | --- | --- | --- | --- | --- | --- |
| | Over anchor | | | | | |
| | Y | U | V | EncT | DecT | Vm Peak |
| Class A1 | -0.15% | -0.08% | -0.17% | 103.0% | 101.6% | 100.2% |
| Class A2 | -0.16% | -0.12% | -0.08% | 103.0% | 100.8% | 100.4% |
| Class B | -0.15% | -0.17% | -0.23% | 103.2% | 100.5% | 100.3% |
| Class C | -0.17% | -0.11% | -0.10% | 102.4% | 99.1% | 100.4% |
| Class E | -0.23% | -0.16% | -0.26% | 103.0% | 99.3% | 100.3% |
| **Overall** | -0.17% | -0.13% | -0.17% | 102.9% | 100.2% | 100.3% |
| Class D | -0.03% | -0.02% | -0.01% | 102.5% | 100.5% | 100.4% |
| Class F | -0.11% | -0.07% | 0.06% | 102.2% | 100.6% | 100.3% |

The test results of the scheme described in Section 4.2 are as follows:

| | All Intra Main 10 | | | | | |
| --- | --- | --- | --- | --- | --- | --- |
| | Over anchor | | | | | |
| | Y | U | V | EncT | DecT | VmPeak |
| Class A1 | -0.16% | -0.10% | -0.09% | 103.1% | 100.7% | 100.2% |
| Class A2 | -0.19% | -0.12% | -0.14% | 102.9% | 99.3% | 100.4% |
| Class B | -0.17% | -0.19% | -0.23% | 103.4% | 99.6% | 100.3% |
| Class C | -0.19% | -0.20% | -0.05% | 102.8% | 99.3% | 100.3% |
| Class E | -0.28% | -0.28% | -0.14% | 103.6% | 98.7% | 100.3% |
| **Overall** | -0.20% | -0.18% | -0.14% | 103.1% | 99.5% | 100.3% |
| Class D | -0.04% | 0.08% | -0.01% | 101.3% | 97.7% | 100.4% |
| Class F | -0.13% | -0.17% | -0.04% | 101.0% | 97.9% | 100.3% |

In an embodiment of the present disclosure:

1. a merge interpolation filtering method and a reordering for the merge interpolation filter model candidate list are proposed;
2. the construction of the merge interpolation filter model candidate list should include one or more of the four types a), b), c), and d);
3. when the number of models in the merge interpolation filter model candidate list is insufficient, the default interpolation filter models (that is, the predefined interpolation filter models) may be used to fill the list;
4. when reordering the merger interpolation filter model candidate list, the length of the reordered list may be limited, for example, after reordering, the number of models in the list is kept less than or equal to the number of models in the list before reordering;
5. for merge interpolation filter mode identifier, a conditional judgment may be used to control whether to encode and decode the identifier symbol;
6. when the merge interpolation filter mode identifier is true, and the maximum length of the reordered merge interpolation filter model candidate list defined by the scheme is greater than 1, an index for indicating the selected interpolation filter model in the list is required to be further decoded; and
7. when the maximum length of the reordered merge interpolation filter model candidate list is 1, no further decoding for index is required.

It should be noted that although the various operations of the method of the present disclosure are described in a particular order in the accompanying drawings, this does not require or imply that the operations must be performed in this particular order, or that all the illustrated operations must be performed to achieve the desired results. Additionally or alternatively, certain operations may be omitted, multiple operations may be combined into one operation for execution, and/or one operation may be decomposed into multiple operations for execution, etc.; alternatively, the operations in different embodiments are combined into a new technical solution.

Based on the foregoing embodiments, an embodiment of the present disclosure provides a decoding apparatus, which is applied to a decoder. FIG. 32 is a structural schematic diagram of a decoding apparatus according to an embodiment of the present disclosure. As illustrated in FIG. 32, the decoding apparatus 32 includes a first generation module 3201, a first determination module 3202, a first prediction module 3203, and a reconstruction module 3204.

The first generation module 3201 is configured to generate a first candidate list based on first interpolation filter models used during the decoding of decoded blocks.

The first determination module 3202 is configured to determine a second interpolation filter model to be used for the current block based on the first candidate list.

The first prediction module 3203 is configured to perform intra prediction for the current block by using the second interpolation filter model to obtain a prediction block for the current block.

The reconstruction module 3204 is configured to reconstruct the bitstream based on the prediction block to obtain a reconstructed block for the current block.

In some embodiments, the first interpolation filter models include at least one of:

first-type models, which include interpolation filter models used during decoding of the decoded adjacent blocks of the current block;

second-type models, which include interpolation filter models used during decoding of the decoded non-adjacent blocks of the current block;

third-type models, which include historical interpolation filter models buffered in a second candidate list in decoding order; herein, the historical interpolation filter models refer to models used during the decoding of blocks that have been decoded prior to the current block; and

fourth-type models, which include interpolation filter models used during the decoding of decoded blocks on a reference picture of the current block.

Further, in some embodiments, the first generation module 3201 is configured to: determine at least one third interpolation filter model based on reconstructed values of a reference region of the current block; generate the first candidate list based on the at least one third interpolation filter model and the first interpolation filter models used during the decoding of the decoded blocks.

In some embodiments, the first generation module 3201 is configured to: when the picture where the current block is located is an intra picture, sequentially fill the first candidate list in the order of first-type models, the second-type models, and the third-type models.

In some embodiments, the first generation module 3201 is configured to: when the picture where the current block is located is an inter picture, sequentially fill the first candidate list in the order of the first-type models, the first subclass of models in the fourth-type models, the second-type models, the second subclass of models in the fourth-type models, and the third-type models. The first subclass of models includes interpolation filter models used during the decoding of the decoded blocks at first predefined positions to the right, bottom, and/or bottom-right of the corresponding position of the current block on the reference picture. The second subclass of models includes interpolation filter modes used during the decoding of the decoded blocks at second predefined positions of the current block on the reference picture, the second predefined positions are positions obtained by offsetting the first predefined positions with an available motion vector of the current block.

In some embodiments, the first determination module 3202 is configured to: reorder the interpolation filter models in the first candidate list in ascending order of the prediction errors of these interpolation filter models on the template region of the current block, to obtain a third candidate list; and determine the second interpolation filter model to be used for the current block based on the third candidate list.

In some embodiments, the decoding apparatus 32 further includes a parsing module, configured to: parse the bitstream to obtain a first index of the second interpolation filter model in the third candidate list. The first determination module 3202 is configured to obtain the second interpolation filter model from the third candidate list based on the first index.

In some embodiments, the decoding apparatus 32 further includes a parsing module, configured to: parse the bitstream to obtain a second index of the second interpolation filter model in the fourth candidate list. The first determination module 3202 is configured to: truncate the front first number of interpolation filter models in the third candidate list to obtain a fourth candidate list; and obtain the second interpolation filter model from the fourth candidate list based on the second index.

In some embodiments, the decoding apparatus 32 further includes a buffer module configured to buffer the historical interpolation filter models in the second candidate list based on a reconstruction order of the blocks by using the first-in-first-out principle.

In some embodiments, the first number is equal to a current number of models in the second candidate list.

In some embodiments, the historical interpolation filter models in the second candidate list do not include the interpolation filter models, in the first candidate list, that are used for blocks decoded prior to the current block.

In some embodiments, the first number is equal to a first predefined number.

In some embodiments, the number of models in the first candidate list is equal to a second number, and the second number is greater than the first number.

In some embodiments, the second number is equal to a second predefined number.

In some embodiments, the first generation module 3201 is configured to: if the current number of models in the first candidate list is equal to the second number, terminate the filling of the first candidate list.

In some embodiments, the first generation module 3201 is configured to: after terminating the model filling of the first candidate list, if the number of models in the first candidate list is less than the second number, use predefined interpolation filter models to fill the first candidate list until the number of models in the first candidate list reaches the second number.

In some embodiments, the first generation module 3201 is configured to: after terminating the model filling of the first candidate list, if the number of models in the first candidate list is less than the second number, not use predefined interpolation filter models to continue filling the first candidate list.

In some embodiments, the interpolation filter models in the first candidate list are different from each other.

In some embodiments, the interpolation filter models in the first candidate list that do not belong to the second candidate list are different from each other.

In some embodiments, the number of the first-type models in the first candidate list is less than or equal to a first threshold.

In some embodiments, the number of the second-type models in the first candidate list is less than or equal to a second threshold.

In some embodiments, the number of the third-type models in the first candidate list is less than or equal to a third threshold.

In some embodiments, the number of the fourth-type models in the first candidate list is less than or equal to a fourth threshold.

In some embodiments, the first determination module 3202 is further configured to: based on the interpolation filter models in the first candidate list, perform intra prediction for the template region of the current block to obtain first prediction values of the template region; and determine prediction errors for corresponding interpolation filter models based on the first prediction values of the template region and the reconstructed values of the template region.

In some embodiments, if the first input position of an interpolation filter model in the first candidate list is outside the template region, the input value at the first input position is equal to the reconstructed value at the sample position corresponding to the first input position.

In some embodiments, if the second input position of an interpolation filter model in the first candidate list is located in the template region, the input value at the second input position is equal to the second prediction value or reconstructed value at the sample position corresponding to the second input position; here, the second prediction value is the prediction value obtained during the decoding of the sample corresponding to the second input position.

In some embodiments, the decoding apparatus 32 further includes a parsing module, configured to: parse the bitstream to obtain the first syntax identifier information. The reconstruction module 3204 is further configured to: when the first syntax identifier information is equal to the first value, perform the reordering for interpolation filter models in the first candidate list.

In some embodiments, when the first syntax identifier information is equal to a second value, the reordering for the interpolation filter models in the first candidate list is not performed.

In some embodiments, the decoding apparatus 32 further includes a parsing module, configured to: parse the bitstream to obtain a third index of the second interpolation filter model in the first candidate list. The first determination module 3202 is configured to: obtain the second interpolation filter model from the first candidate list based on the third index.

In some embodiments, the decoding apparatus 32 further includes a parsing module configured to: parse the bitstream to obtain the second syntax identifier information. When the second syntax identifier information is equal to a third value, the decoding apparatus 32 determines a reconstructed block for the current block by using the decoding method.

Further, in some embodiments, the parsing module is configured to parse the bitstream to obtain the second syntax identifier information when at least one of the following conditions is satisfied:

a first condition including that the number of first-type models is greater than or equal to a fifth threshold;
a second condition including that the number of second-type models is greater than or equal to a sixth threshold;
a third condition including that the number of third-type models is greater than or equal to a seventh threshold; and
a fourth condition including that the number of fourth-type models is greater than or equal to an eighth threshold.

In some embodiments, when the number of interpolation filter models in the fourth candidate list is equal to 1, the second interpolation filter model is equal to the interpolation filter model in the fourth candidate list.

In some embodiments, the parsing module is configured to: when the number of interpolation filter models in the fourth candidate list is greater than 1, or when the number of interpolation filter models in the fourth candidate list is greater than 1 and the second syntax identifier information is equal to the third value, parse the bitstream to obtain a second index.

In some embodiments, when the number of interpolation filter models in the first candidate list is equal to 1, the second interpolation filter model is equal to the interpolation filter model in the first candidate list.

In some embodiments, the parsing module is configured to: when the number of interpolation filter models in the first candidate list is greater than 1, or when the number of interpolation filter models in the first candidate list is greater than 1 and the second syntax identifier information is equal to the third value, parse the bitstream to obtain a first index, a second index, or a third index.

In some embodiments, the reconstruction module 3204 is configured to: parse the bitstream to obtain a residual block of the current block; reconstruct a reconstructed block for the current block based on the prediction block and the residual block.

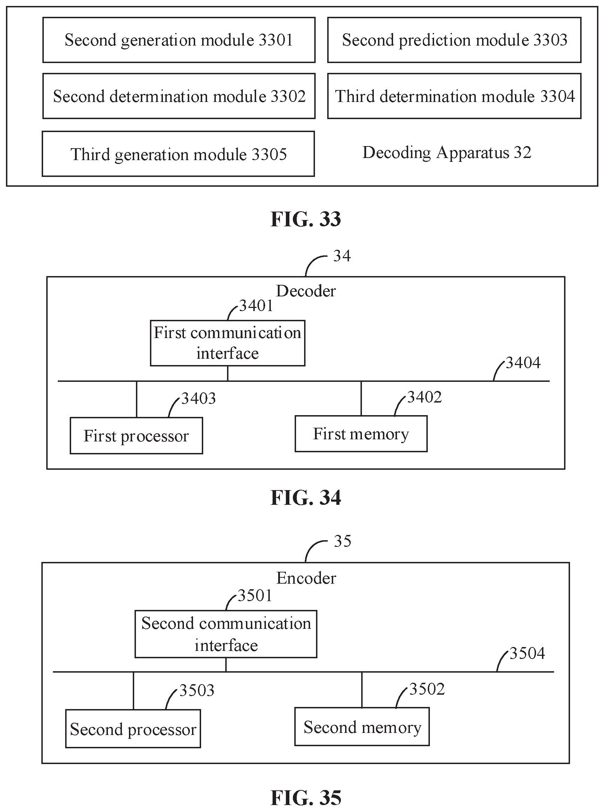

An embodiment of the present disclosure provides an encoding apparatus, and the encoding apparatus is applied to an encoder. FIG. 33 is a structural schematic diagram of the encoding apparatus according to the embodiment of the present disclosure. As illustrated in FIG. 33, the encoding apparatus 33 includes: a second generation module 3301, a second determination module 3302, a second prediction module 3303, a third determination module 3304 and a third generation module 3305.

The second generation module 3301 is configured to generate a first candidate list based on first interpolation filter models used during the decoding of decoded blocks.

The second determination module 3302 is configured to determine a second interpolation filter model to be used for the current block based on the first candidate list.

The second prediction module 3303 is configured to perform intra prediction for the current block by using the second interpolation filter model to obtain a prediction block for the current block.

The third determination module 3304 is configured to determine a residual block for the current block based on the prediction block.

The third generation module 3305 is configured to generate a bitstream based on the residual block.

In some embodiments, the first interpolation filter models include at least one of:

first-type models, which include interpolation filter models used during decoding of the decoded adjacent blocks of the current block;

second-type models, which include interpolation filter models used during decoding of the decoded non-adjacent blocks of the current block;

third-type models, which include historical interpolation filter models buffered in a second candidate list in decoding order; herein, the historical interpolation filter models refer to models used during the decoding of blocks that have been decoded prior to the current block; and

fourth-type models, which include interpolation filter models used during the decoding of decoded blocks on a reference picture of the current block.

Further, in some embodiments, the second generation module 3301 is configured to: determine at least one third interpolation filter model based on reconstructed values of a reference region of the current block; generate the first candidate list based on the at least one third interpolation filter model and the first interpolation filter models used during the decoding of the decoded blocks.

In some embodiments, the second generation module 3301 is configured to: when the picture where the current block is located is an intra picture, sequentially fill the first candidate list in the order of first-type models, the second-type models, and the third-type models.

In some embodiments, the second generation module 3301 is configured to: when the picture where the current block is located is an inter picture, sequentially fill the first candidate list in the order of the first-type models, the first subclass of models in the fourth-type models, the second-type models, the second subclass of models in the fourth-type models, and the third-type models. The first subclass of models includes interpolation filter models used during the decoding of the decoded blocks at first predefined positions to the right, bottom, and/or bottom-right of the corresponding position of the current block on the reference picture. The second subclass of models includes interpolation filter modes used during the decoding of the decoded blocks at second predefined positions of the current block on the reference picture, the second predefined positions are positions obtained by offsetting the first predefined positions with an available motion vector of the current block.

In some embodiments, the second determination module 3302 is configured to: reorder the interpolation filter models in the first candidate list in ascending order of the prediction errors of these interpolation filter models on the template region of the current block, to obtain a third candidate list; and determine the second interpolation filter model to be used for the current block based on the third candidate list.

In some embodiments, the third generation module 3305 is further configured to: determine a first index of the second interpolation filter model in the third candidate list; and signal the first index into a bitstream.

In some embodiments, the third generation module 3305 is further configured to: truncate the front first number of interpolation filter models in the third candidate list to obtain a fourth candidate list; determine a second index of the second interpolation filter model in the fourth candidate list; and signal the second index into a bitstream.

In some embodiments, the encoding apparatus 33 further includes a buffer module configured to buffer the historical interpolation filter models in the second candidate list based on an encoding order of the blocks by using the first-in-first-out principle.

In some embodiments, the first number is equal to a current number of models in the second candidate list.

In some embodiments, the historical interpolation filter models in the second candidate list do not include the interpolation filter models, in the first candidate list, that are used for blocks decoded prior to the current block.

In some embodiments, the first number is equal to a first predefined number.

In some embodiments, the number of models in the first candidate list is equal to a second number, and the second number is greater than the first number.

In some embodiments, the second number is equal to a second predefined number.

In some embodiments, the second generation module 3301 is configured to: if the current number of models in the first candidate list is equal to the second number, terminate the filling of the first candidate list.

In some embodiments, the second generation module 3301 is configured to: after terminating the model filling of the first candidate list, if the number of models in the first candidate list is less than the second number, use predefined interpolation filter models to fill the first candidate list until the number of models in the first candidate list reaches the second number.

In some embodiments, after terminating the model filling of the first candidate list, if the number of models in the first candidate list is less than the second number, predefined interpolation filter models are not used to continue filling the first candidate list.

In some embodiments, the interpolation filter models in the first candidate list are different from each other.

In some embodiments, the interpolation filter models in the first candidate list that do not belong to the second candidate list are different from each other.

In some embodiments, the number of the first-type models in the first candidate list is less than or equal to a first threshold.

In some embodiments, the number of the second-type models in the first candidate list is less than or equal to a second threshold.

In some embodiments, the number of the third-type models in the first candidate list is less than or equal to a third threshold.

In some embodiments, the number of the fourth-type models in the first candidate list is less than or equal to a fourth threshold.

In some embodiments, the second determination module 3302 is configured to: based on the interpolation filter models in the first candidate list, perform intra prediction for the template region of the current block to obtain first prediction values of the template region; and determine prediction errors for corresponding interpolation filter models based on the first prediction values of the template region and the reconstructed values of the template region.

In some embodiments, if the first input position of an interpolation filter model in the first candidate list is outside the template region, the input value at the first input position is equal to the reconstructed value at the sample position corresponding to the first input position.

In some embodiments, if the second input position of an interpolation filter model in the first candidate list is located in the template region, the input value at the second input position is equal to the second prediction value or reconstructed value at the sample position corresponding to the second input position; here, the second prediction value is the prediction value obtained during the decoding of the sample corresponding to the second input position.

In some embodiments, the third generation module 3305 is further configured to: signal the first syntax identifier information into the bitstream; herein, when the first syntax identifier information is equal to a first value, it indicates that the reordering for interpolation filter models in the first candidate list is performed.

In some embodiments, when the first syntax identifier information is equal to a second value, it indicates that the reordering for interpolation filter models in the first candidate list is not performed.

In some embodiments, the third generation module 3305 is further configured to determine a third index of the second interpolation filter model in the first candidate list; and signal the third index into a bitstream.

In some embodiments, the third generation module 3305 is further configured to signal the second syntax identifier information into the bitstream; herein, when the second syntax identifier information is equal to a third value, it indicates that the reconstruction block of the current block is determined by using the method.

In some embodiments, the third generation module 3305 is configured to signal the second syntax identifier information into the bitstream when at least one of the following conditions is satisfied:

a first condition including that the number of first-type models is greater than or equal to a fifth threshold;
a second condition including that the number of second-type models is greater than or equal to a sixth threshold;
a third condition including that the number of third-type models is greater than or equal to a seventh threshold; and
a fourth condition including that the number of fourth-type models is greater than or equal to an eighth threshold.

In some embodiments, when the number of interpolation filter models in the fourth candidate list is equal to 1, the second interpolation filter model is equal to the interpolation filter model in the fourth candidate list.

In some embodiments, the third generation module 3305 is configured to: when the number of interpolation filter models in the fourth candidate list is greater than 1, or when the number of interpolation filter models in the fourth candidate list is greater than 1 and the second syntax identifier information is equal to the third value, signal the second index into the bitstream.

In some embodiments, when the number of interpolation filter models in the first candidate list is equal to 1, the second interpolation filter model is equal to the interpolation filter model in the first candidate list.

In some embodiments, the third generation module 3305 is configured to: when the number of interpolation filter models in the first candidate list is greater than 1, or when the number of interpolation filter models in the first candidate list is greater than 1 and the second syntax identifier information is equal to the third value, signal the first index, the second index, or the third index into the bitstream.

The above description of the apparatus embodiments is similar to that of the above description of the method embodiments, and has similar beneficial effects as the method embodiments. For technical details not disclosed in the apparatus embodiments of the present disclosure, please refer to the description of the method embodiments of the present disclosure for understanding.

It should be noted that the division of modules in the apparatus described in the embodiments of the present disclosure is illustrated, and merely represents a logical functional division, and other division methods may be used in actual implementation. In addition, functional units in respective embodiments of the present disclosure may be integrated in one processing unit, may be physically present alone, or may be integrated in two or more units in one unit. The above integrated units may be implemented in the form of hardware or software functional unit, or in the form of a combination of software and hardware.

In the embodiment of the present disclosure, if the above-described method is implemented in the form of a software function module and sold or used as an independent product, the software function module may be stored in a computer-readable storage medium. Based on this understanding, the technical solutions of the embodiments of the present disclosure, in essence or the part that contributes to the related art, may be embodied in the form of a software product. The computer software product is stored in a storage medium and includes several instructions to make an electronic device to execute all or part of the methods described in the embodiments of the present disclosure. The foregoing storage medium includes various media capable of storing program codes, such as a U disk, a mobile hard disk, a Read Only Memory (ROM), a magnetic disk, or an optical disk, etc.. Thus, the embodiments of the present disclosure are not limited to any specific combination of hardware and software.

An embodiment of the present disclosure provides a computer-readable storage medium. The computer-readable storage medium stores a computer program that, when executed, implements an encoding and decoding method at an encoder end, or implements an encoding and decoding method at a decoder end.

An embodiment of the present disclosure provides a decoder. As illustrated in FIG. 34, the decoder 34 includes: a first communication interface 3401, a first memory 3402, and a first processor 3403. The various components are coupled together via a first bus system 3404. It should be understood that the first bus system 3404 is configured to achieve connection and communication between these components. The first bus system 3404 includes a power bus, a control bus, and a status signal bus in addition to a data bus. However, for the sake of clarity of illustration, various buses are designated as first bus system 3404 in FIG. 34.

The first communication interface 3401 is configured to receive and transmit signals in the process of transmitting and receiving information with other external network elements.

The first memory 3402 is configured to store a computer program executable on the first processor 3403.

The first processor 3403 is configured to execute the decoding method according to the embodiment of the present disclosure when the computer program is executed.

It may be understood that the first memory 3402 in the embodiment of the present disclosure may be a volatile memory or a non-volatile memory, or may include both volatile and non-volatile memories. The non-volatile memory may be a ROM, a Programmable ROM (PROM), an Erasable PROM (EPROM), an electrically EPROM (EEPROM), or a flash memory. The volatile memory may be a Random Access Memory (RAM), which is used as an external cache. Through an exemplary rather than limiting description, many forms of RAMs are available, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The first memory 3402 of the system and method described in the present disclosure is intended to include, but is not limited to these memories and any other suitable types of memories.

The first processor 3403 may be an integrated circuit chip with a signal processing capability. During implementation, each operation of the above methods may be completed by an integrated logical circuit in a form of hardware in the first processor 3403 or instructions in a form of software. The above first processor 3403 may be a general purpose processor, a Digital Signal Processor (DSP), an Application Specific Integrated Circuit (ASIC), a Field Programmable Gate Array (FPGA) or other programmable logical devices, a discrete gate or transistor logical device, a discrete hardware component, etc. The methods, operations and logic block diagrams disclosed in the embodiments of the present disclosure may be implemented or performed. The general purpose processor may be a microprocessor, or the processor may be any conventional processor, etc. Operations in the methods disclosed according to the embodiments of the present disclosure may be directly embodied as being performed and completed by a hardware decoding processor, or performed and completed by a combination of hardware in the decoding processor and a software module. The software module may be located in a mature storage medium in this field such as a RAM, a flash memory, a ROM, a PROM or an EEPROM, a register, etc. The storage medium is located in the first memory 3402, and the first processor 3403 reads information in the first memory 3402, and completes the operations in the above methods in combination with the hardware thereof.

It may be understood that these embodiments described in the present disclosure may be implemented in hardware, software, firmware, middleware, microcode or a combination thereof. For implementation in hardware, the processing unit may be implemented in one or more ASICs, DSPs, DSP Devices (DSPDs), Programmable Logic Devices (PLDs), FPGAs, general purpose processors, controllers, microcontrollers, microprocessors, other electronic units configured to perform functions described in the present disclosure, or combinations thereof. For implementation in software, technologies described in the present disclosure may be implemented by modules (such as processes, functions, etc.) performing the functions described in the present disclosure. Software codes may be stored in a memory and executed by a processor. The memory may be implemented in or out of the processor.

Optionally, as another embodiment, the first processor 3403 is further configured to execute the computer program to perform any of the above-described method embodiments on the decoder end.

An embodiment of the present disclosure provides an encoder. As illustrated in FIG. 35, the encoder 35 includes a second communication interface 3501, a second memory 3502, and a second processor 3503. The various components are coupled together by a second bus system 3504. It should be understood that the second bus system 3504 is configured to achieve connection and communication between these components. The second bus system 3504 includes a power bus, a control bus, and a status signal bus in addition to a data bus. However, for the sake of clarity of illustration, various buses are designated as second bus system 3504 in FIG. 35.

The second communication interface 3501 is configured to receive and transmit signals in the process of transmitting and receiving information with other external network elements.

The second memory 3502 is configured to store a computer program executable on the second processor 3503;

The second processor 3503 is configured to execute the encoding method described in the embodiment of the present disclosure when the computer program is executed.

Optionally, as another embodiment, the second processor 3503 is further configured to execute the aforementioned method embodiments at the encoding end when running the computer program.

It should be understood that the hardware function of the second memory 3502 is similar to that of the first memory 3402, and the hardware function of the second processor 3503 is similar to that of the first processor 3403. It will not be detailed here.

Here, it should be pointed out that the above description of the storage medium and device embodiments is similar to the description of the above method embodiments, and has beneficial effects similar to those of the method embodiments. For technical details not disclosed in the storage medium, storage medium, and device embodiments of the present disclosure, please refer to the description of the method embodiments of the present disclosure.

It should be understood that reference to "one embodiment", "an embodiment" or "some embodiments" throughout the specification means that a specific feature, structure or characteristic associated with the embodiment is included in at least one embodiment of the present disclosure. Therefore, the appearances of "in one embodiment", "in an embodiment" or "in some embodiments" in various places throughout the specification do not necessarily refer to the same embodiment. In addition, these specific features, structures or characteristics may be combined in one or more embodiments in any suitable manner. It should be understood that, in the various embodiments of the present disclosure, the sequence numbers of the aforementioned processes do not indicate the order of execution; the execution order of each process shall be determined by its function and inherent logic, and shall not impose any limitation on the implementation process of the embodiments of the present disclosure. The sequence numbers of the embodiments of the present disclosure are for descriptive purposes only and do not indicate the superiority or inferiority of the embodiments. The above descriptions of the various embodiments tend to emphasize the differences between the various embodiments, and their identical or similar parts may be referred to one another, which are not repeated herein for the sake of brevity.

Herein, the term "and/or" as used herein merely describes an association relationship between associated objects and indicates that three relationships may exist. For example, object A and/or object B may indicate three cases: object A existing alone, both object A and object B existing simultaneously, and object B existing alone.

It should be noted that in the present disclosure, terms "including", "include" or any other variants thereof are intended to encompass a non-exclusive inclusion, such that a process, method, article or apparatus including a series of elements includes not only those elements, but also other elements which are not explicitly listed, or elements inherent to such process, method, article or apparatus. Without further limitation, an element defined by a statement "including a..." does not preclude presence of additional identical elements in a process, method, article or apparatus including the element.

In the several embodiments provided in the present disclosure, it should be understood that the disclosed apparatus and methods may be implemented in other manners. The embodiments described above are merely illustrative. For example, the division of the modules is merely a logical functional division, and alternative division manners may be adopted in actual implementation; for instance, multiple modules or components may be combined or integrated into another system, or some features may be omitted or not executed. In addition, the coupling, direct coupling or communication connection between the various components shown or discussed may be realized through some interfaces, and the indirect coupling or communication connection of apparatuses or modules may be in an electrical, mechanical or other form.

The modules described above as separate components may or may not be physically separated, and the components shown as modules may or may not be physical modules; they may be located in a single place, or distributed across multiple network units. Some or all of the modules may be selected according to actual needs to achieve the objectives of the solutions of the present embodiments.

In addition, all the functional modules in the various embodiments of the present disclosure may be integrated into a single processing unit, or each module may exist independently as a separate unit, or two or more modules may be integrated into one unit. The above integrated modules may be implemented in the form of hardware, or in a form combining hardware and software functional units

Those skilled in the art may understand that all or part of the operations of implementing the above method embodiments may be completed by hardware associated with program instructions. The aforementioned program may be stored in a computer-readable storage medium, and when the program is executed, it performs the operations including those of the above method embodiments. The storage medium includes various media capable of storing program codes such as removable storage devices, ROM, magnetic disks and an optical disk.

Alternatively, if the above integrated units of the present disclosure are implemented in the form of software functional modules and sold or used as independent products, they may also be stored in a computer-readable storage medium. Based on this understanding, the technical solutions of the embodiments of the present disclosure, in essence or the part that contributes to the related art, may be embodied in the form of a software product. The computer software product is stored in a storage medium and includes several instructions to make an electronic device to execute all or part of the methods described in the embodiments of the present disclosure. The storage medium includes various media capable of storing program codes, such as a removable storage device, a ROM, a magnetic disk, or an optical disk.

The methods disclosed in several method embodiments provided in the present disclosure may be arbitrarily combined without conflict, to obtain new method embodiments.

The features disclosed in several product embodiments provided in the present disclosure may be arbitrarily combined without conflict, to obtain new product embodiments.

The features disclosed in several method or device embodiments provided in the disclosure may be arbitrarily combined without conflict, to obtain new method or device embodiments.

The above descriptions are only specific implementations of the present disclosure, but the scope of protection of the present disclosure is not limited thereto. Variation or replacement easily conceived by any technician skilled in the art within the technical scope disclosed in the present disclosure, should fall within the scope of protection of the present disclosure. Therefore, the scope of protection of the present disclosure should be subject to the scope of protection of the claims.

**Claims**

1. A decoding method, applied to a decoder, the method comprising:

    generating a first candidate list based on first interpolation filter models used during decoding of decoded blocks;
    determining a second interpolation filter model to be used for a current block based on the first candidate list;

performing intra prediction for the current block by using the second interpolation filter model, to obtain a prediction block for the current block; and

reconstructing a bitstream based on the prediction block, to obtain a reconstructed block for the current block.

2. The method of claim 1, wherein the first interpolation filter models comprise at least one of:

first-type models, comprising interpolation filter models used during decoding of decoded adjacent blocks of the current block;

second-type models, comprising interpolation filter models used during decoding of decoded non-adjacent blocks of the current block;

third-type models, comprising historical interpolation filter models buffered in a second candidate list in a decoding order; wherein the historical interpolation filter models refer to models used during decoding of blocks that have been decoded prior to the current block; and

fourth-type models, comprising interpolation filter models used during decoding of decoded blocks on a reference picture of the current block.

3. The method of claim 2, further comprising:

determining at least one third interpolation filter model based on reconstructed values of a reference region of the current block; and

generating the first candidate list based on the at least one third interpolation filter model and the first interpolation filter models used during the decoding of the decoded blocks.

4. The method of claim 2, wherein when a picture where the current block is located is an intra-picture, the first candidate list is sequentially filled in an order of the first-type models, the second-type models, and the third-type models.

5. The method of claim 2, wherein when a picture where the current block is located is an inter-picture, the first candidate list is sequentially filled in an order of the first-type models, a first subclass of models in the fourth-type models, the second-type models, a second subclass of models in the fourth-type models, and the third-type models;

the first subclass of models comprises interpolation filter models used during decoding of decoded blocks at first predefined positions to right, bottom, and/or bottom-right of a corresponding position of the current block on the reference picture; and

the second subclass of models comprises interpolation filter modes used during decoding of decoded blocks at second predefined positions of the current block on the reference picture, and the second predefined positions are positions obtained by offsetting the first predefined positions with an available motion vector of the current block.

6. The method of any one of claims 1 to 5, wherein determining the second interpolation filter model to be used for the current block based on the first candidate list comprises:

reordering interpolation filter models in the first candidate list in an ascending order of prediction errors of the interpolation filter models in the first candidate list on a template region of the current block, to obtain a third candidate list; and

determining the second interpolation filter model to be used for the current block based on the third candidate list.

7. The method of claim 6, wherein determining the second interpolation filter model to be used for the current block based on the third candidate list comprises:

parsing the bitstream to obtain a first index of the second interpolation filter model in the third candidate list; and

obtaining the second interpolation filter model from the third candidate list based on the first index.

8. The method of claim 6, wherein determining the second interpolation filter model to be used for the current block based on the third candidate list comprises:

truncating a first number of interpolation filter models in the third candidate list to obtain a fourth candidate list;

parsing the bitstream to obtain a second index of the second interpolation filter model in the fourth candidate list; and

obtaining the second interpolation filter model from the fourth candidate list based on the second index.

9. The method of claim 8, further comprising:
buffering the historical interpolation filter models in the second candidate list based on a reconstruction order of blocks by using a first-in-first-out principle.

10. The method of claim 9, wherein the first number is equal to a current number of models of the second candidate list.

11. The method of claim 10, wherein the historical interpolation filter models in the second candidate list do not comprise interpolation filter models, in the first candidate list, that are used for blocks decoded prior to the current block.

12. The method of claim 8, wherein the first number is equal to a first predefined number.

13. The method of any one of claims 8 to 12, wherein a number of models in the first candidate list is equal to a second number, and the second number is greater than the first number.

14. The method of claim 13, wherein the second number is equal to a second predefined number.

15. The method of claim 13, wherein if a current number of models in the first candidate list is equal to the second number, filling of the first candidate list is terminated.

16. The method of claim 15, wherein after terminating model filling of the first candidate list, if the number of models in the first candidate list is less than the second number, predefined interpolation filter models are used to fill the first candidate list until the number of models in the first candidate list reaches the second number.

17. The method of claim 15, wherein after terminating model filling of the first candidate list, if the number of models in the first candidate list is less than the second number, predefined interpolation filter models are not used to continue filling the first candidate list.

18. The method of any one of claims 2 to 17, wherein the interpolation filter models in the first candidate list are different from each other.

19. The method of any one of claims 2 to 17, wherein the interpolation filter models of the first candidate list that do not belong to the second candidate list are different from each other.

20. The method of any one of claims 2 to 17, wherein a number of the first-type models in the first candidate list is less than or equal to a first threshold.

21. The method of any one of claims 2 to 17, wherein a number of the second-type models in the first candidate list is less than or equal to a second threshold.

22. The method of any one of claims 2 to 17, wherein a number of the third-type models in the first candidate list is less than or equal to a third threshold.

23. The method of any of claims 2 to 17, wherein a number of the fourth-type models in the first candidate list is less than or equal to a fourth threshold.

24. The method of claim 6, further comprising:

performing intra prediction on the template region of the current block based on the interpolation filter models in the first candidate list, to obtain first prediction values of the template region; and
determining prediction errors for the interpolation filter models based on the first prediction values of the template region and reconstructed values of the template region.

25. The method of claim 24, wherein if a first input position of an interpolation filter model in the first candidate list is outside the template region,
an input value at the first input position is equal to a reconstructed value at a sample position corresponding to the first input position.

26. The method of claim 24 or 25, wherein if a second input position of an interpolation filter model in the first candidate list is located in the template region,

an input value at the second input position is equal to a second prediction value or a reconstructed value at a sample position corresponding to the second input position; wherein the second prediction value is a prediction value obtained during decoding of a sample corresponding to the second input position.

27. The method of claim 6, further comprising:

parsing the bitstream to obtain first syntax identifier information; and
when the first syntax identifier information is equal to a first value, performing a reordering operation for the interpolation filter models in the first candidate list.

28. The method of claim 27, wherein when the first syntax identifier information is equal to a second value, the reordering operation for the interpolation filter models in the first candidate list is not performed.

29. The method of claim 28, wherein determining the second interpolation filter model to be used for the current block based on the first candidate list comprises:

parsing the bitstream to obtain a third index of the second interpolation filter model in the first candidate list; and
obtaining the second interpolation filter model from the first candidate list based on the third index.

30. The method of any one of claims 1 to 29, further comprising:

parsing the bitstream to obtain second syntax identifier information; and
when the second syntax identifier information is equal to a third value, determining the reconstructed block for the current block by using the decoding method.

31. The method of claim 30, wherein
parsing the bitstream to obtain the second syntax identifier information when at least one of following conditions is satisfied:

a first condition comprising that a number of the first-type models is greater than or equal to a fifth threshold;
a second condition comprising that a number of the second-type models is greater than or equal to a sixth threshold;
a third condition comprising that a number of the third-type models is greater than or equal to a seventh threshold; and
a fourth condition comprising that a number of the fourth-type models is greater than or equal to an eighth threshold.

32. The method of claim 30, wherein
when a number of interpolation filter models in the fourth candidate list is equal to 1, the second interpolation filter model is equal to an interpolation filter model in the fourth candidate list.

33. The method of claim 30, wherein
when a number of interpolation filter models in the fourth candidate list is greater than 1, or when the number of interpolation filter models in the fourth candidate list is greater than 1 and the second syntax identifier information is equal to the third value, parsing the bitstream to obtain a second index.

34. The method of claim 30, wherein
when the number of interpolation filter models in the first candidate list is equal to 1, the second interpolation filter model is equal to an interpolation filter model in the first candidate list.

35. The method of claim 30, wherein
when a number of interpolation filter models in the first candidate list is greater than 1, or when the number of interpolation filter models in the first candidate list is greater than 1 and the second syntax identifier information is equal to the third value, the bitstream is parsed to obtain the first index, the second index, or the third index.

36. The method of any one of claims 1 to 35, wherein reconstructing the bitstream based on the prediction block, to obtain the reconstructed block for the current block comprises:

parsing the bitstream to obtain a residual block of the current block;
reconstructing the reconstructed block for the current block based on the prediction block and the residual block.

37. An encoding method, applied to an encoder, the method comprising:

generating a first candidate list based on first interpolation filter models used during decoding of decoded blocks;
determining a second interpolation filter model to be used for a current block based on the first candidate list;
performing intra prediction for the current block by using the second interpolation filter model, to obtain a prediction block for the current block;
determining a residual block of the current block based on the prediction block; and
generating a bitstream based on the residual block.

38. The method of claim 37, wherein the first interpolation filter models comprises at least one of:

first-type models, comprising interpolation filter models used during decoding of decoded adjacent blocks of the current block;
second-type models, comprising interpolation filter models used during decoding of decoded non-adjacent blocks of the current block;
third-type models, comprising historical interpolation filter models buffered in a second candidate list in a decoding order; wherein the historical interpolation filter models refer to models used during decoding of blocks that have been decoded prior to the current block; and
fourth-type models, comprising interpolation filter models used during decoding of decoded blocks on a reference picture of the current block.

39. The method of claim 38, further comprising:

determining at least one third interpolation filter model based on reconstructed values of a reference region of the current block; and
generating the first candidate list based on the at least one third interpolation filter model and the first interpolation filter models used during the decoding of the decoded blocks.

40. The method of claim 38, wherein when a picture where the current block is located is an intra-picture, the first candidate list is sequentially filled in an order of the first-type models, the second-type models, and the third-type models.

41. The method of claim 38, wherein when a picture where the current block is located is an inter-picture, the first candidate list is sequentially filled in an order of the first-type models, a first subclass of models in the fourth-type models, the second-type models, a second subclass of models in the fourth-type models, and the third-type models;

the first subclass of models comprises interpolation filter models used during decoding of decoded blocks at first predefined positions to right, bottom, and/or bottom-right of a corresponding position of the current block on the reference picture; and
the second subclass of models comprises interpolation filter modes used during decoding of decoded blocks at second predefined positions of the current block on the reference picture, and the second predefined positions are positions obtained by offsetting the first predefined positions with an available motion vector of the current block.

42. The method of any one of claims 37 to 41, wherein determining the second interpolation filter model to be used for the current block based on the first candidate list comprises:

reordering interpolation filter models in the first candidate list in an ascending order of prediction errors of the interpolation filter models in the first candidate list on a template region of the current block, to obtain a third candidate list; and
determining the second interpolation filter model to be used for the current block based on the third candidate list.

43. The method of claim 42, further comprising:

determining a first index of the second interpolation filter model in the third candidate list; and
signalling the first index into the bitstream.

44. The method of claim 42, further comprising:

truncating a first number of interpolation filter models in the third candidate list to obtain a fourth candidate list;
determining a second index of the second interpolation filter model in the fourth candidate list; and
signalling the second index into the bitstream.

45. The method of claim 44, further comprising:
buffering the historical interpolation filter model in the second candidate list by using a first-in-first-out principle based on an encoding order of blocks.

46. The method of claim 45, wherein the first number is equal to a current number of models of the second candidate list.

47. The method of claim 46, wherein the historical interpolation filter models in the second candidate list do not comprise interpolation filter models, in the first candidate list, that are used for blocks decoded prior to the current block.

48. The method of claim 44, wherein the first number is equal to a first predefined number.

49. The method of any one of claims 44 to 48, wherein a number of models in the first candidate list is equal to a second number, and the second number is greater than the first number.

50. The method of claim 49, wherein the second number is equal to a second predefined number.

51. The method of claim 49, wherein if a current number of models in the first candidate list is equal to the second number, filling of the first candidate list is terminated.

52. The method of claim 51, wherein after terminating model filling of the first candidate list, if the number of models in the first candidate list is less than the second number, predefined interpolation filter models are used to fill the first candidate list until the number of models in the first candidate list reaches the second number.

53. The method of claim 51, wherein after terminating model filling of the first candidate list, if the number of models in the first candidate list is less than the second number, predefined interpolation filter models are not used to continue filling the first candidate list.

54. The method of any one of claims 38 to 53, wherein the interpolation filter models in the first candidate list are different from each other.

55. The method of any one of claims 38 to 53, wherein the interpolation filter models of the first candidate list that do not belong to the second candidate list are different from each other.

56. The method of any one of claims 38 to 53, wherein a number of the first-type models in the first candidate list is less than or equal to a first threshold.

57. The method of any one of claims 38 to 53, wherein a number of the second-type models in the first candidate list is less than or equal to a second threshold.

58. The method of any one of claims 38 to 53, wherein a number of the third-type models in the first candidate list is less than or equal to a third threshold.

59. The method of any one of claims 38 to 53, wherein a number of the fourth-type models in the first candidate list is less than or equal to a fourth threshold.

60. The method of claim 42, further comprising:

performing intra prediction on the template region of the current block based on the interpolation filter models in the first candidate list, to obtain first prediction values of the template region; and

determining prediction errors for the interpolation filter models based on the first prediction values of the template region and reconstructed values of the template region.

61. The method of claim 60, wherein if a first input position of an interpolation filter model in the first candidate list is outside the template region,
an input value at the first input position is equal to a reconstructed value at a sample position corresponding to the first input position.

62. The method of claim 60 or 61, wherein if a second input position of an interpolation filter model in the first candidate list is located in the template region,
an input value at the second input position is equal to a second prediction value or a reconstructed value at a sample position corresponding to the second input position; wherein the second prediction value is a prediction value obtained during decoding of a sample corresponding to the second input position.

63. The method of claim 42, further comprising:
signalling the first syntax identifier information into the bitstream; wherein when the first syntax identifier information is equal to a first value, it indicates that a reordering operation for the interpolation filter models in the first candidate list is performed.

64. The method of claim 63, wherein when the first syntax identifier information is equal to a second value, it indicates that the reordering operation for the interpolation filter models in the first candidate list is not performed.

65. The method of claim 64, further comprising:

determining a third index of the second interpolation filter model in the first candidate list;
signalling the third index into the bitstream.

66. The method of any one of claims 37 to 65, further comprising:
signalling second syntax identifier information into the bitstream; wherein when the second syntax identifier information is equal to a third value, it indicates that the reconstruction block for the current block is determined by using the method.

67. The method of claim 66, wherein
the second syntax identifier information is signalled into the bitstream when at least one of following conditions is satisfied:

a first condition comprising that a number of the first-type models is greater than or equal to a fifth threshold;
a second condition comprising that a number of the second-type models is greater than or equal to a sixth threshold;
a third condition comprising that a number of the third-type models is greater than or equal to a seventh threshold; and
a fourth condition comprising that a number of the fourth-type models is greater than or equal to an eighth threshold.

68. The method of claim 66, wherein
when a number of interpolation filter models in the fourth candidate list is equal to 1, the second interpolation filter model is equal to an interpolation filter model in the fourth candidate list.

69. The method of claim 66, wherein,
when a number of interpolation filter models in the fourth candidate list is greater than 1, or when the number of interpolation filter models in the fourth candidate list is greater than 1 and the second syntax identifier information is equal to the third value, a second index is signaled into the bitstream.

70. The method of claim 66, wherein
when the number of interpolation filter models in the first candidate list is equal to 1, the second interpolation filter model is equal to an interpolation filter model in the first candidate list.

71. The method of claim 66, wherein

when a number of interpolation filter models in the first candidate list is greater than 1, or when the number of interpolation filter models in the first candidate list is greater than 1 and the second syntax identifier information is equal to the third value, the first index, the second index, or the third index is signaled into the bitstream.

72. A decoding apparatus, applied to a decoder, the apparatus comprising:

a first generation module, configured to generate a first candidate list based on first interpolation filter models used during decoding of decoded blocks;
a first determination module, configured to determine a second interpolation filter model to be used for a current block based on the first candidate list;
a first prediction module, configured to perform intra prediction for the current block by using the second interpolation filter model, to obtain a prediction block for the current block; and
a reconstruction module, configured to reconstruct a bitstream based on the prediction block, to obtain a reconstructed block for the current block.

73. A decoder, comprising a first memory and a first processor; wherein

the first memory is configured to store a computer program executable on the first processor; and
the first processor is configured to: when executing the computer program, perform the method of any one of claims 1 to 36.

74. An encoding apparatus, applied to an encoder, the apparatus comprising:

a second generation module, configured to generate a first candidate list based on first interpolation filter models used during decoding of decoded blocks;
a second determination module, configured to determine a second interpolation filter model to be used for a current block based on the first candidate list;
a second prediction module, configured to perform intra prediction for the current block by using the second interpolation filter model, to obtain a prediction block for the current block;
a third determination module, configured to determine a residual block of the current block based on the prediction block; and
a third generation module, configured to generate a bitstream based on the residual block.

75. An encoder, comprising a second memory and a second processor; wherein

the second memory is configured to store a computer program executable on the second processor; and
the second processor is configured to: when executing the computer program, perform the method of any one of claims 37 to 71.

76. A bitstream, wherein the bitstream is generated by performing the encoding method of any one of claims 37 to 71 on a current block.

77. An electronic device, comprising:

a processor configured to execute a computer program; and
a computer-readable storage medium having stored thereon the computer program that, when executed by the processor, implements the method of any one of claims 1 to 36, or implements the method of any one of claims 37 to 71.

78. A computer-readable storage medium, wherein the computer-readable storage medium stores a computer program that, when executed, implements the method of any one of claims 1 to 36, or implements the method of any one of claims 37 to 71.

bitstream

Entropy coding

Transform/quantization coefficients

Transform/Quantization

Inverse quantization/ inverse transform

In-Loop filtering

Decoded picture buffer

Prediction value

Residual

Input picture

101

Intra prediction

Inter prediction (motion estimation/motion compensation)

**FIG. 1**

**FIG. 2**

**FIG. 3**

**FIG.4**

**FIG. 5**

**FIG.6**

**FIG. 7**

**FIG.8**

**FIG.9**

**FIG.10**

**FIG.11**

**FIG.12**

**FIG.13**

Width of filter model

Height

N2

N
2

Current
block

Width of filter model

Height

N2

N
2

Current
block

**FIG. 14**

Current
block

**FIG. 15**

Current
block

Current
block

**FIG. 16**

**FIG.17**

**FIG.18**

**FIG. 19**

Generating a first candidate list based on first interpolation filter models used during decoding of decoded blocks — 2001

Determining a second interpolation filter model to be used for a current block based on the first candidate list — 2002

Performing intra prediction for the current block by using the second interpolation filter model, to obtain a prediction block for the current block — 2003

Determining a residual block of the current block based on the prediction block — 2004

Generating a bitstream based on the residual block — 2005

**FIG. 20**

Generating a first candidate list based on first interpolation filter models used during decoding of decoded blocks — 2101

Determining a second interpolation filter model to be used for a current block based on the first candidate list — 2102

Performing intra prediction for the current block by using the second interpolation filter model, to obtain a prediction block for the current block — 2103

Reconstructing a bitstream based on the prediction block, to obtain a reconstructed block for the current block — 2104

**FIG. 21**

(posX, posY)

Current
block

Current
picture

**FIG. 22**

2

1 3

Current
block

0

4

**FIG.23**

**FIG. 24**

27
(-1/2W,-5/4H)

25
(W,-5/4H)

23
(-1/2W,-5/4H)

21
(W,-5/4H)

19
(-1/2W,-5/4H)

17
(W,-5/4H)

15
(-1/2W,-5/4H)

13
(W,-5/4H)

26
(-5/4W,-1/2H)

22
(-5/4W,-1/2H)

11
(-1/2W,-5/4H)

9
(W,-5/4H)

18
(-5/4W,-1/2H)

14
(-5/4W,-1/2H)

7
(-1/2W,-5/4H)

5
(W,-5/4H)

10
(-5/4W,-1/2H)

3
(-1/2W,-5/4H)

1
(W,-5/4H)

6
(-5/4W,-1/2H)

2
(-5/4W,-1/2H)

Current block

0
(-5/4W,H)

4
(-5/4W,H)

8
(-5/4W,H)

12
(-5/4W,H)

16
(-5/4W,H)

20
(-5/4W,H)

24
(-5/4W,H)

**FIG. 25**

| Empty | Empty | Empty | Empty | Empty | Empty |
|---|---|---|---|---|---|

**FIG.26**

71

Current
picture

Decoding
order

| EIP0 | EIP1 | Empty | Empty | Empty | Empty |
|---|---|---|---|---|---|

Historical interpolation filter model list
(Length of N4)

**FIG. 27**

Historical interpolation filter model list
(Length of N4)

Historical interpolation filter model list
(Length of N4)

**FIG. 28**

(posX,posY)

| | | | | | |
|---|---|---|---|---|---|
| 0<br>(posX+Width/2, posY+Height/2) | (posX+Width, posY+Height-1)<br>1 | 3 (posX+2Width, posY+Height/2) | 5 (posX+3Width, posY+Height/2) | 7 (posX+4Width, posY+Height/2) | 9 (posX+5Width, posY+Height/2) |
| 0 0<br>(posX+Width-1, posY+Height) | 0 (posX+Width, posY+Height)<br>2<br>(posX+3/2Width, posY+3/2Height) | | | | |
| 3<br>(posX+Width/2, posY+2Height) | | 2 (posX+2Width, posY+2Height)<br>4<br>(posX+5/2Width, posY+5/2Height) | | | |
| 5<br>(posX+Width/2, posY+3Height) | | | 4 (posX+3Width, posY+3Height)<br>6<br>(posX+7/2Width, posY+7/2Height) | | |
| 7<br>(posX+Width/2, posY+4Height) | | | | 6 (posX+4Width, posY+4Height)<br>8<br>(posX+9/2Width, posY+9/2Height) | |
| 9<br>(posX+Width/2, posY+5Height) | | | | | 4 (posX+5Width, posY+5Height) |

**FIG. 29**

**FIG. 30**

**FIG. 31**

| First generation module 3201 | First prediction module 3203 |
|---|---|
| First determination module 3202 | Reconstruction module 3204 |

Decoding Apparatus 32

**FIG. 32**

| | |
|---|---|
| Second generation module 3301 | Second prediction module 3303 |
| Second determination module 3302 | Third determination module 3304 |
| Third generation module 3305 | Decoding Apparatus 32 |

**FIG. 33**

34

Decoder

3401

First communication interface

3404

3403

First processor

3402

First memory

**FIG. 34**

35

Encoder

3501

Second communication interface

3504

3503

Second processor

3502

Second memory

**FIG. 35**

## INTERNATIONAL SEARCH REPORT

| International application No. |
| --- |
| **PCT/CN2023/120909** |

| A. | CLASSIFICATION OF SUBJECT MATTER |
| --- | --- |

H04N19/132(2014.01)i

According to International Patent Classification (IPC) or to both national classification and IPC

| B. | FIELDS SEARCHED |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS: CNTXT; CNKI; VEN; USTXT; EPTXT; WOTXT: 解码, 插值, 滤波, 块, 单元, 候选, 当前, 参考, 帧内, 预测, 重建, 残差, decode, interpolation, filter, intra-frame, prediction, current block, reference block, candidate list, construct, residual

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112204977 A (PEKING UNIVERSITY et al.) 08 January 2021 (2021-01-08) entire document | 1-78 |
| A | WO 2023039859 A1 (GUANGDONG OPPO MOBILE TELECOMMUNICATIONS CORP., LTD.) 23 March 2023 (2023-03-23) entire document | 1-78 |
| A | WO 2023153893 A1 (LG ELECTRONICS INC.) 17 August 2023 (2023-08-17) entire document | 1-78 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2024** | **13 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120909**

| Patent document cited in search report | | | Publication date (day/month/year) | Patent family member(s) | Publication date (day/month/year) |
|---|---|---|---|---|---|
| CN | 112204977 | A | 08 January 2021 | None | |
| WO | 2023039859 | A1 | 23 March 2023 | None | |
| WO | 2023153893 | A1 | 17 August 2023 | None | |

Form PCT/ISA/210 (patent family annex) (July 2022)